(19) **Europäisches Patentamt / European Patent Office / Office européen des brevets**

(11) **EP 4 576 016 A1**

(12) **EUROPEAN PATENT APPLICATION**

(43) Date of publication:
25.06.2025   Bulletin 2025/26

(51) International Patent Classification (IPC):
***G06V 10/82*** *(2022.01)*     ***G06T 7/579*** *(2017.01)*
***G06V 20/64*** *(2022.01)*

(21) Application number: 24305954.0

(22) Date of filing: **17.06.2024**

(52) Cooperative Patent Classification (CPC):
**G06V 20/647; G06T 7/579; G06V 10/82;**
G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.12.2023  FR 2314650
28.02.2024  US 202463559062 P
12.04.2024  US 202463633125 P
10.06.2024  US 202463658294 P

(71) Applicant: **Naver Corporation**
**Seongnam-si, Gyeonggi-do 13561 (KR)**

(72) Inventors:
• **REVAUD, Jérôme**
  **38240 MEYLAN (FR)**
• **LEROY, Vincent**
  **38190 LAVAL (FR)**
• **CABON, Yohann**
  **38330 MONTBONNOT-SAINT-MARTIN (FR)**
• **CHIDLOVSKII, Boris**
  **38240 MEYLAN (FR)**
• **WANG, Shuzhe**
  **02150 ESPOO (FI)**

(74) Representative: **Regimbeau**
**20, rue de Chazelles**
**75847 Paris Cedex 17 (FR)**

(54) **METHODS AND SYSTEMS FOR GENERATING 3D REPRESENTATIONS OF SCENES FROM A PLURALITY OF IMAGES USING POINTMAPS**

(57)    The present disclosure relates to the use of neural networks for processing images. More particularly, the present disclosure relates to a method for generating using neural networks a three-dimensional (3D) representation of a scene from a plurality of images of one or more viewpoints of the scene acquired using an imaging device.

FIG. 3

**Description**

FIELD

The field of this disclosure is that of neural networks for processing images. More particularly, the disclosure relates to a method for generating a three-dimensional (3D) representation of a scene from a plurality of images of one ore more viewpoints of the scene acquired using an imaging device.

BACKGROUND

Image-based 3D reconstruction from one or multiple views is a 3D image reconstruction task that aims at estimating the 3D geometry and camera parameters of a particular scene, given a set of images of the scene. Methods for solving such a 3D reconstruction task have numerous applications including: mapping, navigation, archaeology, cultural heritage preservation, robotics, and 3D vision. Some existing approaches for 3D reconstruction involve assembling a pipeline of different methods including: keypoint detection and matching, robust estimation, Structure-from-Motion (SfM), Bundle Adjustment (BA), and dense Multi-View Stereo (MVS). SfM and MVS pipelines equate to solving a series of sub-problems including: matching points, finding essential matrices, triangulating points, and densely re-constructing the scene. One disadvantage of such existing approaches is that each sub-problem may not be solved faultlessly, possibly introducing noise to subsequent steps in the pipeline. Another disadvantage of existing approaches is that they are not adapted to solve the monocular case (e.g., when a single image of a scene is available).
There is consequently a need for an improved method for image-based 3D reconstruction.

SUMMARY

For these purposes, the present disclosure provides a computer-implemented method for reconstructing a scene in three dimensions from a plurality of images of one or more viewpoints of the scene acquired using an imaging device. The computer-implemented method includes receiving the plurality of images without receiving extrinsic or intrinsic properties of the imaging device, and processing the plurality of images using a neural network to produce a plurality of pointmaps of the scene that correspond to the plurality of images and that are aligned in a common coordinate frame, wherein each pointmap is a one-to-one mapping between pixels of one of the plurality of images and three-dimensional points of the scene.
Certain preferred, but non-limiting aspects of the method are as follows :

- said processing the plurality of images using the neural network further comprises: processing the plurality of images using the neural network to produce a plurality of local feature maps that correspond to each of the plurality of images;
- it further comprises performing one of the following applications using the plurality of pointmaps of the scene: (i) rendering a pointcloud of the scene for a given camera pose; (ii) recovering camera parameters of the scene; (iii) recovering depth maps of the scene for a given camera pose; and (iv) recovering three dimensional meshes of the scene;
- it further comprises performing visual localization in the scene using the recovered camera parameters;
- said processing the plurality of images using the neural network further comprises:

  ◦ processing a plurality of image subsets of the plurality of images using the neural network, wherein each image subset of the plurality of image subsets includes different ones of the plurality of images; and
  ◦ aligning pointmaps from the plurality of image subsets into the plurality of pointmaps that are aligned in the common coordinate frame using a global aligner that performs regression based alignment;

- said processing the plurality of images using the neural network further comprises:

  ◦ processing a plurality of image subsets of the plurality of images using the neural network, wherein each image subset of the plurality of image subsets includes different ones of the plurality of images; and
  ◦ aligning pointmaps from the plurality of image subsets into the plurality of pointmaps that are aligned in the common coordinate frame using an alignment module that performs pixel correspondence based alignment using the plurality of local feature maps;

- said processing the plurality of images using the neural network further comprises:

  ◦ (a) for each of the plurality of images: (i) generating patches with a pre-encoder; (ii) encoding the generated patches with a transformer encoder (806) to define token encodings that represent the generated patches; and (iii) decoding the token encodings with a transformer decoder to generate token decodings;

◦ (b1) for one of the token decodings, generating a pointmap corresponding to one of the plurality of images with a first regression head that produces pointmaps in a coordinate frame of the one of the plurality of images; and

◦ (c1) for each of other of the token decodings, generating a pointmap corresponding to each of the other of the plurality of images with a second regression head that produces pointmaps in the coordinate frame of the one of the plurality of images;

- said processing the plurality of images using the neural network further comprises:

◦ (b2) for the one of the token decodings, generating with a first descriptor head a local feature map of the one of the plurality of images; and

◦ (c2) for each of the other of the token decodings, generating with a second descriptor head local feature maps of the other of the plurality of images, respectively;

◦ wherein the first and second descriptor heads match features between image pixels of the plurality of images.

- said processing the plurality of images using the neural network further comprises:

◦ (a) initializing the plurality of pointmaps;

◦ (b) for each of the plurality of images: (i) generating image patches with a pre-encoder; and (ii) encoding the generated image patches with a transformer encoder to define image token encodings that represent the generated image patches;

◦ (c) for each of the plurality of pointmaps: (i) generating pointmap patches with a pre-encoder; and (ii) encoding the generated pointmap patches with a transformer encoder to define pointmap token encodings that represent the pointmap generated patches;

◦ (d) for each of the plurality of image token encodings and corresponding of the plurality of pointmap token encodings, aggregating each pair with a mixer to generate mixed token encodings;

◦ (e) for each of the generated mixed token encodings, decoding the mixed token encodings with a transformer decoder to generate mixed token decodings;

◦ (f) for each of the mixed token decodings, replacing the plurality of pointmaps corresponding to the plurality of images with pointmaps generated by a regression head that produces pointmaps in a coordinate frame that is common to the plurality of images; and

◦ (g) repeating (c) - (f) for a predetermined number of iterations;

- each pointmap represents a two-dimensional field of three-dimensional points of the scene;
- said processing the plurality of images using the neural network further comprises generating a confidence score map for each pointmap;
- processing the plurality of images further comprises expressing the plurality of images using a co-visibility graph and processing the co-visibility graph using the neural network to produce the plurality of pointmaps of the scene that correspond to the plurality of images and that are aligned in the common coordinate frame;
- it further comprises using the plurality of pointmaps of the scene to recover extrinsic or intrinsic parameters of the imaging device;
- the extrinsic properties of the imaging device include rotation and translation of the imaging device;
- the intrinsic properties of the imaging device include skew and focal length;
- the neural network performs cross attention between views of the scene.

According to another aspect, a computer program product comprising code instructions to execute the computer-implemented method, when said program is executed on one or more of a computer, an autonomous vehicle, and an autonomous robot; and a computer-readable medium, on which is stored a computer program product comprising code instructions for executing the computer-implemented method.

DESCRIPTION OF THE DRAWINGS

The present disclosure will become more fully understood from the detailed description and the accompanying drawings, wherein:

Figure 1 illustrates an example system architecture in which the methods according to this disclosure may be performed;

Figure 2 is a functional block diagram of an example control system of an autonomous machine;

Figure 3 is a block diagram of elements of a first system embodiment for generating pointmaps aligned in a common coordinate frame for use with three dimensional reconstruction applications;

Figure 4 is a block diagram of elements of a second system embodiment for generating pointmaps aligned in a common coordinate frame for use with three-dimensional reconstruction applications with elements common to the system embodiment shown in Figure 3 and a global aligner module;

Figure 5 is a general flow diagram of the method carried out by the systems shown in Figures 3 and 4;

Figure 6 illustrates the relationship between images and pointmaps produced by the neural network shown in Figures 3 and 4;

Figure 7A is a flow diagram of the method carried out by a first neural network architecture, DUSt3R, for generating pointmaps aligned in a common coordinate frame by the systems shown in Figures 3 and 4;

Figure 7B is a flow diagram of the method carried out by an alternate embodiment of the first neural network architecture, MASt3R, for generating pointmaps aligned in a common coordinate frame and local feature maps by the systems shown in Figures 3 and 4;

Figure 8A is a block diagram of elements of a first neural network architecture, DUSt3R, for generating pointmaps aligned in a common coordinate frame by the systems shown in Figures 3 and 4;

Figure 8B is a block diagram of elements of an alternate embodiment, MASt3R, of the first neural network architecture, DUSt3R, for generating pointmaps aligned in a common coordinate frame and local feature maps by the systems shown in Figures 3 and 4;

Figure 9 is a flow diagram of the method carried out by a second neural network architecture, C-GAR, for generating pointmaps aligned in a common coordinate frame by the systems shown in Figures 3 and 4;

Figure 10 is a block diagram of elements of a second neural network architecture, C-GAR, for generating pointmaps aligned in a common coordinate frame by the systems shown in Figures 3 and 4;

Figure 11 illustrates examples of reconstruction using the DUSt3R network shown in Figure 12A;

Figure 12A illustrates an overview of the DUSt3R network;

Figure 12B is an example architecture of the DUSt3R network shown in Figure 12A;

Figures 13A and 13B show reconstruction examples on two scenes never seen during training;

Figures 14 and 15 are examples of 3D reconstruction of an unseen MegaDepth scene from two images;

Figures 16 and 17 are two examples of 3D reconstruction from two images only of unseen scenes;

Figures 18A, 18B, 18C and 18D show four examples of 3D reconstructions from nearly opposite viewpoints;

Figure 19 is a reconstruction example from four random frames of an indoor sequence;

Figure 20A is a diagram showing the traditional pipeline, which consists in solving several intermediate sub-problems;

Figure 20B is a diagram showing the C-GAR approach that directly builds a 3D representation from the RGB observations without explicitly solving any sub-problem;

Figure 21 shows real data captured and reconstructed with a smartphone using the C-GAR approach;

Figure 22 illustrates how a pointmap can be seen simultaneously as a 3-channel image and a point cloud;

Figure 23 is a diagram of the architecture of the C-GAR network;

Figures 24, 25 and 26 show qualitative results of the C-GAR network;

Figure 27 is a diagram showing strengths and weaknesses of the C-GAR network;

Figure 28 shows an example of shaded reconstructions using the C-GAR network;

Figure 29 shows views demonstrating robustness to focal length variations on real data using the C-GAR network;

Figure 30 is a diagram of an alternate embodiment of the first neural network architecture, MASt3R, where given two input images to match, the network regresses for each image and each input pixel a 3D point, a confidence value and a local feature;

Figure 31 shows graphs demonstrating fast reciprocal matching using the MASt3R network;

Figure 32 shows qualitative examples on the Map-free dataset;

Figure 33 illustrates a table showing absolute camera pose on the 7Scenes and Cambridge-Landmarks datasets;

Figure 34 illustrates a table showing monocular depth estimation on multiple benchmarks: D-supervised, SS-Self-supervised, T-transfer (zero-shot), where parenthesis refers to training on the same set;

Figure 35 illustrates a table showing multi-view pose regression on the CO3Dv2 and RealEst10K datasets with 10 random frames;

Figure 36 illustrates a table showing MVS results on the DTU dataset, in mm. Traditional handcrafted methods (a) have been overcome by learning-based approaches (b) that train on this specific domain;

Figure 37 illustrates a table showing a comparison with the state of the art for multi-view pose regression on the CO3Dv2 and RealEstate10K datasets with 3, 5 and 10 random frames, where parentheses indicate results obtained after training on RealEstate10K dataset, except for DUSt3R where results are reported after global alignment without training on RealEstate10K dataset;

Figure 38 illustrates a table showing a multi-view depth evaluation with different settings: a) classical approaches; b) with poses and depth range, without alignment; c) absolute scale evaluation with poses, without depth range and alignment; d) without poses and depth range, but with alignment, where parentheses denote training on data from the same domain, and the best results for each setting are in bold;

Figure 39 illustrates a table showing absolute camera pose on 7Scenes (top 1 image) and Cambridge-Landmarks (top 20 images) datasets, where the median translation and rotation errors are reported(cm/°);

Figure 40 illustrates a table showing detailed hyper-parameters for the training, with first a low-resolution training with a linear head followed by a higher-resolution training still with a linear head and a final step of higher-resolution training with a DPT head, in order to save training time;

Figure 41 illustrates a table showing results on the validation set of the Map-free dataset, where first best is in bold and second best is underlined;

Figure 42 illustrates a table showing a comparison with the state of the art on the test set of the Map-free dataset;

Figure 43 illustrates a table showing multi-view pose regression on the CO3Dv2 and RealEstate10K datasets with 10 random frames, where parenthesis denote methods that do not report results on the 10 views set, and where their best are reported for comparison (8 views) and the (a) multi-view and (b) pairwise methods are distinguished;

Figure 44 illustrates a table showing dense MVS results on the DTU dataset, in mm, where handcrafted methods (c) perform worse than learning-based approaches (d) that train on this specific domain, and where among the methods that operate in a zero-shot setting (e), MASt3R is the only one attaining reasonable performance; and

Figure 45 illustrates a table showing a visual localization results on Aachen Day-Night and InLoc datasets with results reported for different number of retrieved database images (topN).

In the drawings, reference numbers may be reused to identify similar and/or identical elements.

DETAILED DESCRIPTION

## Section A. 3D Reconstruction Methods

## Section A.1 System Architecture

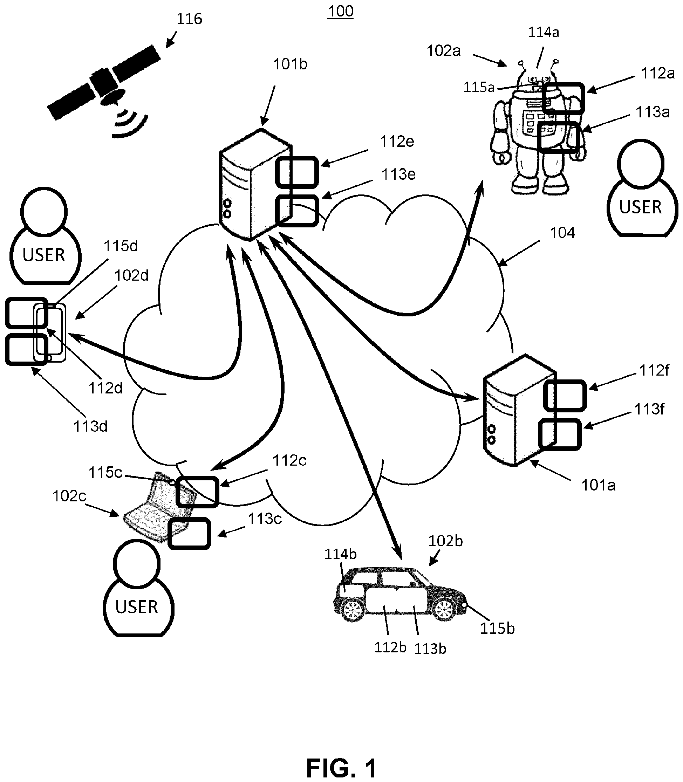

The disclosed methods for generating 3D representations of scenes from a plurality of images may be implemented within a system 100 architected as illustrated in Figure 1, which comprises servers 101 and one or more client devices 102 that communicate over a network 104 (which may be wireless and/or wired) such as the Internet for data exchange. Servers 101 and the client devices 102 include one or more processors 112 and memory 113 such as a hard disk. The client devices 102 may be any device that communicates with servers 101, including autonomous robot 102a, autonomous vehicle 102b, computer 102c, or cell phone 102d, which are equipped with an imaging device 115 for acquiring images of a scene (i.e., a device for acquiring images or video, such as cameras and cell phones). In one embodiment, autonomous robot 102a and autonomous vehicle 102b are located using positioning system 114 communicating with geo-positioning system (GPS) 116, or, alternatively or in combination with, a cellular positioning system, an indoor positioning system (IPS), including beacons, RFID, WiFi and geomagnetic, or a combination thereof.

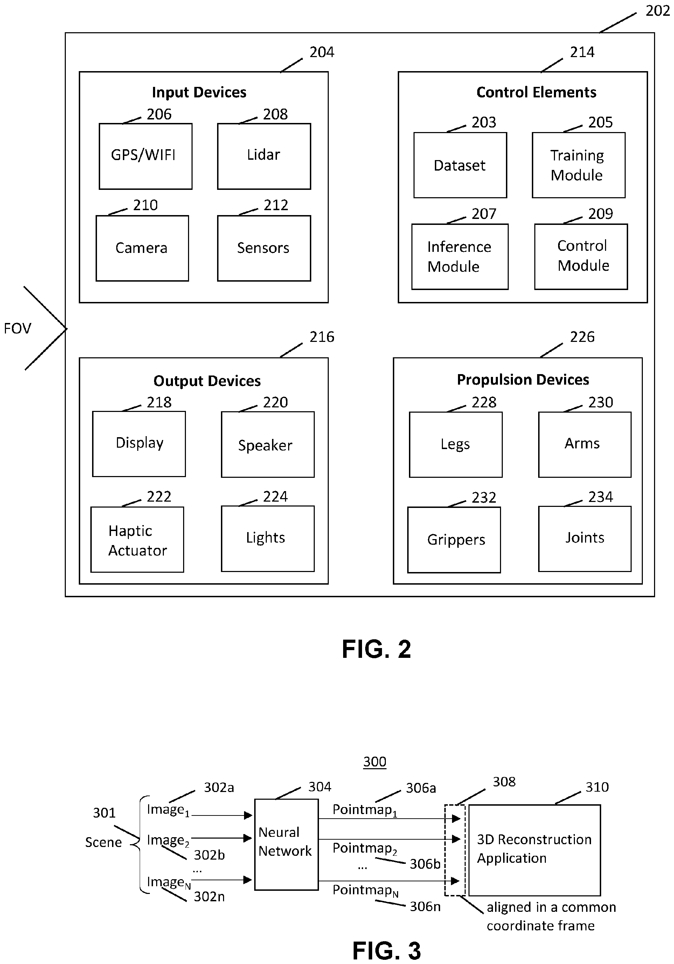

Figure 2 is a functional block diagram of an example control system of an autonomous machine 202, such as autonomous robot 102a or autonomous vehicle 102b shown in Figure 1. The autonomous machine 202, which may be mobile or stationary and indoor or outdoor, and may include one or more of the following elements: input devices 204 (e.g., GPS/WIFI 206, Lidar 208, camera 210 (which may include be grayscale, or red, green, blue (RGB) sensors for capturing images within a predetermined field of view (FOV), or which may update (capture images) at a predetermined frequency, such as 60 hertz (Hz), 120 Hz, or another suitable frequency), sensors 212 (e.g., temperature, rain, force, torque), control elements 214, output devices 216 (e.g., display 218, speakers 220, haptic actuator 222, lights 224), and propulsion devices (e.g., legs 228, arms 230, grippers 232, and joints 234).

In one embodiment, the server 101b (with processors 112e and memory 113e) shown in Figure 1 may include an inference module 207 and a control module 209 in memory 113e containing functionality for controlling autonomous machine 202, and the server 101a may include training module 205 and dataset 203 for training the policies of the inference module 207 (such as the neural networks 304 disclosed herein). In alternate embodiments, the modules 207, 209, 205, and 203 may be implemented in memory 113 of the autonomous machine 202, or a combination thereof (e.g., modules 207 and 209 implemented in memory 113 of the autonomous machine 202 and modules 205 and 203 implemented in memory 113f on server 101a). In another embodiment, it is noted that the two servers 101a and 101b may be merged.

The autonomous machine 202 may be powered, such as via an internal battery and/or via an external power source, such as alternating current (AC) power. AC power may be received via an outlet, a direct connection, etc. In various implementations, the autonomous machine 202 may receive power wirelessly, such as inductively. In alternate embodiments, the autonomous machine 202 may include alternate propulsion devices 226, such as one or more wheels, one or more treads/tracks, one or more propellers, and/or one or more other types of devices configured to propel the autonomous machine 202 forward, backward, right, left, up, and/or down. In operation, the control module 209 actuates the propulsion device(s) 226 to perform tasks issued by the inference module 207. In one exemplary embodiment, speaker 220 receives a natural language description of a task that is input after being processed by an audio-to-text converter to inference module 207 that provides input to control module 209 to carry out the task.

**Section A.2 Overview & Nomenclature** - *pointmaps, cameras and scenes*

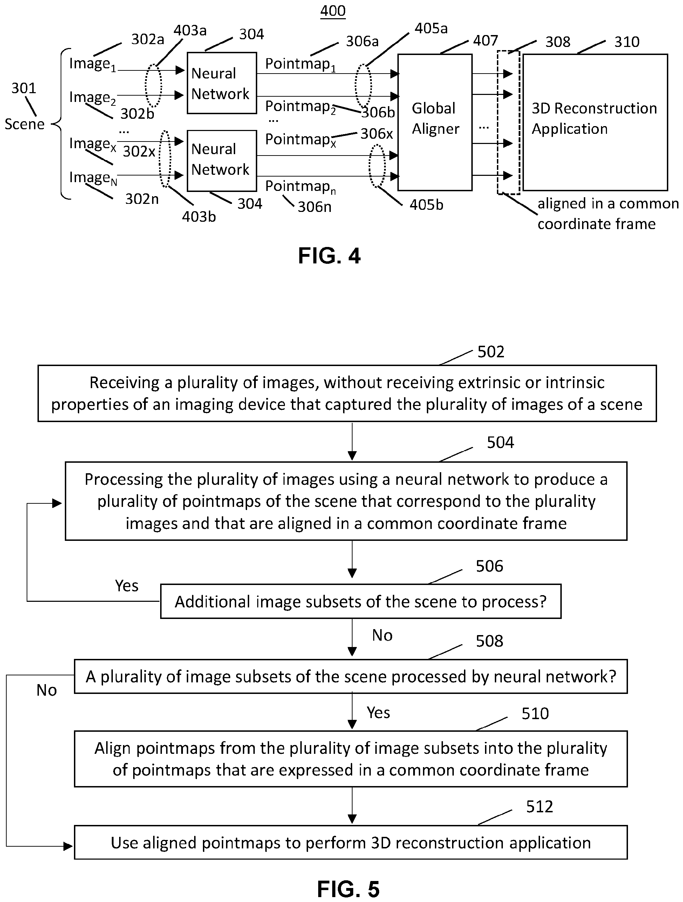

Figure 3 is a block diagram of elements of a first system embodiment 300 for generating with a neural network 304, from images 302 of a scene 301, pointmaps 306 aligned in a common coordinate frame 308 for use with three-dimensional reconstruction applications 310. The images 302 may be acquired using one or more imaging device (e.g., imaging device 115 shown in Figure 1) from one or more viewpoints. Figure 4 is a block diagram of elements of a second system embodiment 400 for generating with a neural network 304, from images 302 of a scene 301, pointmaps 306 aligned in a common coordinate frame 308 for use with three-dimensional reconstruction applications 310, with elements common to the system embodiment shown in Figure 3 and with a global aligner module 407. Figure 5 is a general flow diagram of the method carried out by the systems shown in Figures 3 and 4.

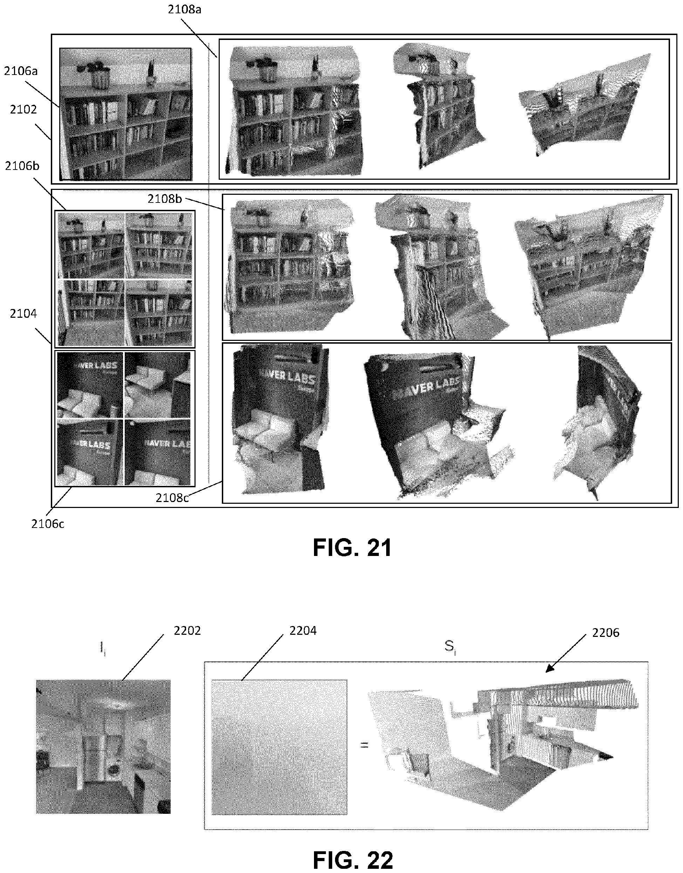

With reference to Figures 3, 4 and 5, images 302 of a scene 301 are received (at 502 in Figure 5) and then processed by a neural network 304 to produce pointmaps 306 (at 504 in Figure 5). When a single image 302 is available (i.e., the monocular case, e.g., see 2102 in Figure 21), the single image may be input multiple times to the neural network 304, which is in contrast when multiple images 302 are available (i.e., the multi-view case, e.g., see 2104 in Figure 21). As will be discussed in more detail below, the pointmaps 306 in the second system embodiment shown in Figure 4 are also processed by a global aligner 407 (at 510 in Figure 5). Once the pointmaps 306 in Figures 3 and 4 are aligned at 308, they may be used to perform a three dimensional (3D) reconstruction application 310 (at 512 in Figure 5), which includes (i) rendering a pointcloud of the scene for a given camera pose; (ii) recovering camera parameters of the scene; (iii) recovering depth maps of the scene for a given camera pose; and (iv) recovering three dimensional (colored, grayscale or monochrome) meshes of the scene. In one embodiment, inference module 207 embeds one of the systems 300 or 400 shown in Figures 3 and 4, respectively, that receives images from camera 210 and performs, using the 3D reconstruction application 310, visual localization in a scene using recovered camera parameters for the autonomous machine 202.

Advantageously, the neural network 304 and the scene generator 308 reconstruct from uncalibrated and an unposed imaging devices, without prior information regarding the scene or the imaging devices, including extrinsic parameters (e.g., rotation and translation relative to some coordinate frame: (i) the absolute pose of the imaging device (i.e., the relation between the camera and a scene coordinate frame), (ii) relative pose of the different viewpoints of the scene (i.e., the relation between different camera poses)) and intrinsic parameters (e.g., camera lens focal length and distortion). The resulting scene representation is based on pointmaps 306 with properties that encapsulate (a) scene geometry, (b) relations between pixels and scene points and (c) relations between viewpoints. From aligned pointmaps 308 alone, scene parameters (i.e., cameras and scene geometry) may be recovered.

The neural network 304 uses an objective function that minimizes the error between ground-truth and predicted pointmaps 306 (after normalization) using a confidence score function. Neural network 304 in one embodiment is based on a large language models (LLMs), which are large neural networks trained on large quantities of unlabeled data. The architecture of such neural networks may be based on the transformer architecture with a transformer encoder and decoder with a self-attention mechanism. Such a transformer architecture as used in an embodiment herein is described in Ashish Vaswani et al., "Attention is all you need", In I. Guyon et al., editors, Advances in Neural Information Processing Systems 30, pages 5998-6008, Curran Associates, Inc., 2017. Additional information regarding the transformer architecture can be found in U.S. Patent No. 10,452,978. Alternate attention-based architectures include recurrent, graph and memory-augmented neural networks. To apply the transformer network to images, the neural network 304 in an embodiment herein is based on the Vision Transformer (ViT) architecture (see Alexey Dosovitskiy et al., entitled "An image is worth 16x16 words: Transformers for image recognition at scale", in ICLR, 2021).

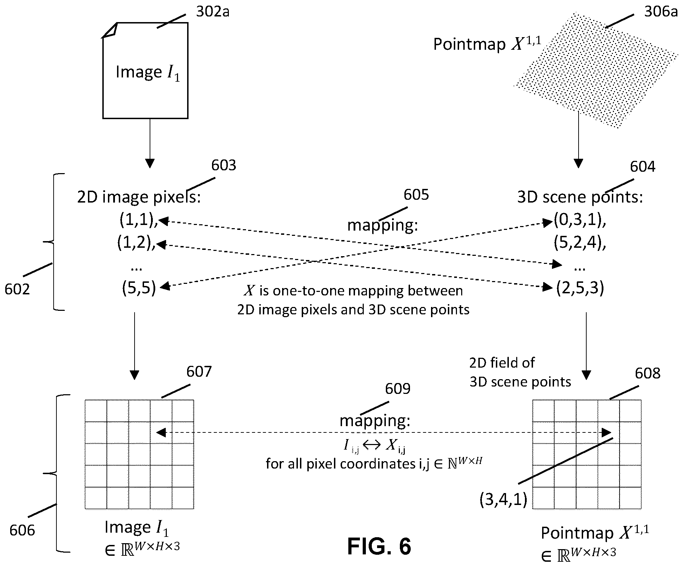

Figure 6 illustrates the relationship between the pointmaps 306 produced by the neural network 304 from the images 302 shown in Figures 3 and 4 (at 504 in Figure 5). Specifically in Figure 6, the image 302a and corresponding pointmap 306a are shown. At 602, pointmap $X$ 306a is illustrated generally; in association with its corresponding image $I$ 302a of resolution $W \times H$, pointmap $X$ forms a one-to-one mapping 605 between 2D image pixels (e.g., RGB) 505 and 3D scene points (e.g., $x,y,z$) 504 (i.e., $I_{i,j} \leftrightarrow X_{i,j}$ for all pixel coordinates $i,j \in \mathbb{N}^{W \times H}$). At 606, one implementation of pointmap $X$ is illustrated as a 2D field of 3D scene points 608, where mappings 609 for pointmap 306a are given by the position of the 2D field of 3D scene points 608 (i.e., a 5x5 matrix of 3D scene points) relative to the position of each pixel in the image 607 (i.e., a 5x5 matrix of 2D image pixels).

Further, embodiments disclosed hereunder assume that each camera ray hits a single 3D point (i.e., the case of translucent surfaces is ignored). In addition, given camera intrinsics $K \in \mathbb{R}^{3 \times 3}$, the pointmap $X$ of the observed scene can be obtained from the ground-truth depthmap $D \in \mathbb{R}^{W \times H}$ as $X_{i,j} = K^{-1} [iD_{i,j}, jD_{i,j}, D_{i,j}]^T$, where $i, j \in \mathbb{N} W \times H$ denote the x-y pixel coordinates. Here, $X$ is expressed in the camera frame. In the following disclosure, $X^{n,m}$ denotes the pointmap $X^n$ from camera n expressed in image m's coordinate frame: $X^{n,m} = P_m P_n^{-1} h(X^n)$ with $P_m, P_n \in R^{3 \times 4}$ the world-to-camera poses for views n and m, and h : *(x, y, z) → (x, y, z, 1)* the homogeneous mapping.

### Section A.3 DUSt3R: Dense Unconstrained Stereo 3D Reconstruction

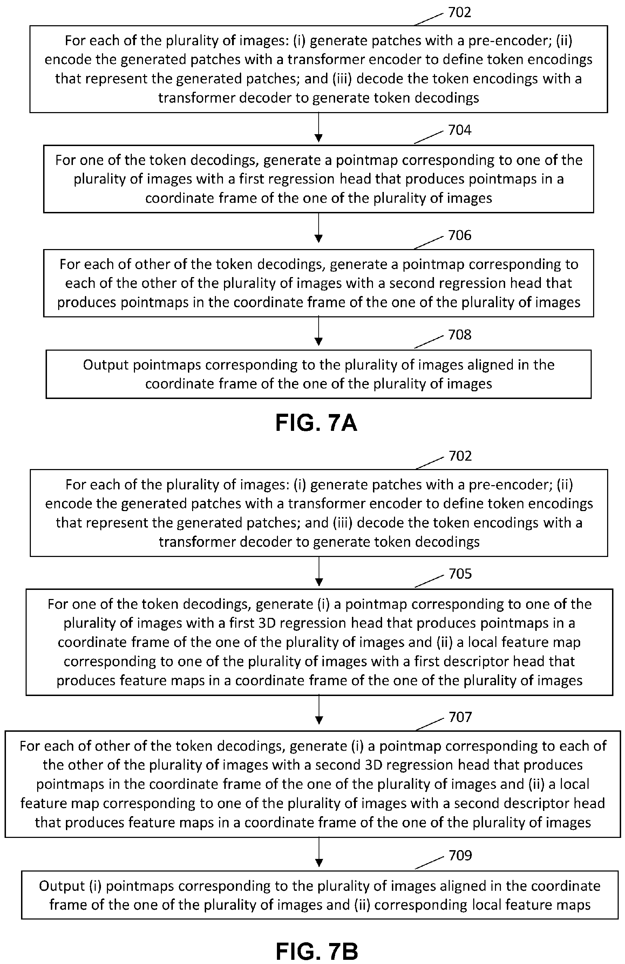

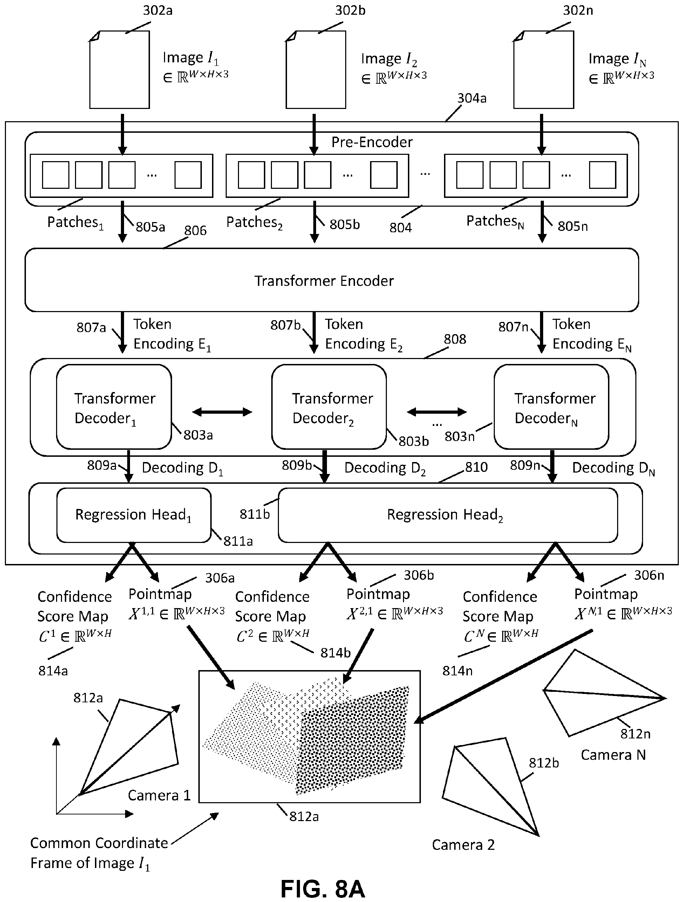

This Section sets forth a first neural network architecture of the neural network 304 shown in Figures 3 and 4, which is also referred to herein as the DUSt3R (Dense Unconstrained Stereo 3D Reconstruction) architecture. Figure 7A is a flow diagram of the method carried out by the DUSt3R architecture and Figure 8A is a block diagram of elements of the DUSt3R architecture, for generating pointmaps aligned in a common coordinate frame.

At 702, (i) for each of the plurality of images 302 $\{I_1, I_2, ..., I_N\}$ a pre-encoder 804 generates patches 805; (ii) a transformer encoder 806 encodes the patches 805 to define token encodings 807 that represent the generated patches; and (iii) a transformer decoder 808 decodes with decoder blocks 803 the token encodings 805, respectively, to generate token decodings 809 that are fed to regression head 810. In the case of a network 304a adapted to process two input images 302 $\{I_1, I_2\}$, after pre-encoder 804 generates patches, the transformer encoder 806 then reasons over both sets of patches jointly. In one embodiment, the decoder is a transformer network equipped with cross attention. Each decoder block 803 then sequentially performs self-attention (each token of a view attends to tokens of the same view), then cross-attention (each token of a view attends to all other tokens of the other view). Information is shared between the branches during the decoder pass in order to output aligned pointmaps. Namely, each decoder block 803 attends to tokens encodings 807 from the other decoder block 803. Continuing with the example of two input images 302 $\{I_1, I_2\}$ this may be given by:

$$G^1_i = \text{DecoderBlock}^1_i (G^1_{i-1}, G^2_{i-1}),$$

$$G^2_i = \text{DecoderBlock}^2_i (G^2_{i-1}, G^1_{i-1}).$$

At 704, for one of the token decodings 809a, a pointmap 306a that corresponds to image 302a is generated with a first regression head 811a, which produces pointmaps in a coordinate frame 812a of the image 302a that is input to the regression head 811a. At 706, for each of the other token decodings 809b ... 809n, pointmaps 306b ... 306n that correspond to each of the other of the plurality of images 302b ... 302n are generated with a second regression head 811b that produces pointmaps in the coordinate frame 812a (output by the first regression head 811a, not in the coordinate frames corresponding to the coordinate frames 812b ... 812n, respectively, in which each image 302b ... 302n was captured). More specifically, each branch is a separate regression head 811a and 811b which takes the set of decoder tokens $D$ 809a and 809b ... 809n and outputs at 708 pointmaps $X$ 306a ... 306n (in common reference frame 812a) and associated confidence maps C 814a ... 814n, respectively. Returning to the example of two input images 302 $\{I_1, I_2\}$ the regression head 808 may be given by:

$$X^{1,1}, C^{1,1} = \text{Head}_{3D}^1 (G^1_0, \ldots, G^1_B),$$

$$X^{2,1}, C^{2,1} = \text{Head}_{3D}^2 (G^2_0, \ldots, G^2_B),$$

where, $G^1$ and $G^2$ are the input tokens from the token decodings $D$ 809 and $X^{1,1}$, $C^{1,1}$ and $X^{2,1}$, $C^{2,1}$ are pairs of pointmaps 306 and confidence maps 814, respectively.

The output pointmaps 306 are regressed up to an unknown scale factor. Also, it should be noted that the DUSt3R architecture never explicitly enforces any geometrical constraints. Hence, pointmaps 306 do not necessarily correspond to any physically plausible camera model. Rather during training, the DUSt3R neural network 304a learns all relevant priors present from the training set, which only contains geometrically consistent pointmaps. Using a generic architecture leverages such training.

The DUSt3R neural network model is trained in a fully-supervised manner using a simple regression loss, leveraging large public datasets for which ground-truth annotations are either synthetically generated, reconstructed from Structure-from-Motion (SfM) softwares or captured using dedicated sensors. A fully data-driven strategy based on a generic transformer architecture is adopted, not enforcing any geometric constraints at inference, but being able to benefit from powerful pretraining schemes. The DUSt3R neural network model learns strong geometric and shape priors, like shape from texture, shading or contours.

Additional details concerning the DUSt3R architecture described in this Section are set forth in Section B (below), including training and experimentation.

**Section A.4 MASt3R: Matching And Stereo 3D Reconstruction**

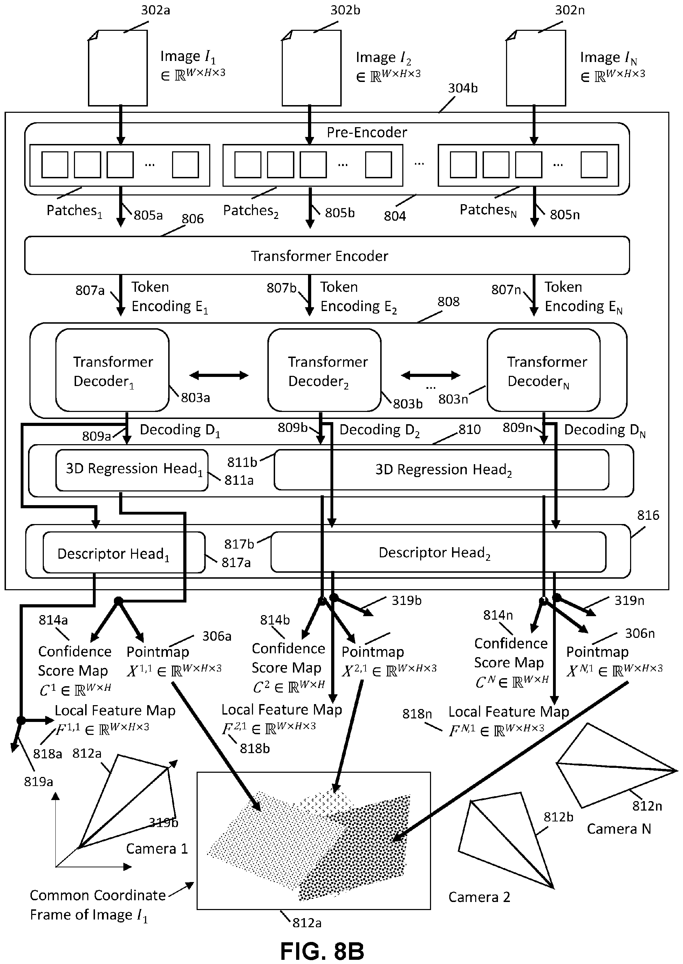

This Section sets forth an alternate embodiment of the first neural network architecture shown in Figures 7A and 8A, which is also referred to herein as the MASt3R (Matching And Stereo 3D Reconstruction) architecture. Figure 7B is a flow diagram of the method carried out by the MASt3R architecture and Figure 8B is a block diagram of elements of the MASt3R architecture, for generating (i) pointmaps aligned in a common coordinate frame and (ii) local feature maps (i.e., local descriptors).

The MASt3R architecture shown in Figure 8B is based on the DUSt3R architecture shown in Figure 8A and comprises the addition in the neural network 304b a second head 816 that outputs local features maps 818 that enable highly accurate and robust matching. The local feature maps 818 are representations of local 3D (three dimensional) space, which may be used to help identify such spaces in two different images that correspond to each other. Similar to pointmaps 306 (with confidence score maps 814), local feature maps 818 may include confidence score maps 819.

Similar to the first embodiment shown in Figure 7A at 704, 706, and 708, the second embodiment processes the token decodings 809 fed to regression head 810 to generate pointmaps 306 (and corresponding confidence maps 814) at 705 (i), 707(i), and 709(i). In addition to the first embodiment shown in Figure 7A, this second embodiment shown in Figure 7B processes the token decodings 809 fed to descriptor head 816 to generate local feature maps 818 at 705 (ii) and 707(ii), that correspond to the pointmaps 306 generated at 705 (i) and 707(i), and, which are output at 709(ii) and 709(i), respectively. Returning to the example of two input images 302 $\{I_1, I_2\}$ the descriptor head 816 may be given by:

$$D^1 = \text{Head}_{\text{desc}}{}^1 (G_0^1, \dots, G_B^1),$$

$$D^2 = \text{Head}_{\text{desc}}{}^2 (G_0^2, \dots, G_B^2),$$

where, $G^1$ and $G^2$ are the input tokens from the token decodings 809 and $D^1$ and $D^2$ are local feature maps $818 \in \mathbb{R}^{H \times W \times d}$ of dimensional $d$.

The MASt3R neural network model is trained using a loss function in which a regression loss and a local descriptor matching loss are combined. Also, it should be noted that similar to the DUSt3R architecture the MASt3r architecture need not explicitly enforce any geometrical constraint, in which case, pointmaps 306 do not necessarily correspond to any physically plausible camera model. However, scale invariance is not always desirable. It has been found that that scale dependence (e.g., metric scale) is desirable in some use-cases (e.g., visual localization without mapping, and monocular metric-depth estimation).

Additional details concerning the MASt3R architecture described in this Section are set forth in Section C (below), including training and experimentation.

**Section A.5 C-GAR: Camera-Geometry Agnostic 3D Reconstruction**

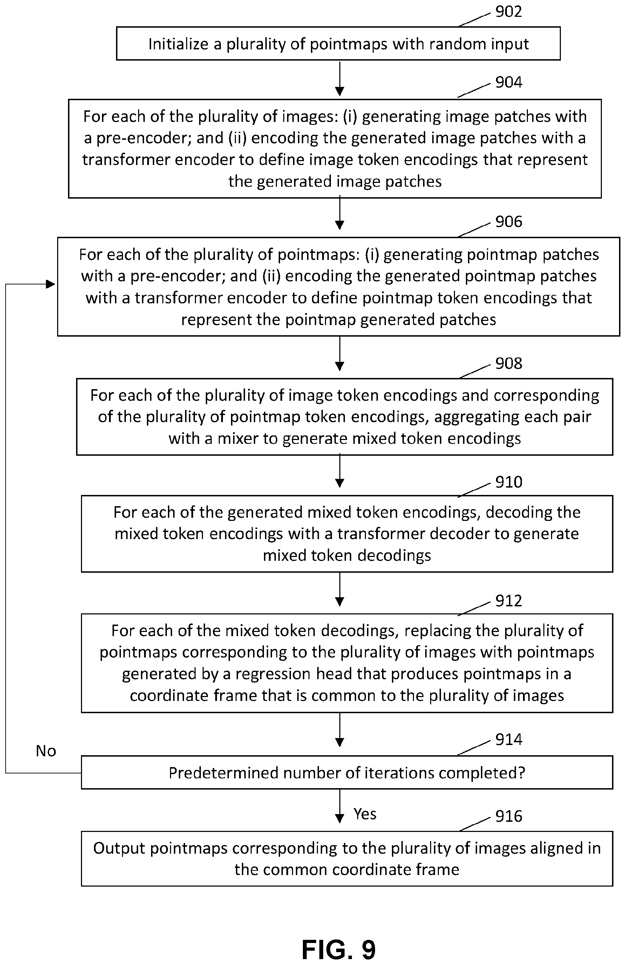

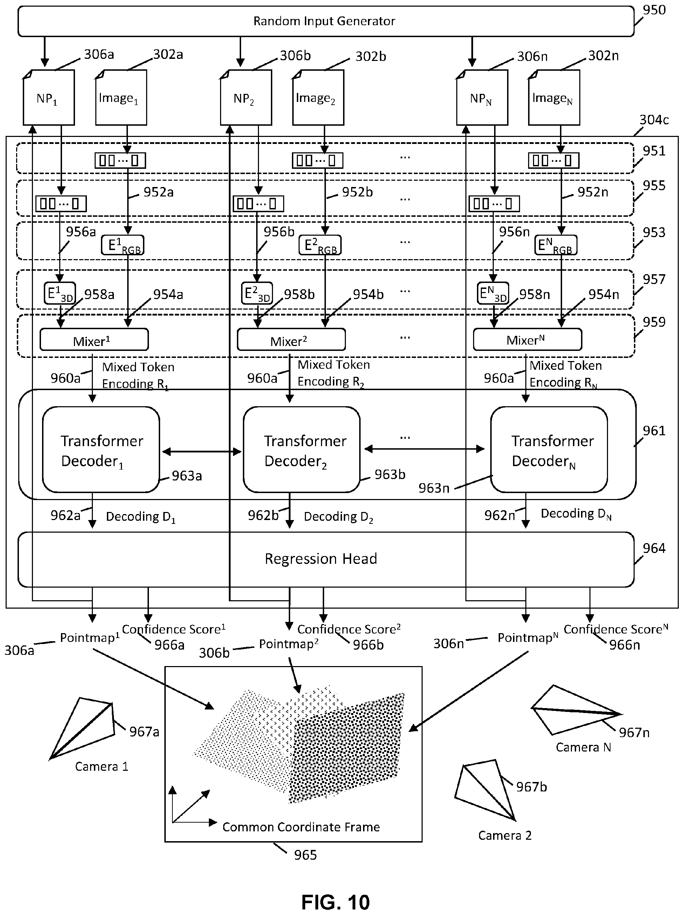

This Section sets forth a second neural network architecture of the neural network 304 shown in Figures 3 and 4, which is also referred to herein as the C-GAR (Camera-Geometry Agnostic 3D Reconstruction) architecture. Figure 9 is a flow diagram of the method carried out by the C-GAR architecture and Figure 10 is a block diagram of elements of the C-GAR architecture, for generating pointmaps aligned in a common coordinate frame using neural network 403c.

At 902, a plurality of pointmaps 306 are initialized using random input generator 950 with random input (e.g., random noise). At 904, (i) for each of the plurality of images 302 $\{I_1, I_2, \dots, I_N\}$, image patches 952 are generated with a pre-encoder 951, and (ii) the generated image patches 952 are encoded with a transformer encoder 953 to define image token encodings 954 representative thereof. At 906, (i) for each of the plurality of pointmaps 306 initialized at 902, pointmap patches 956 are generated with a pre-encoder 955; and (ii) the generated pointmap patches 956 are encoded with a transformer encoder 957 to define pointmap token encodings 958 representative thereof.

At 908, a mixer 959, a transformer decoder neural network, aggregates the image token encodings 954 and the pointmap token encodings 958 for each respective image of the plurality of images 302 $\{I_1, I_2, \dots, I_N\}$ to generate mixed token encodings 960. At 910, the mixed token encodings 960 are decoded by a transformer decoder 961 with decoder blocks 963 to generate mixed token decodings 962, respectively. Similar to the DUSt3R architecture, each decoder block 963 performs self-attention (each token of a view attends to tokens of the same view) and cross-attention (each token of a view attends to all other tokens of the other view).

At 912, for each of the mixed token decodings 962, the plurality of pointmaps 306 corresponding to the plurality of images 302 are replaced with pointmaps 306 generated by a regression head 964 that produces pointmaps 306 in a coordinate frame 965 that is common to the plurality of images 302, which may be different from the coordinate frame 967 from which the respective images 302 are captured. At 914, a determination is made whether a predetermined number of iterations has been performed. In the event the number of iterations is not complete at 912, the pointmaps 306 generated by regression head 964 now serve as input pre-encoder 955 and steps 906, 908, 910, 912 and 914 are repeated. In the event the number of iterations is complete at 912, the pointmaps produced by the regression head 964 on the last iteration are output with confidence scores 966, corresponding to the plurality of images 302 that are aligned in the common coordinate frame 965.

Additional details concerning the C-GAR architecture described in this Section are set forth in Section D (below), including training and experimentation.

**Section A.6 Global Alignment**

With reference again to the embodiment shown in Figure 3 that uses a single neural network 304 to process a set of two or more (1...M) input images 302, where M $\geq$ N, the total number of images 302 to be processed by neural network 304. In the event the total number of images N of the scene 301 to be processed exceeds M (the total number of images network 304 may process), the embodiment in Figure 4 may be used to process subsets of images 403 (at 506 in Figure 5). For example, assuming M=2 and N=2, given two views of a scene ($I_1$, $I_2$), the neural network 302 processes the two images and produces two pointmaps aligned in a common coordinate frame as shown in Figure 3.

In contrast, the embodiment shown in Figure 4 uses neural network 304 at least twice. Assuming M=2 (the total number of images network 304 may process) and N=3 (the total number of images to be processed, i.e., there exists three views of a scene ($I_1$, $I_2$, $I_3$)), the neural network 304 processes a first subset 403a of two images (for example, $I_1$, $I_2$) and a second subset 403b of two images (for example, $I_3$, $I_2$), resulting in two sets of pointmaps at 405a and 405b in Figure 4 (at 506 and 504 in Figure 5). Assuming all subsets of images 403 have been processed at 506 in Figure 5 (image pair $I_1$, $I_3$ could also be processed but it may not be necessary), a global coordinate frame alignment is performed by global aligner 407 (at 510 in Figure 5) to align processed subsets 405 of pointmaps (e.g., to align in a common coordinate frame the subset of pointmaps 405a for image pairs $I_1$, $I_2$ with pointmaps that are aligned together in a first coordinate frame and the subset of pointmaps 405b for image pairs $I_3$, $I_2$ with pointmaps that are aligned together in second common coordinate frame). Such processing at 510 enables the alignment of multiple subsets of pointmaps 405 predicted from multiple subsets of images 403 into a joint 3D space of aligned pointmaps 308 for a scene 301. This is possible because the content of the pointmaps 306 encompasses subsets of aligned point-clouds and their corresponding pixel-to-3D mappings as discussed with reference to Figure 6.

Aligning subsets of pointmaps 405 of a scene 301 processed by global aligner 407 in Figure 4 (at 510 in Figure 5) involves the construction of a connectivity graph. More specifically, given a set of images $\{I^1, I^2, ..., I^N\}$ for a given scene, a connectivity graph $G(V, E)$ is constructed where N images form vertices V and each edge e = $(n,m) \in E$ indicates that images $I^n$ and $I^m$ shares some visual content. In one embodiment, all image pairs are passed through network 304 and their overlap is measured based on the average confidence in both pairs, then low-confidence pairs are filtered out. In an alternate embodiment, known image retrieval methods may be used to construct a connectivity graph.

After constructing a connectivity graph $G$, globally aligned pointmaps are recovered $\{Xn \in R^{W \times H \times 3}\}$ for all camera viewpoints $n$ = 1... $N$ that captured images of the scene, by predicting for each image pair e = $(n,m) \in E$, the pairwise pointmaps $X^{n,n}, X^{m,n}$ and their associated confidence maps $C^{n,n}, C^{m,n}$. More specifically, denoting $X^{n,e} := X^{n,n}$ and $X^{m,e} := X^{m,n}$, and since the goal involves rotating all pairwise predictions in a common frame, a pairwise pose $P_e$ and scaling $\sigma^e > 0$ associated with each edge e $\in E$ are defined. Given the forgoing, the following optimization problem may be solved:

$$\chi^* = \underset{\chi, P, \sigma}{\arg\min} \sum_{e \in \mathcal{E}} \sum_{v \in e} \sum_{i=1}^{HW} C_i^{v,e} \left\| \chi_i^v - \sigma_e P_e X_i^{v,e} \right\|.$$

Solving such global optimization is carried out using standard gradient descent which in an embodiment converges after a few hundred steps, requiring seconds on a standard GPU (Graphics Processing Unit). The idea is that, for a given pair e = $(n,m)$, the same rotation $P_e$ should align both pointmaps $X^{n,e}$ and $X^{m,e}$ with the world-coordinate pointmaps $\chi n$ and $\chi m$, since $X^{n,e}$ and $X^{m,e}$ are by definition both expressed in the same coordinate frame. To avoid the trivial optimum where $\sigma_e$ = 0, $\forall e \in E$, $\Pi_e \sigma_e$ = 1 is enforced. An extension to this framework enables the recovery of all cameras parameters: by replacing $\chi n := P_n^{-1} h(K_n^{-1} [U D_n; V D_n; D_n])$, all camera poses $\{P_n\}$, associated intrinsics $\{K_n\}$ and depthmaps $\{D_n\}$ for $n$ = 1...N may be estimated.

**Section A.7 Review**

In summary, the neural networks disclosed herein reconstruct a 3D scene from un-calibrated and un-posed images by unifying monocular and binocular 3D reconstruction. The pointmap representation for Multi-View Stereo (MVS) applications enables the neural network to predict 3D shapes in a canonical frame, while preserving the implicit relationship between pixels and the scene. This effectively drops many constraints of the usual perspective camera formulation. Further, an optimization procedure may be used to globally align pointmaps in the context of multi-view 3D reconstruction by optimizing the camera pose and geometry alignment directly in 3D space. This procedure can extract intermediary outputs of existing Structure-from-Motion (SfM) and MVS pipelines. Finally, the neural networks disclosed herein are adapted to handle real-life monocular and multi-view reconstruction scenarios seamlessly, even when the camera is not moving between frames.

In addition to methods set forth for generating for generating 3D representations of scenes from a plurality of images, the disclosure concerns a computer program product comprising code instructions to execute these methods (particularly data processing means 112 of the servers 101 and the client devices 102), and storage means readable by computer equipment (memory 113) provided with this computer program product for storing such code instructions.

**Section B. DUSt3R: Dense Unconstrained Stereo 3D Reconstruction**

Multi-view stereo reconstruction (MVS) in the wild requires to first estimate the camera parameters (e.g., intrinsic and extrinsic parameters). These are usually tedious and cumbersome to obtain, yet they are mandatory to triangulate corresponding pixels in 3D space, which is the core of all best performing MVS algorithms. In this disclosure, an opposite stance is taken and DUSt3R is introduced, a novel paradigm for Dense and Unconstrained Stereo 3D Reconstruction (DUSt3R) of arbitrary image collections (i.e., operating without prior information about camera calibration nor viewpoint poses). The pairwise reconstruction problem is cast as a regression of pointmaps, relaxing the hard constraints of known projective camera models. This disclosure shows that this formulation smoothly unifies the monocular and binocular reconstruction cases. In the case where more than two images are provided, this disclosure propose a simple yet effective global alignment strategy that expresses all pairwise pointmaps in a common reference frame. The disclosed network architecture is based on generic transformer encoders and decoders, which allows powerful pretrained models to be leveraged. The disclosed formulation directly provides a 3D model of the scene as well as depth information, but interestingly, pixel matches, relative and absolute cameras can be seamlessly recovered from it. Experiments on all these tasks showcase that DUSt3R can unify various 3D vision tasks and set new state of the art on monocular/multi-view depth estimation as well as relative pose estimation. Advantageously, DUSt3R makes many geometric 3D vision tasks easy to perform.

**Section B.1 Introduction**

Unconstrained image-based dense 3D reconstruction from multiple views is one of a few long-researched end-goals of computer vision. In a nutshell, the task aims at estimating the 3D geometry and camera parameters of a particular scene, given a set of photographs of this scene. Not only does it have numerous applications like mapping, navigation, archaeology, cultural heritage preservation, robotics, but perhaps more importantly, it holds a fundamentally special place among all 3D vision tasks. Indeed, it subsumes nearly all of the other geometric 3D vision tasks. Thus, modern approaches for 3D reconstruction consists in assembling the fruits of decades of advances in various sub-fields such as keypoint detection and matching, robust estimation, Structure-from-Motion (SfM) and Bundle Adjustment (BA), dense Multi-View Stereo (MVS), etc.

In the end, modern SfM and MVS pipelines boil down to solving a series of *minimal problems*: matching points, finding essential matrices, triangulating points, sparsely reconstructing the scene, estimating cameras and finally performing dense reconstruction. Considering recent advances, this rather complex chain is of course a viable solution in some settings, yet it is argued here to be quite unsatisfactory: each sub-problem is not solved perfectly and adds noise to the next step, increasing the complexity and the engineering effort required for the pipeline to work as a whole. In this regard, the absence of communication between each sub-problem is quite telling: it would seem more reasonable if they helped each other, i.e., dense reconstruction should naturally benefit from the sparse scene that was built to recover camera poses, and vice-versa. In addition, key steps in this pipeline are brittle and prone to break in many cases. For instance, the crucial stage of SfM that serves to estimate all camera parameters, is typically known to fail in many common situations, e.g., when the number of scene views is low, for objects with non-Lambertian surfaces, in case of insufficient camera motion, etc. This is concerning, because in the end, "an MVS algorithm is only as good as the quality of the input images and camera parameters" (see Furukawa et al., "Multi-View Stereo: A Tutorial", in Foundations and Trends in Computer Graphics and Vision: Vol. 9: No. 1-2, pp. 1-148, 2015).

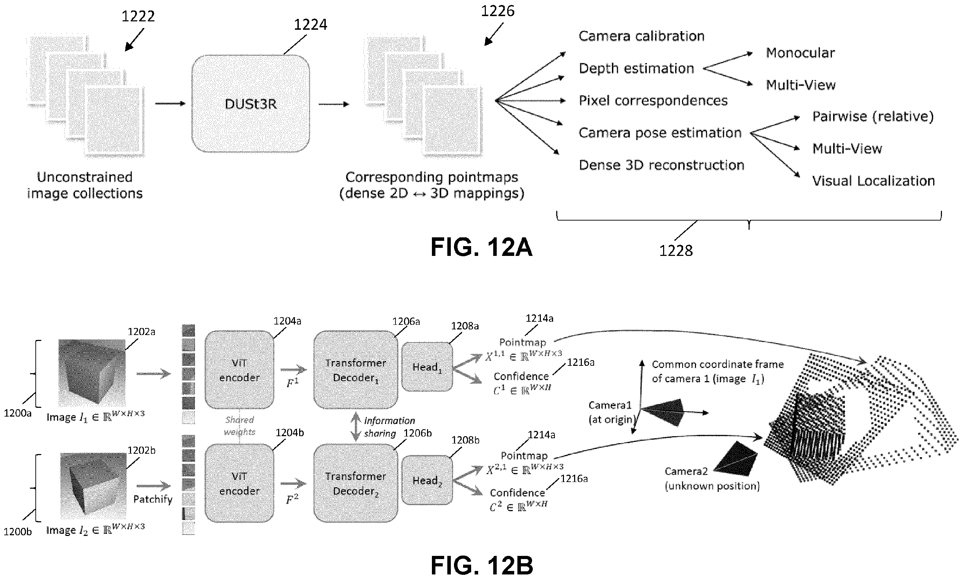

In this Section B, DUSt3R, a novel approach for Dense Unconstrained Stereo 3D Reconstruction from un-calibrated and un-posed cameras, is presented. Figure 12A illustrates that given a set of photographs 1222 with unknown camera poses and intrinsics, the proposed DUSt3R network 1224 outputs a set of corresponding pointmaps 1226, from which can be recovered a variety of geometric quantities 1228 normally difficult to estimate all at once, such as the camera parameters, pixel correspondences, depthmaps, and fully consistent 3D reconstruction. The DUSt3R network 1224 also works for a single input image (e.g., achieving in this case monocular reconstruction). The main component is a network that can regress a dense and accurate scene representation solely from a pair of images, without prior information regarding the scene nor the cameras (not even the intrinsic parameters). The resulting scene representation is based on 3D *pointmaps* with rich properties: they simultaneously encapsulate (a) the scene geometry, (b) the relation between pixels and scene points and (c) the relation between the two viewpoints. From this output alone, practically all scene parameters (i.e., cameras and scene geometry) can be extracted. This is possible because the disclosed network jointly processes the input images and the resulting 3D pointmaps, thus learning to associate 2D structures with 3D shapes, and having the opportunities of solving multiple minimal problems simultaneously, enabling internal 'collaboration' between them.

As set forth above, the disclosed model is trained in a fully-supervised manner using a simple regression loss, leveraging large public datasets for which ground-truth annotations are either synthetically generated, reconstructed from SfM softwares or captured using dedicated sensors). The disclosed embodiments drift away from the trend of integrating task-specific modules, and instead adopt a fully data-driven strategy based on a generic transformer architecture, not enforcing any geometric constraints at inference, but being able to benefit from powerful pretraining schemes. The network learns strong geometric and shape priors, which are reminiscent of those commonly leveraged in MVS, like shape from texture, shading or contours.

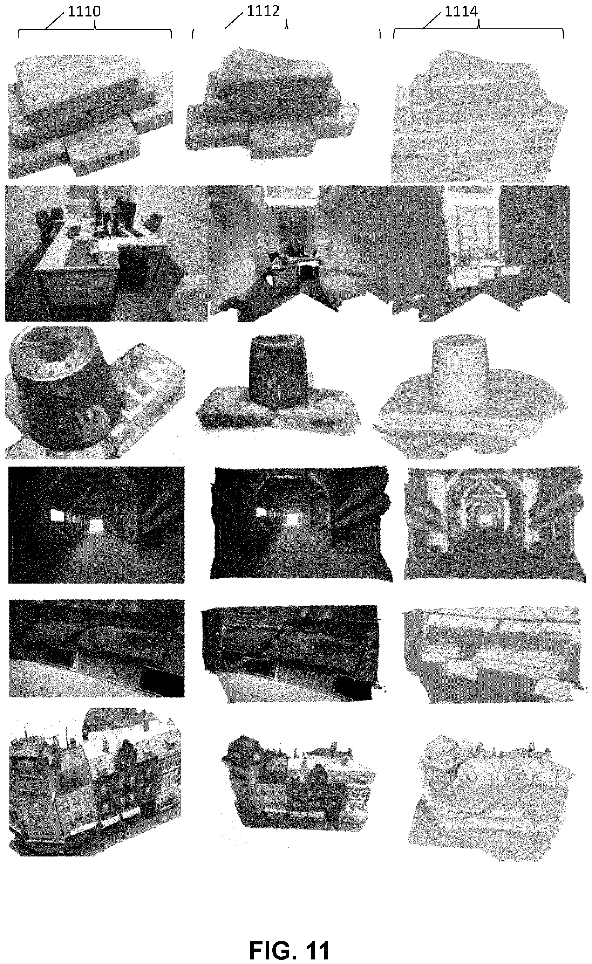

To fuse predictions from multiple images pairs, bundle adjustment (BA) for the case of pointmaps are revisited, hereby achieving full-scale MVS. The disclosed embodiments introduce a global alignment procedure that, contrary to BA, does not involve minimizing reprojection errors. Instead, the camera pose and geometry alignment directly in 3D space are optimized, which is fast and shows excellent convergence in practice. The disclosed experiments show that the reconstructions are accurate and consistent between views in real-life scenarios with various unknown sensors. The disclosed embodiments further demonstrate that the same architecture can handle *real-life* monocular and multi-view reconstruction scenarios seamlessly. Examples of reconstructions using the DUSt3R network shown in Figure 12A are shown in Figure 11. More specifically, Figure 11 shows qualitative examples using samples from the DTU dataset (see Aanaes et al., "Large-Scale Data for Multiple-View Stereopsis" in IJCV, 2016), Tanks and Temples (see Knapitsch et al., "Tanks and temples: Benchmarking large-scale scene reconstruction", in ACM Transactions on Graphics, 36(4), 2017) and ETH-3D (see Schops et al., "A Multi-View Stereo Benchmark with High-Resolution Images and Multi-Camera Videos", CVPR, 2017) datasets obtained without known camera parameters; for each sample there is shown: an input image 1110, a point cloud 1112, and a rendered (with shading for a better) view of the underlying geometry 1114.

In summary, the disclosed contributions are fourfold. First, the first holistic end-to-end 3D reconstruction pipeline from un-calibrated and un-posed images is presented that unifies monocular and binocular 3D reconstruction. Second, the pointmap representation for MVS applications is introduced that enables the network to predict the 3D shape in a canonical frame, while preserving the implicit relationship between pixels and the scene. This effectively drops many constraints of the usual perspective camera formulation. Third, an optimization procedure to globally align pointmaps in the context of multi-view 3D reconstruction is introduced. The disclosed procedure can extract effortlessly all usual intermediary outputs of the classical SfM and MVS pipelines. In a sense, the disclosed approach unifies all 3D vision tasks and considerably simplifies over the traditional reconstruction pipeline, making DUSt3R seem simple and easy in comparison. Fourth, promising performance is demonstrated on a range of 3D vision tasks. In particular, the disclosed all-in-one model achieves state-of-the-art results on monocular and multi-view depth benchmarks, as well as multi-view camera pose estimation.

### Section B.2 Related Work

Some related works in 3D vision are summarized in this Section. Additional related works are summarized in Section B.6.2 (below).

**Structure-from-Motion (SfM)** aims at reconstructing sparse 3D maps while jointly determining camera parameters from a set of images. The traditional pipeline starts from pixel correspondences obtained from keypoint matching between multiple images to determine geometric relationships, followed by bundle adjustment to optimize 3D coordinates and camera parameters jointly. Recently, the SfM pipeline has undergone substantial enhancements, particularly with the incorporation of learning-based techniques into its subprocesses. These improvements encompass advanced feature description, more accurate image matching feature metric refinement, and neural bundle adjustment. Despite these advancements, the sequential structure of the SfM pipeline persists, making it vulnerable to noise and errors in each individual component.

**MultiView Stereo (MVS)** is the task of densely reconstructing visible surfaces, which is achieved via triangulation between multiple viewpoints. In the classical formulation of MVS, all camera parameters are supposed to be provided as inputs. The fully handcrafted, the more recent scene optimization based, or learning based approaches all depend on camera parameter estimates obtained via complex calibration procedures, either during the data acquisition or using Structure-from-Motion approaches for in-the-wild reconstructions. Yet, in real-life scenarios, the inaccuracy of pre-estimated camera parameters can be detrimental for these algorithms to work properly. This disclosure propose instead to directly predict the geometry of visible surfaces without any explicit knowledge of the camera parameters.

**Direct RGB-to-3D.** Recently, some approaches aiming at directly predicting 3D geometry from a single RGB image have been proposed. Since the problem is by nature ill-posed without introducing additional assumptions, these methods leverage neural networks that learn strong 3D priors from large datasets to solve ambiguities. These methods can be classified into two groups. The first group leverages class-level object priors. For instance, a known method proposes to learn a model that can fully recover shape, pose, and appearance from a single image, given a large collection of 2D images. While this type of approach is powerful, it does not allow to infer shape on objects from unseen categories. A second group of work, closest to the disclosed method, focuses instead on general scenes. These methods systematically build on or re-use existing monocular depth estimation (MDE) networks. Depth maps indeed encode a form of 3D information and, combined with camera intrinsics, can yield pixel-aligned 3D point-clouds. SynSin (see Wiles et al., "SynSin: End-to-end view synthesis from a single image", in CVPR, pp. 7465-7475, 2020), for example, performs new viewpoint synthesis from a single image by rendering feature-augmented depthmaps knowing all camera parameters. Without camera intrinsics, one solution is to infer them by exploiting temporal consistency in video frames, either by enforcing a global alignment or by leveraging differentiable rendering with a photometric reconstruction loss. Another way is to explicitly learn to predict camera intrinsics, which enables performing metric 3D reconstruction from a single image when combined with MDE networks. All of these methods are, however, intrinsically limited by the quality of depth estimates, which is poorly suited for monocular settings.

In contrast, the disclosed network processes two viewpoints simultaneously in order to output depthmaps, or rather, pointmaps. In theory, at least, this makes triangulation between rays from different viewpoint possible. Multi-view networks for 3D reconstruction have been proposed in the past. They are essentially based on the idea of building a differentiable SfM pipeline, replicating the traditional pipeline but training it end-to-end. For that, however, ground-truth camera intrinsics are required as input, and the output is generally a depthmap and a relative camera pose. In contrast, the disclosed network has a generic architecture and outputs pointmaps (i.e., dense 2D field of 3D points), which handle camera poses implicitly and makes the regression problem better posed.

**Pointmaps.** Using a collection of pointmaps as shape representation is quite counter-intuitive for MVS, but its usage is widespread for Visual Localization tasks, either in scene-dependent optimization approaches or scene agnostic inference methods. Similarly, view-wise modeling is a common theme in monocular 3D reconstruction works and in view synthesis works. The idea being to store the canonical 3D shape in multiple canonical views to work in image space. These approaches usually leverage explicit perspective camera geometry, via rendering of the canonical representation.

## Section B.3 Method

Before discussing the details of the disclosed method, this Section introduces some essential concepts of pointmaps introduced above.

**Pointmap.** In the following, a dense 2D field of 3D points is denoted as a *pointmap* $X \in \mathbb{R}^{W \times H \times 3}$. In association with its corresponding RGB image I of resolution $W \times H$, X forms a one-to-one mapping between image pixels and 3D scene points, i.e., $I_{i,j} \leftrightarrow X_{i,j}$, for all pixel coordinates $(i, j) \in \{1 \ldots W\} \times \{1 \ldots H\}$. The disclosed embodiments assume that each camera ray hits a single 3D point (i.e., ignoring the case of translucent surfaces).

**Camera and scene.** Given the camera intrinsics $K \in \mathbb{R}^{3 \times 3}$, the pointmap X of the observed scene can be obtained from the ground-truth depthmap $D \in \mathbb{R}^{W \times H}$ as $X_{i,j} = K^{-1}[iD_{i,j}, jD_{i,j}, D_{i,j}]^T$. Here, $X$ is expressed in the camera coordinate frame. In the following, $X^{n,m}$ is denoted as the pointmap $X^n$ from camera n expressed in camera m's coordinate frame:

$$X^{n,m} = P_m P_n^{-1} h(X^n) \tag{B1}$$

with $P_m, P_n \in \mathbb{R}^{3 \times 4}$ the world-to-camera poses for images n and m, and $h: (x,y,z) \to (x,y,z, 1)$ the homogeneous mapping.

**Section B.3.1 Overview**

The disclosed embodiments build a network that solves the 3D reconstruction task for the generalized stereo case through direct regression. To that aim, a network $\mathcal{F}$ is trained that takes as input 2 RGB images $I^1, I^2 \in \mathbb{R}^{W \times H \times 3}$ and outputs 2 corresponding pointmaps $X^{1,1}, X^{2,1} \in \mathbb{R}^{W \times H \times 3}$ with associated confidence maps $C^{1,1}, C^{2,1} \in \mathbb{R}^{W \times H}$. Note that both pointmaps are expressed in the *same* coordinate frame of $I^1$, which radically differs from existing approaches but offers advantages as will be apparent from the disclosed embodiments. For the sake of clarity and without loss of generality, both images are assumed that they have the same resolution $W \times H$, but naturally in practice their resolution can differ.

**Network architecture.** Figure 12B illustrates an example architecture of the DUSt3R network shown in Figure 12A. The architecture of the disclosed network $\mathcal{F}$ 1204 is inspired by CroCo, making it possible to benefit from CroCo pretraining. More details on the Cross-view Completion "CroCo" architecture is set forth in Weinzaepfel et al. (i) "CroCo: Self-Supervised Pre-Training for 3D Vision Tasks by Cross-View Completion", in NeurIPS, 2022 and (ii) "CroCo v2: Improved Cross-view Completion Pre-training for Stereo Matching and Optical Flow", in ICCV, 2023 ((i) and (ii) also referred to herein as "Weinzaepfel et al. 2023"), and in (iii) US Patent Application Serial Nos. 18230414 and 18239739. The resulting token representations $F^1$ and $F^2$ of networks 1204a and 1204b, respectively, are then passed to two transformer decoders 1206 that constantly exchange information via cross-attention and finally, two regression heads 1208 output the two corresponding pointmaps 1214 and associated confidence maps 1216; importantly, the two pointmaps 1214a and 1214b are expressed in the same coordinate frame of the first image $I^1$; the network $F$ is trained using a simple regression loss.

More specifically, as shown in Figure 12B, an architecture of the DUSt3R network shown in Figure 12A may be composed of two identical branches 1200a and 1200b (one for each image 1202) comprising each an image encoder 1204, a decoder 1206 and a regression head 1208. The two input images 1202 are first encoded in a Siamese manner by the same weight-sharing ViT encoder 1204 (see Dosovitskiy et al.), yielding two token representations $F^1$ and $F^2$:

$$F^1 = Encoder\ (I^1), F^2 = Encoder\ (I^2).$$

The network then reasons over both of them jointly in the decoder 1206. Similarly to CroCo, the decoder 1206 is a generic transformer network equipped with cross attention. Each decoder block 1206 thus sequentially performs self-attention (each token of a view attends to tokens of the same view), then cross-attention (each token of a view attends to all other tokens of the other view), and finally feeds tokens to regression head 1208 a Multi-Layer Perceptron (MLP). Importantly, information is constantly shared between the two branches during the decoder pass 1206. This is needed in order to output properly aligned pointmaps. Namely, each decoder block 1206 attends to tokens from the other branch:

$$G_i^1 = DecoderBlock_i^1(G_{i-1}^1,\ G_{i-1}^2)$$

$$G_i^2 = DecoderBlock_i^2(G_{i-1}^2,\ G_{i-1}^1)$$

for $i = 1, ..., B$ for a decoder with $B$ blocks and initialized with encoder tokens $G_0^1 := F^1$ and $G_0^2 := F^2$. Here, DecoderBlock$_i^v(G^1, G^2)$ denotes the $i$-th block in branch $v \in \{1,2\}$, $G^1$ and $G^2$ are the input tokens, with $G^2$ the tokens from the other branch. Finally, in each branch a separate regression head 1208 takes the set of decoder tokens and outputs a pointmap and an associated confidence map:

$$X^{1,1}, C^{1,1} = Head^1\ (G_0^1,\ \ldots,\ G_B^1),$$

$$X^{2,1}, C^{2,1} = Head^2\ (G_0^2,\ \ldots,\ G_B^2),$$

where $X^{1,1}$ and $X^{2,1}$ are output pointmaps and $C^{1,1}$ and $C^{2,1}$ are output confidence score maps.

**Discussion.** The output pointmaps $X^{1,1}$ and $X^{2,1}$ are regressed up to an unknown scale factor. Also, it should be noted that the disclosed generic architecture never explicitly enforces any geometrical constraints. Hence, pointmaps do not necessarily correspond to any physically plausible camera model. Rather, the network is allowed learn all relevant priors present from the training set, which only contains geometrically consistent pointmaps. Using a generic architecture allows leveraging strong pretraining technique, ultimately surpassing what existing task-specific architectures can achieve. The learning process is detailed in the next section.

**Section B.3.2 Training Objective**

**3D Regression loss.** The sole training objective is based on regression in the 3D space. The ground truth pointmaps are denoted as $\overline{X}^{1,1}$ and $\overline{X}^{2,1}$, obtained from Equation B1 along with two corresponding sets of valid pixels $D^1, D^2 \subseteq \{1 ... W\} \times \{1 ... H\}$ on which the ground-truth is defined. The regression loss for a valid pixel $i \in D^v$ in view $v \in \{1, 2\}$ is defined as the Euclidean distance:

$$\ell_{\text{regr}}(v, i) = \left\| \frac{1}{z} X_i^{v,1} - \frac{1}{\overline{z}} \overline{X}_i^{v,1} \right\| \tag{B2}$$

To handle the scale ambiguity between prediction and ground-truth, the predicted and ground-truth pointmaps are normalized by scaling factors $z = norm(X^{1,1}, X^{2,1})$ and $\overline{z} = norm(\overline{X}^{1,1}, \overline{X}^{2,1})$, respectively, which represent the average distance of all valid points to the origin:

$$norm(X^1, X^2) = \frac{1}{|D1| + |D2|} \sum_{v \in \{1,2\}} \sum_{i \in D^v} \| X_i^v \| \tag{B3}$$

**Confidence-aware loss.** In reality, and contrary to disclosed assumption, there are ill-defined 3D points, e.g., in the sky or on translucent objects. More generally, some parts in the image are typically harder to predict that others. The disclosed embodiments thus jointly learn to predict a score for each pixel which represents the confidence that the network has about this particular pixel. The final training objective is the confidence-weighted regression loss from Equation B2 over all valid pixels:

$$\mathcal{L}_{\text{conf}} = \sum_{v \in \{1,2\}} \sum_{i \in D^v} C_i^{v,1} l_{regr}(v, i) - \alpha \log C_i^{v,1}, \tag{B4}$$

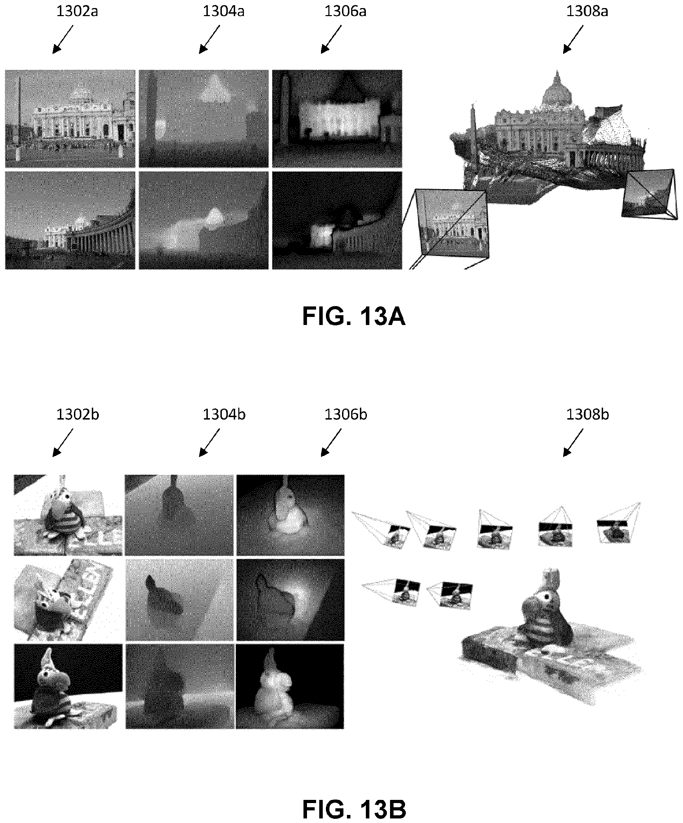

where $C_i^{v,1}$ is the confidence score for pixel i, and $\alpha$ is a hyper-parameter controlling the regularization term (see Wan et al., "Confnet: Predict with confidence", in ICASSP, pp. 2921-2925, 2018). To ensure a strictly positive confidence, typically define $C_i^{v,1} = 1 + \exp \widetilde{C_i^{v,1}} > 1$. This has the effect of forcing the network to extrapolate in harder areas, e.g., like those ones covered by a single view. Training network F with this objective allows to estimate confidence scores without an explicit supervision. Examples of input image pairs with their corresponding outputs are shown in Figures 13A and 13B. More specifically, Figures 13A and 13B show reconstruction examples on two scenes never seen during training, with from left to right: RGB 1302, depth map 1304, confidence map 1306 and reconstruction 1308; the scene in Figure 13A shows the raw result output from F(I1, I2) and the scene in Figure 13B shows the outcome of global alignment discussed in Section B.3.4.

**Section B.3.3 Downstream Applications**

The rich properties of the output pointmaps allows various convenient operations to be performed with relative ease.
Establishing correspondences between pixels of two images can be achieved using nearest neighbor (NN) search in the 3D pointmap space. To minimize errors, typically retain reciprocal (mutual) correspondences $M_{1,2}$ between images $I^1$ and $I^2$, i.e., providing:

$$M_{1,2} = \{(i,j) \mid i = NN_1^{1,2}(j) \text{ and } j = NN_1^{2,1}(i)\}$$

with

$$NN_k^{n,m}(i) = \underset{j \in \{0,...,WH\}}{\arg\min} || X_j^{n,k} - X_i^{m,k} ||.$$

By definition, the pointmap $X^{1,1}$ is expressed in image $I^1$'s coordinate frame. It is therefore possible to estimate the camera intrinsic parameters by solving an optimization problem. In this disclosure, it is assumed that the principal point is approximately centered and pixel are squares, hence only the focal length $f_1^*$ remains to be estimated:

$$f_1^* = \underset{f_1}{\arg\min} \sum_{i=0}^{W} \sum_{j=0}^{H} C_{i,j}^{1,1} \left\| (i',j') - f_1 \frac{(X_{i,j,0}^{1,1}, X_{i,j,1}^{1,1})}{X_{i,j,2}^{1,1}} \right\|, \tag{B5}$$

with $i' = i - \frac{W}{2}$ and $j' = j - \frac{H}{2}$. Fast iterative solvers, e.g., based on the Weiszfeld algorithm (see Frank Plastria, "The Weiszfeld Algorithm: Proof, Amendments, and Extensions" in Foundations of Location Analysis, pp. 357-389, Springer, 2011), can find the optimal focal length $f_1^*$ in a few iterations. For the focal length $f_2^*$ of the second camera, the simplest option is to perform the inference for the image pair ($I^2$, $I^1$) and use Equation B5 with pointmap $X^{2,2}$ instead of pointmap $X^{1,1}$.

**Relative pose estimation** can be achieved in several ways. One way is to perform 2D matching and recover intrinsics as described above, then estimate the Epipolar matrix and recover the relative pose. Another, more direct, way is to compare the pointmaps $X^{1,1} \leftrightarrow X^{1,2}$ (or, equivalently, $X^{2,2} \leftrightarrow X^{1,2}$) using Procrustes alignment (see Luo et al., "Procrustes alignment with the EM algorithm", in CAIP, vol. 1689 of Lecture Notes in Computer Science, pp. 623-631, Springer, 1999) to get the relative pose $P_* = [R_*|t_*]$:

$$R^*, t^* = \underset{\sigma,R,t}{\arg\min} \sum_i C_i^{1,1} C_i^{1,2} \left\| \sigma(R X_i^{1,1} + t) - X_i^{1,2} \right\|^2,$$

which can be achieved in closed-form. Procrustes alignment is, unfortunately, sensitive to noise and outliers. A more robust solution is to rely on RANSAC (Random Sample Consensus) with PnP (Perspective-n-Point), i.e., PnP-RANSAC (see Fischler et al., "Random Sample Consensus: A Paradigm for Model Fitting with Applications to Image Analysis and Automated Cartography", in Commun. ACM 24(6):381-95, 1981 and Lepetit et al., "EPnP: An accurate O(n) solution to the PnP problem", in IJCV, 2009).

**Absolute pose estimation,** also termed visual localization, can likewise be achieved in several different ways. Let $I^Q$ denote the query image and $I^B$ the reference image for which 2D-3D correspondences are available. First, intrinsics for $I^Q$ can be estimated from pointmap $X^{Q,Q}$. One solution consists of obtaining 2D correspondences between $I^Q$ and $I^B$, which in turn yields 2D-3D correspondences for $I^Q$, and then running PnP-RANSAC. Another solution is to get the relative pose between $I^Q$ and $I^B$ as described previously. Then, this pose is converted to world coordinates by scaling it appropriately, according to the scale between $X^{B,B}$ and the ground-truth pointmap for $I^B$.

## Section B.3.4 Global Alignment

The network $\mathcal{F}$ presented so far in this Section B.3 can only handle a pair of images. Presented now is a fast and simple post-processing optimization for entire scenes that enables the alignment of pointmaps predicted from multiple images into a joint 3D space (i.e., global aligner 407 shown in Figure 4). This is possible due to the rich content of the disclosed pointmaps, which encompasses by design two aligned point-clouds and their corresponding pixel-to-3D mapping.

**Pairwise graph.** Given a set of images $\{I^1, I^2, ..., I^N\}$ for a given scene, first a connectivity graph G(V, E) is constructed where N images form vertices V and each edge e = (n,m) ∈ E indicates that images $I^n$ and $I^m$ shares some visual content. To that aim, either known image retrieval method is used, or all pairs are passed through network F (inference takes ≈40ms on a H100 GPU) and their overlap is measured based on the average confidence in both pairs, then out low-confidence pairs are filtered out.

**Global optimization.** The disclosed embodiments use the connectivity graph G to recover globally aligned pointmaps $\{\chi^n \in \mathbb{R}^{W \times H \times 3}\}$ for all cameras n = 1 ... N. To that aim, first predict, for each image pair e = (n,m) ∈ E, the pairwise pointmaps $X^{n,n}$, $X^{m,n}$ and their associated confidence maps $C^{n,n}$, $C^{m,n}$. For the sake of clarity, let the following be defined as: $X^{n,e} := X^{n,n}$ and $X^{m,e} := X^{m,n}$. Since the disclosed goal involves rotating all pairwise predictions in a common coordinate frame, a pairwise pose $P_e \in R^{3 \times 4}$ and scaling $\sigma_e > 0$ associated to each pair $e \in E$ is introduced. Then the following optimization problem may be formulated:

$$\chi^* = \underset{X,P,\sigma}{\mathrm{argmin}} \sum_{e \in E} \sum_{v \in e} \sum_{i=1}^{WH} C_i^{v,e} \left\| \chi_i^v - \sigma_e P_e X_i^{v,e} \right\| . \qquad (B6)$$

where $v \in e$ for $v \in \{n,m\}$ if $e = (n,m)$. The idea is that, for a given image pair $e$, the *same* rigid transformation $P_e$ should align both pointmaps $\chi^{n,e}$ and $\chi^{m,e}$ with the world-coordinate pointmaps $\chi^n$ and $\chi^m$, since $\chi^{n,e}$ and $\chi^{m,e}$ are by definition both expressed in the same coordinate frame. To avoid the trivial optimum where $\sigma_e = 0, \forall e \in E$, $\Pi_e \sigma e = 1$ is enforced.

**Recovering camera parameters.** An extension to this framework enables the recovery of all cameras parameters. By replacing $\chi_{i,j}^n := P_n^{-1} h(K_n^{-1}[iD_{i,j}^n; jD_{i,j}^n; D_{i,j}^n]$ (i.e., enforcing a standard camera pinhole model as in Equation B1), all camera poses $\{P_n\}$, associated intrinsics $\{K_n\}$ and depthmaps $\{D_n\}$ for $n = 1... N$ may be estimated.

**Discussion.** Contrary to traditional bundle adjustment, the disclosed global optimization embodiments are fast and simple to perform in practice. Indeed, the disclosed embodiments are not minimizing 2D reprojection errors, as bundle adjustment normally does, but 3D projection errors. The optimization is carried out using standard gradient descent and typically converges after a few hundred steps, requiring mere seconds on a standard GPU.

## Section B.4 Experiments with DUSt3R

**Training data.** In one embodiment, the disclosed network is trained with a mixture of eight datasets: Habitat (see Savva et al., "Habitat: A Platform for Embodied AI Research" in ICCV, 2019), MegaDepth (see Li et al., "Megadepth: Learning single-view depth prediction from internet photos", in CVPR, pp. 2041-2050, 2018.), ARKitScenes (see Dehghan et al., "ARKitScenes: A diverse real-world dataset for 3d indoor scene understanding using mobile RGB-D data", in NeurIPS Datasets and Benchmarks, 2021, MegaDepth, Static Scenes 3D (see Mayer et al., "A Large Dataset to Train Convolutional Networks for Disparity, Optical Flow, and Scene Flow Estimation", in CVPR, 2016), Blended MVS (Yao et al., "BlendedMVS: A Large-Scale Dataset for Generalized Multi-View Stereo Networks", in CVPR, 2020), ScanNet++ (see Yeshwanth et al., "ScanNet++: A high-fidelity dataset of 3d in-door scenes", in ICCV 2023), CO3Dv2 (see Reizenstein et al., "Common Objects in 3D: Large-Scale Learning and Evaluation of Real-Life 3D Category Reconstruction", in ICCV, 2021). and Waymo (see Sun et al., "Scalability in Perception for Autonomous Driving: Waymo Open Dataset", in CVPR, 2020). These datasets feature diverse scenes types: indoor, outdoor, synthetic, real-world, object-centric, etc. When image pairs are not directly provided with the dataset, they are extracted based on the CroCo method. Specifically, image retrieval and point matching algorithms may be utilized to match and verify image pairs. In one embodiment 8.5M pairs in total were extract.

**Training details.** During each epoch, an equal number of pairs are randomly sampled from each dataset to equalize disparities in dataset sizes. In an embodiment relatively high-resolution images are fed to the disclosed network that are for example 512 pixels in the largest dimension. To mitigate the high cost associated with such input, the disclosed network is trained sequentially, first on 224×224 images and then on larger 512-pixel images. The image aspect ratios are randomly selected for each batch (e.g., 16/9, 4/3, etc.), so that at test time the disclosed network is familiar with different image shapes. Images are cropped to the desired aspect-ratio, and resized so that the largest dimension is 512 pixels.

Overall standard data augmentation techniques and training set-up are used. The disclosed network architecture comprises a ViT-Large for the encoder (see Dosovitskiy et al.), a ViT-Base for the decoder and a DPT head (see Ranftl et al., "Vision transformers for dense prediction," in ICCV, 2021, which is referred to hereinafter as "DPT" or "DPT-KITTI"). Note Section B.6.5 (below) sets forth additional details on the training and the network architecture. Before training, the network is initialized with the weights of a CroCo pretrained model. CroCo is a pretraining paradigm inspired by MAE (see He et al., "Masked autoencoders are scalable vision learners", in CVPR, 2022) that has been shown to excel on various downstream 3D vision tasks and is thus suited to the disclosed framework. In Section B.4.6 the impact of CroCo pretraining and increase in image resolution is ablated.

**Evaluation.** In the remainder of this Section, DUSt3R is benchmarked on a representative set of classical 3D vision tasks, each time specifying datasets, metrics and comparing performance with existing state-of-the-art approaches. All results are obtained with the *same* DUSt3R model (the disclosed default model is denoted as 'DUSt3R 512', other DUSt3R models serves for the ablations in Section B.4.6), i.e., the disclosed model is never finetuned on a particular downstream task. During testing, all test images are rescaled to 512 pixels while preserving their aspect ratio. Since there may exist different 'routes' to extract task-specific outputs from DUSt3R, as described in Section B.3.3 and Section B.3.4, it is noted each time the method is employed.

**Qualitative results.** DUSt3R yields high-quality dense 3D reconstructions even in challenging situations. See Section B.6.1 for non-cherrypicked visualizations of pairwise and multi-view reconstructions.

**Section B.4.1 Visual Localization**

**Dataset and metrics.** DUSt3R is evaluated in this Section for the task of absolute pose estimation on the 7Scenes (see Shotton et al., "Scene coordinate regression forests for camera relocalization in RGB-D images", in CVPR, pp. 2930-2937, 2013) and Cambridge Landmarks datasets (see Kendall et al., "PoseNet: a Convolutional Network for Real-Time 6-DOF Camera Relocalization", in ICCV, 2015). 7Scenes contains 7 indoor scenes with RGB-D images from videos and their 6-DOF camera poses. Cambridge-Landmarks contains 6 outdoor scenes with RGB images and their associated camera poses, which are obtained via SfM. The median translation and rotation errors in (cm/°), respectively, are reported.

**Protocol and results.** To compute camera poses in world coordinates, DUSt3R is used as a 2D-2D pixel matcher (see Section B.3.3) between a query and the most relevant database images obtained using known image retrieval APGeM (see Revaud et al., "Learning with average precision: Training image retrieval with a listwise loss," in ICCV, 2019). In other words, the raw pointmaps output from $F(I^Q, I^B)$ without any refinement are used, where $I^Q$ is the query image and $I^B$ is a database image. The top 20 retrieved images for Cambridge-Landmarks and top 1 for 7Scenes are used, and known query intrinsics are leveraged. For results obtained without using ground-truth intrinsics parameters, refer to Section B.6.4 (below).

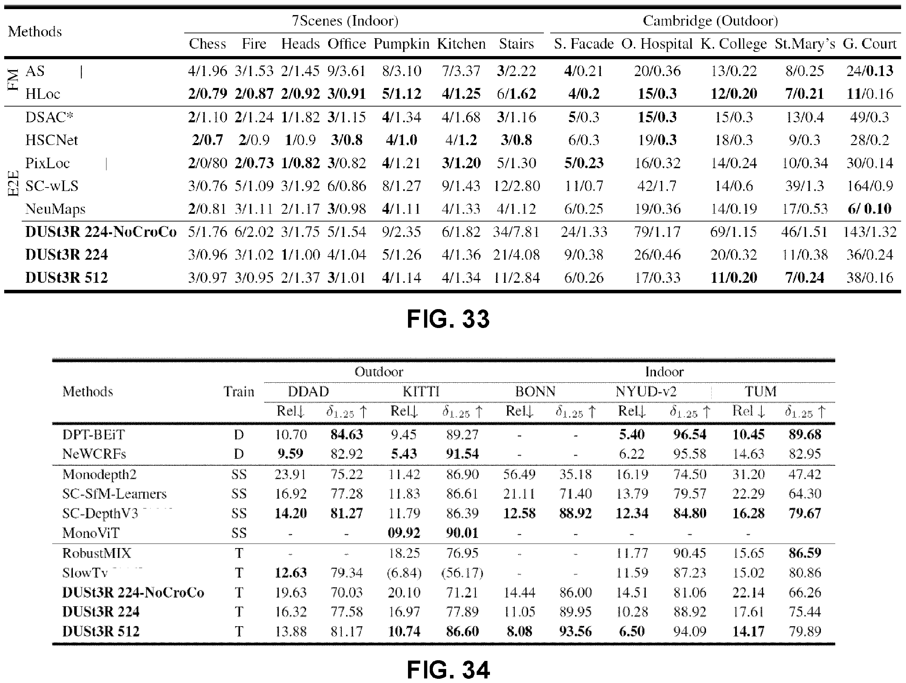

Obtained results are compared against the state of the art in the table in Figure 33 for each scene of the 7Scenes and Cambridge-Landmarks datasets, where the median translation and rotation errors (cm/°) to feature matching (FM) based and end-to-end (E2E) learning-base methods are reported and the best results at each category are in bold. The disclosed method obtains comparable accuracy compared to existing approaches, being feature-matching ones (e.g., HLoc, AS) or end-to-end learning based methods (e.g., DSAC, HSCNet, NeuMaps, SC-uLS), even managing to outperform strong baselines like HLoc in some cases. This is believed to be important for two reasons. First, DUSt3R was never trained for visual localization in any way. Second, neither query image nor database images were seen during DUSt3R's training.

**Section B.4.2 Multi-view Pose Estimation**

DUSt3R is evaluated in this Section on multi-view relative pose estimation after the global alignment from Section B.3.4.

**Datasets.** Following, two multi-view datasets, CO3Dv2 and RealEstate10k (Zhou et al., "Stereo Magnification: Learning View Synthesis Using Multiplane Images", in SIGGRAPH, 2018) are used for the evaluation. CO3Dv2 contains 6 million frames extracted from approximately 37k videos, covering 51 MS-COCO categories. The ground-truth camera poses are annotated using COLMAP (see Schonberger et al., "Structure-from-motion revisited", in CVPR, 2016, and Schonberger et al, Pixelwise view selection for unstructured multi-view stereo", in ECCV, 2016, which are hereinafter referred to as "COLMAP") from 200 frames in each video. RealEstate10k is an indoor/ outdoor dataset with 10 million frames from about 80K video clips on YouTube, the camera poses being obtained by SLAM (Simultaneous Localization and Mapping) with bundle adjustment. The protocol introduced in PoseDiffusion (see Wang et al., "PoseDiffusion: Solving Pose Estimation via Diffusion-Aided Bundle Adjustment" in ICCV, 2023) is followed to evaluate DUSt3R on 41 categories from CO3Dv2 and 1.8K video clips from the test set of RealEstate10k. For each sequence, 10 frames are randomly selected and all possible 45 pairs are fed to DUSt3R.

**Baselines and metrics.** DUSt3R is compared to pose estimation results, obtained either from PnP-RANSAC or global alignment, against the learning-based RelPose (see Zhang et al., "RelPose: Predicting Probabilistic Relative Rotation for Single Objects in the Wild", in ECCV, 2022), PoseReg and PoseDiffusion, and structure-based PixSFM (see Lindenberger et al., "Pixel-Perfect Structure-from-Motion with Featuremetric Refinement," in ICCV, pages 5967-5977, 2021), COLMAP+SPSG (COLMAP extended with SuperPoint (see DeTone et al., "Superpoint: Self-supervised Interest Point Detection and Description," in CVPR Workshops, pages 224-236, 2018) and SuperGlue (see Sarlin et al., "SuperGlue: Learning Feature Matching with Graph Neural Networks," in CVPR, pp. 4937-4946, 2020). Similar to PoseReg, the Relative Rotation Accuracy (RRA) and Relative Translation Accuracy (RTA) for each image pair to evaluate the relative pose error and select a threshold $\tau = 15$ to report RTA@15 and RRA@15 is reported. Additionally, the mean Average Accuracy (mAA)@30 is calculated, defined as the area under the curve accuracy of the angular differences at min(RRA@30,RTA@30).

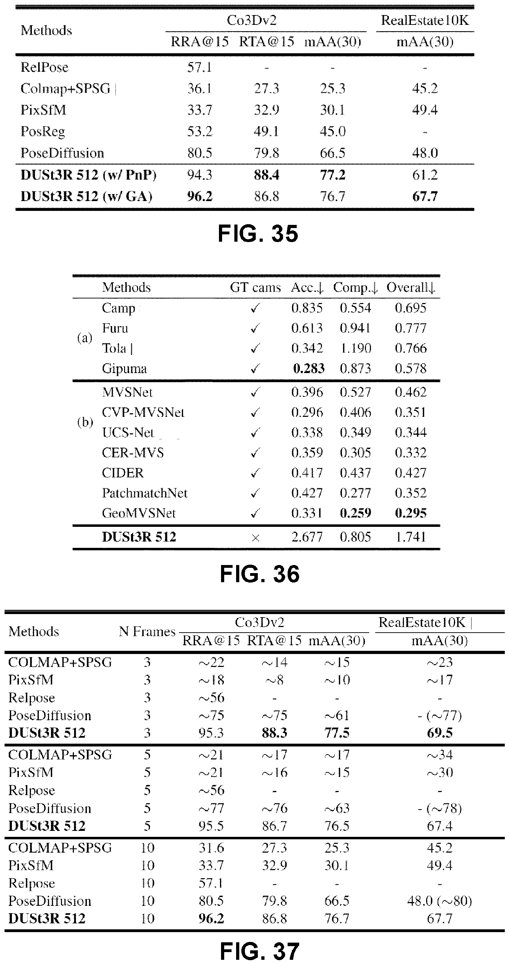

**Results.** As shown in tables in Figures 34 and 35, DUSt3R with global alignment achieves the best overall performance on the two datasets and surpasses the state-of-the-art PoseDiffusion. Moreover, DUSt3R with PnP also demonstrates superior performance over both learning and structure-based existing methods. It is worth noting that RealEstate10K results reported for PoseDiffusion are from the model trained on CO3Dv2. Nevertheless, this comparison is justified considering that RealEstate10K is not used either during DUSt3R's training. Performance is also reported with less input views (between 3 and 10) in Section B.6.3 (below), in which case DUSt3R also yields excellent performance on both benchmarks.

### Section B.4.3 Monocular Depth

For this monocular task, the same input image I is fed to the network as F(I, I). By design, depth prediction is the z coordinate in the predicted 3D pointmap.

**Datasets and metrics.** DUSt3R is benchmarked on two outdoor (DDAD (see Guizilini et al., "3D packing for self-supervised monocular depth estimation", in CVPR, pp 2482-2491, 2020), KITTI (see Geiger et al., "Vision meets robotics: The KITTI dataset", in Int. J. Robotics Res., 32(11):1231-1237, 2013)) and three indoor (NYUv2 (see Silberman et al., "Indoor segmentation and support inference from RGBD images" in ECCV, pp. 746-760, 2012), BONN (see Palazzolo et al., "Refusion: 3d reconstruction in dynamic environments for RGB-D cameras exploiting residuals", in IROS 2019), TUM (see Sturm et al., "A benchmark for the evaluation of RGB-D SLAM systems", in IEEE IROS, pp. 573-580, 2012.)) datasets. DUSt3R's performance is compared to state-in-the-art methods categorized in supervised, self-supervised and zero-shot settings, this last category corresponding to DUSt3R. Two metrics commonly used in the monocular depth evaluations are used: the absolute relative error AbsRel between target y and prediction $\hat{y}$, $AbsRel = y - \hat{y}|/y$, and the prediction threshold accuracy, $\delta_{1.25} = \max(\hat{y}/y, y/\hat{y}) < 1.25$.

**Results.** In zero-shot setting, the state of the art is represented by the recent SlowTv (see Spencer et al., "Kick back & relax: Learning to reconstruct the world by watching slowtv", in ICCV, 2023). This approach collected a large mixture of curated datasets with urban, natural, synthetic and indoor scenes, and trained one common model. For every dataset in the mixture, camera parameters are known or estimated with COLMAP. As the tables in Figures 34 and 35 show, DUSt3R adapts well to outdoor and indoor environments. It outperforms the self-supervised baselines (e.g., Monodepth2, SC-DepthV3, Monodepth2, SC-DepthV3) and performs on-par with state-of-the-art supervised baselines (e.g., NeWCRFs).

### Section B.4.4 Multi-view Depth

DUSt3R is evaluated for the task of multi-view stereo depth estimation. Depthmaps, as the z-coordinate of predicted pointmaps, are extracted. In the case where multiple depthmaps are available for the same image, all predictions are rescaled to align them together and aggregate all predictions via an averaging weighted by the confidence.

**Datasets and metrics.** Following Schroppel et al. (in "A benchmark and a baseline for robust multi-view depth estimation" in 3DV, pp. 637-645, 2022), it is evaluated on the DTU, ETH3D, Tanks and Temples, and ScanNet (see Dai et al., "ScanNet: Richly-annotated 3d reconstructions of indoor scenes", in CVPR, 2017) datasets. The Absolute Relative Error (rel) and Inlier Ratio ($\tau$) with a threshold of 1.03 on each test set and the averages across all test sets are reported. Note that the *ground-truth* camera parameters and poses nor the *ground-truth* depth ranges are not leveraged, the predictions herein are only valid up to a scale factor. In order to perform quantitative measurements, predictions are normalize using the medians of the predicted depths and the groundtruth ones, as advocated by Schroppel et al.

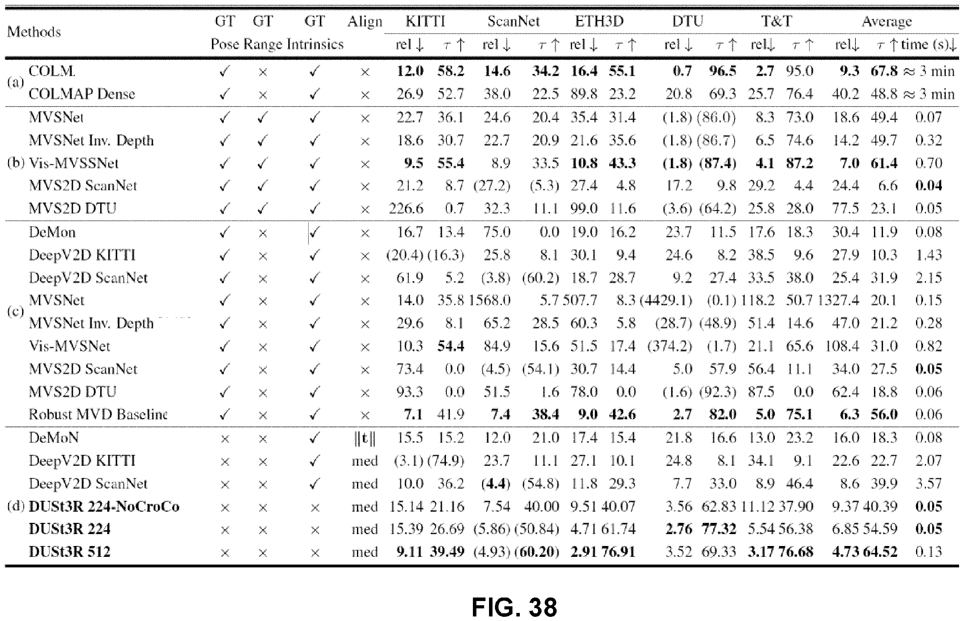

**Results.** In the table in Figure 38, it can be observed that DUSt3R achieves state-of-the-art accuracy on ETH-3D and outperforms most recent state-of-the-art methods overall, even those using groundtruth camera poses. Timewise, the disclosed approach is also much faster than the traditional COLMAP pipeline. This showcases the applicability of the disclosed method on a large variety of domains, either indoors, outdoors, small scale or large scale scenes, while not having been trained on the test domains, except for the ScanNet test set, since the train split is part of the Habitat dataset.

### Section B.4.5 3D Reconstruction

Finally, the quality of the disclosed full reconstructions obtained after the global alignment procedure described in Section B.3.4 is measured. Again it is emphasized that the disclosed method is the first one to enable global unconstrained MVS, in the sense that there is no prior knowledge regarding the camera intrinsic and extrinsic parameters. In order to quantify the quality of the disclosed reconstructions, the predictions are aligned to the ground-truth coordinate system. This is done by fixing the parameters as constants in Section B.3.4. This leads to consistent 3D reconstructions expressed in the coordinate system of the ground-truth.

**Datasets and metrics.** The disclosed predictions are evaluated on the DTU dataset. The disclosed network is applied in a zero-shot setting, i.e., the disclosed model as is applied without performing any finetuning on the DTU training set. The table in Figure 36 shows averaged accuracy, averaged completeness and overall averaged error metrics reported as provided by the authors of the benchmarks. The accuracy for a point of the reconstructed shape is defined as the smallest Euclidean distance to the ground-truth, and the completeness of a point of the ground-truth as the smallest Euclidean distance to the reconstructed shape. The overall is the mean of both previous metrics.

**Results.** The disclosed method may not reach the accuracy levels of the best methods. However, those methods all leverage GT (Ground Truth) poses and train specifically on the DTU training set whenever applicable. Furthermore, best results on this task are usually obtained via sub-pixel accurate triangulation, requiring the use of explicit camera parameters, whereas the disclosed approach relies on regression, which is known to be less accurate. Yet, without prior knowledge about the cameras, an average accuracy of 2.7mm is reached, with a completeness of 0.8mm, for an overall average distance of 1.7mm. This level of accuracy is believed to be of great use in practice, considering the plug-and-play nature of the disclosed approach.

**Section B.4.6 Ablations**

The impact of the CroCo pretraining and image resolution on DUSt3R's performance was abated. Results are set forth in the tables in Figures 33, 34, 35 and 38 for the tasks mentioned above. Overall, the observed consistent improvements suggest the crucial role of pretraining and high resolution in modern data-driven approaches.

**Section B.5 Conclusion**

A novel paradigm has been presented to solve not only 3D reconstruction in-the-wild without prior information about scene nor cameras, but a whole variety of 3D vision tasks as well.

**Section B.6 Results and Extensions**

This Section provides additional details and qualitative results of DUSt3R. First, Section B.6.1 presents qualitative pairwise predictions of the presented architecture on challenging real-life datasets. This Section also contains the description of the video accompanying this material. Extended related works are set forth in Section B.6.2, encompassing a wider range of methodological families and geometric vision tasks. Section B.6.3 provides auxiliary ablative results on multi-view pose estimation, that are not set out in Section B.4. Then results are reported in Section B.6.4 on an experimental visual localization task, where the camera intrinsics are unknown. Finally, training and data augmentation procedures are detailed in Section B.6.5.

**Section B.6.1 Qualitative results**

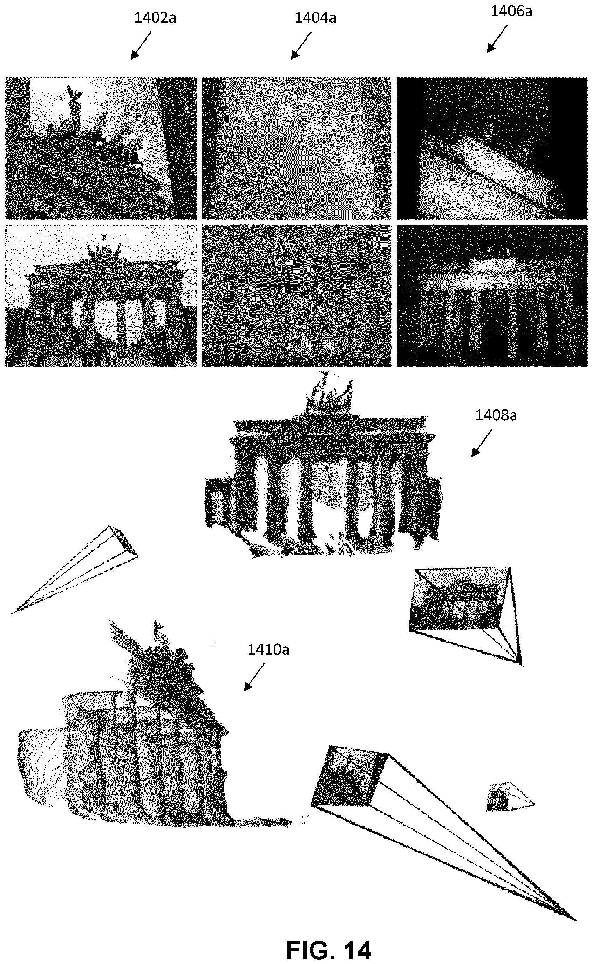

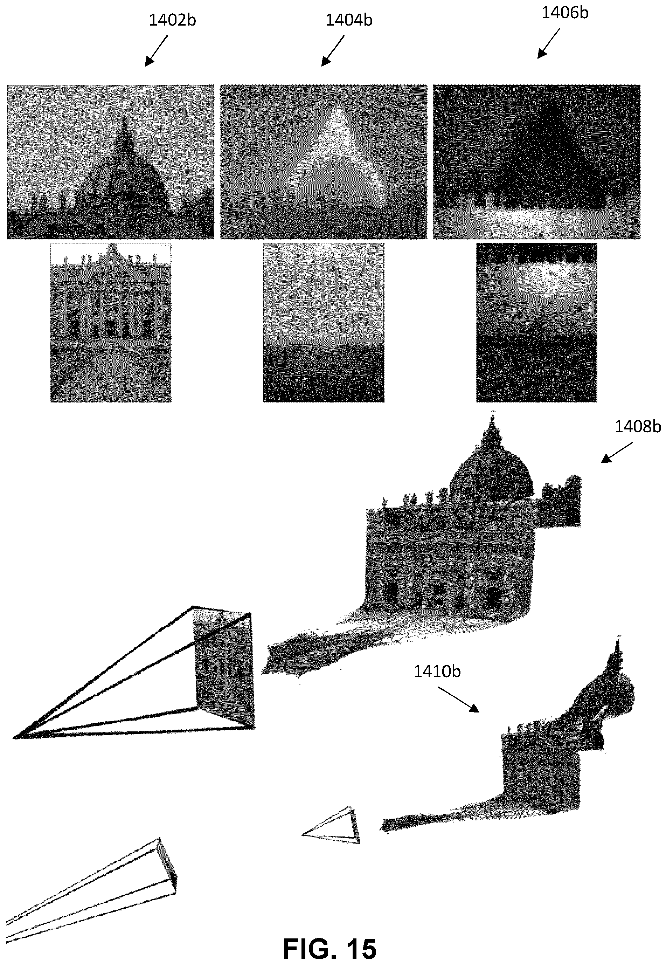

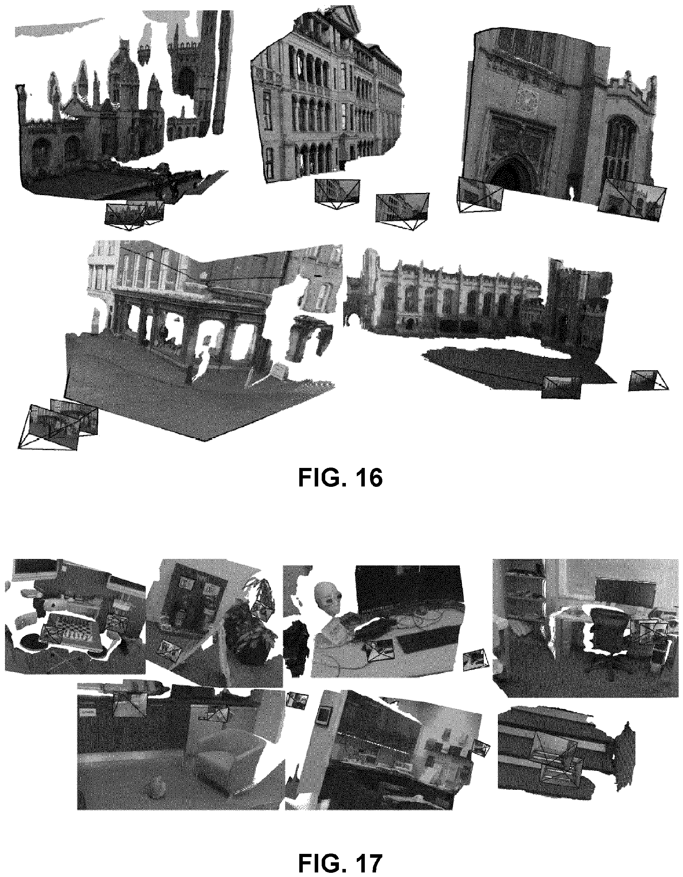

**Point-cloud visualizations.** Some visualization of DUSt3R's pairwise results are presented in Figures 14 to 18. Figures 14 and 15 are examples of 3D reconstruction of an unseen MegaDepth scene from two images 1402; this is the raw output of the DUSt3R network (i.e., the output depthmaps 1404 and confidence maps 1406, as well as two different viewpoints on the pointclouds 1408 and 1410). The scenes in Figures 16 and 17 show raw output of the DUSt3R network (i.e., new viewpoints on the pointclouds, where camera parameters may be recovered from the raw pointmaps) from five scenes in Figure 16 (i.e., Kings College (top-left), Old Hospital (top-middle), St Marys Church (top-right), Shop Façade (bottom-left), Great Court (bottom-right) and seven scenes in Figure 17 (i.e., Chess (top-left), Fire (top-middle-left), Heads (top-middle-right), Office (top-right), Pumpkin (bottom-left), Kitchen (bottom-middle, Stairs (bottom-right)).

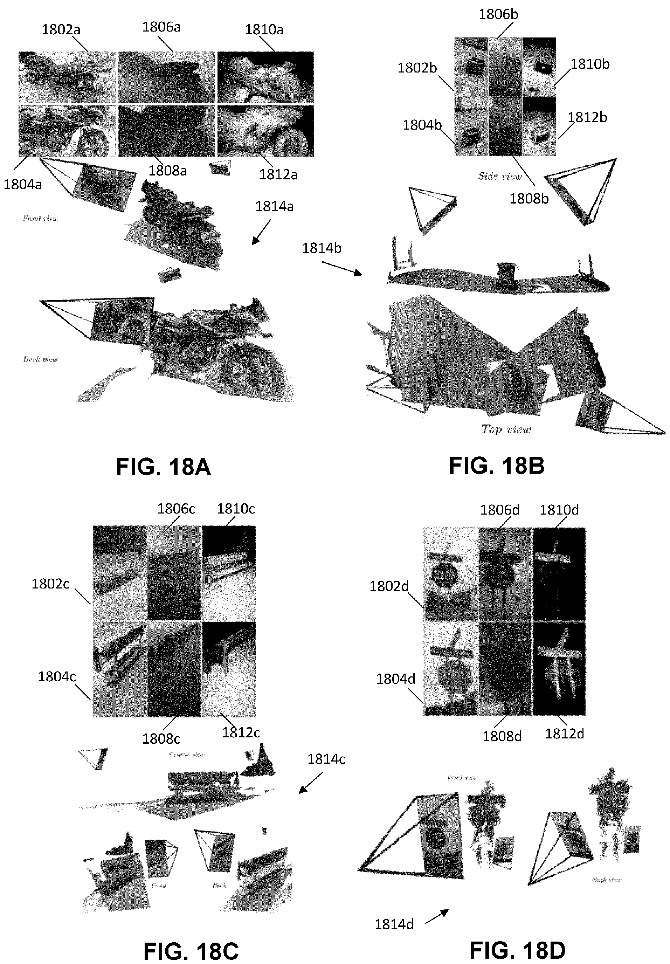

Figures 18A, 18B, 18C and 18D show examples of 3D reconstructions from nearly opposite viewpoints for each of 4 cases (respectively, a motorcycle, a toaster, a bench, and a stop sign); in each of the Figures are shown: two input images 1802 and 1804, corresponding depthmaps 1806 and 1808 output by the DUSt3R network, corresponding confidence maps 1810 and 1812 output by the DUSt3R network, and different views on the colored point-clouds 1814. As with other examples, camera parameters may be recovered from raw pointmaps. Further, these examples show that the DUSt3R network handles drastic viewpoint changes without apparent issues, even when there is almost no overlapping visual content between images (e.g., for the stop sign and motorcycle, which example cases are randomly chosen from the set of unseen sequences).

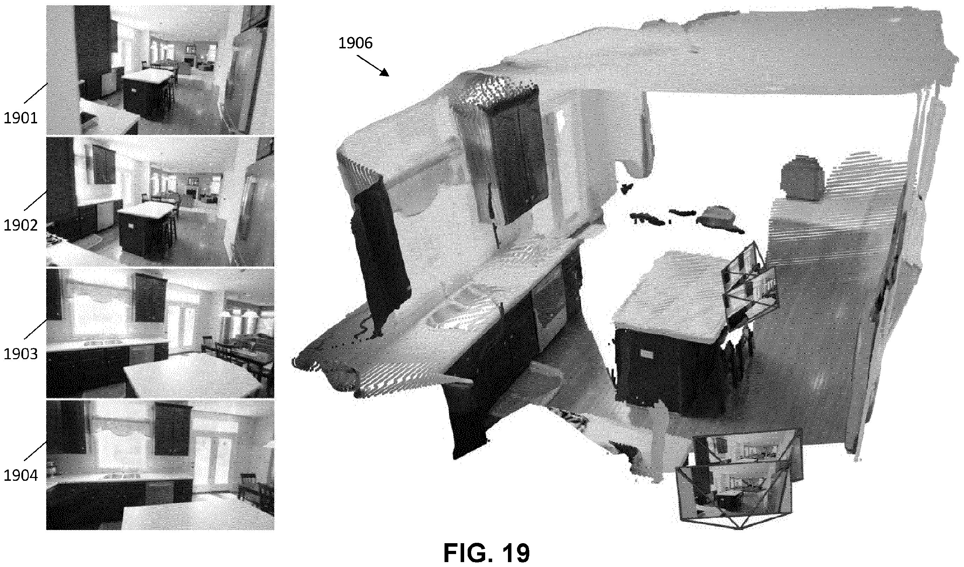

Note the scenes in Figures 14 to 18 were never seen during training and were not cherry-picked. Also, these results were not post-processed, except for filtering out low-confidence points (based on the output confidence) and removing sky regions for the sake of visualization (i.e., these figures accurately represent the raw output of DUSt3R). Overall, the proposed network is able to perform highly accurate 3D reconstruction from just two images. Figure 19 is a reconstruction example from four random frames 1901 to 1904 of an indoor sequence, In Figure 19, the output 1906 of the DUSt3R network is shown after the global alignment stage (i.e., the resulting point-cloud and the recovered camera intrinsics and poses). In this case, the DUSt3R network has processed all pairs of the 4 input images, and outputs 4 spatially consistent pointmaps along with the corresponding camera parameters. Note that, for the case of image sequences captured with the same camera, the fact that camera intrinsics must be identical for every frame (i.e., all intrinsic parameters are optimized independently) is never enforced. This remains true for all results reported in Section B.6 and in Section B.4 (e.g., on multi-view pose estimation with the CO3Dv2 and RealEstate10K datasets).

**Section B.6.2 Additional Related Works**

Section B.2 covered some (but not all) of the related works. Because this work covers a large variety of geometric tasks, Section B.2 is completed in this Section with additional topics.

**Implicit Camera Models.** The disclosed approach does not explicitly output camera parameters. Likewise, there are several works aiming to express 3D shapes in a canonical space that is not directly related to the input viewpoint. Shapes can be stored as occupancy in regular grids, octree structures, collections of parametric surface elements, point clouds encoders, free-form deformation of template meshes or per-view depthmaps. While these approaches arguably perform classification and not actual 3D reconstruction, all-in-all, they work only in very constrained setups, usually on ShapeNet (see Chang et al., "ShapeNet: An Information-Rich 3D Model Repository", in arXiv:1512.03012, 2015) and have trouble generalizing to natural scenes with non object-centric views. The question of how to express a complex scene with several object instances in a single canonical frame had yet to be answered: in this disclosure, the reconstruction is expressed in a canonical reference frame, but due to the disclosed scene representation (pointmaps), a relationship is preserved between image pixels and the 3D space, and thus 3D reconstruction may be performed consistently.

**Dense Visual SLAM.** In visual SLAM, early works on dense 3D reconstruction and ego-motion estimation utilized active depth sensors. Recent works on dense visual SLAM from RGB video stream are able to produce high-quality depth maps and camera trajectories, but they inherit the traditional limitations of SLAM, e.g., noisy predictions, drifts and outliers in the pixel correspondences. To make the 3D reconstruction more robust, R3D3 (see Schmied et al., "R3D3: Dense 3D Reconstruction of Dynamic Scenes from Multiple Cameras", in arXiv:2308.14713, 2023) jointly leverages multi-camera constraints and monocular depth cues. Most recently, GO-SLAM (see Zhang et al., "GO-SLAM: Global optimization for consistent 3d instant reconstruction", in ICCV, pp. 3727-3737, October 2023) proposed real-time global pose optimization by considering the complete history of input frames and continuously aligning all poses that enables instantaneous loop closures and correction of global structure. Still, all SLAM methods assume that the input consists of a sequence of closely related images, e.g., with identical intrinsics, nearby camera poses and small illumination variations. In comparison, the disclosed approach handles completely unconstrained image collections.

**3D reconstruction from implicit models** has undergone advancements, largely fueled by the integration of neural networks. Earlier approaches utilize Multi-Layer Perceptron (MLP) to generate continuous surface outputs with only posed RGB images. Innovations like NeRF (see Mildenhall et al, "NeRF: Representing Scenes as Neural Radiance Fields for View Synthesis", in ECCV, 2020) and its followups have pioneered density-based volume rendering to represent scenes as continuous 5D functions for both occupancy and color, showing exceptional ability in synthesizing novel views of complex scenes. To handle large-scale scenes, recent approaches introduce geometry priors to the implicit model, leading to much more detailed reconstructions. In contrast to the implicit 3D reconstruction, this disclosure focuses on the explicit 3D reconstruction and showcases that DUSt3R can not only have detailed 3D reconstruction but also provide rich geometry for multiple downstream 3D tasks.

**RGB-pairs-to-3D** takes its roots in two-view geometry and is considered as a stand-alone task or an intermediate step towards the multi-view reconstruction. This process typically involves estimating a dense depth map and determining the relative camera pose from two different views. Recent learning-based approaches formulate this problem either as pose and monocular depth regression or pose and stereo matching. The ultimate goal is to achieve 3D reconstruction from the predicted geometry. In addition to reconstruction tasks, learning from two views also gives an advance in unsupervised pretraining; the recently proposed CroCo introduces a pretext task of cross-view completion from a large set of image pair to learn 3D geometry from unlabeled data and to apply this learned implicit representation to various downstream 3D vision tasks. The disclosed method draws inspiration from the CroCo pipeline, but diverges in its application. Instead of focusing on model pretraining, the disclosed approach leverages this pipeline to directly generate 3D pointmaps from the image pair. In this context, the depth map and camera poses are only by-products in the disclosed pipeline.

**Section B.6.3 Multi-view Pose Estimation**

Additional results are included for the multi-view pose estimation task from Section B.4.2. Namely, the pose accuracy is computed for a smaller number of input images (they are randomly selected from the entire test sequences). The table in Figure 37 reports performance of the disclosed methods and compares with the state of the art. Numbers for state-of-the-art methods are acquired from the recent PoseDiffusion publication's tables and plots, hence some numbers are only approximate. The disclosed method consistently outperforms all other methods on the CO3Dv2 dataset by a large margin, even for small number of frames. As can be observed in Figure 18, DUSt3R handles opposite viewpoints (i.e., nearly 180° apart) seemingly without much trouble. In the end, DUSt3R obtains relatively stable performance, regardless of the number of input views. When comparing with PoseDiffusion on RealEstate10K, performances are reported with and without training on the same dataset. Note that DUSt3R's training data includes a small subset of CO3Dv2 (50 sequences for each category are used, i.e., less than 7% of the full training set) but no data from RealEstate10K whatsoever.

An example of reconstruction on RealEstate10K is shown in Figure 19. The disclosed network outputs a consistent pointcloud despite wide baseline viewpoint changes between the first and last pairs of frames.

**Section B.6.4 Visual localization**

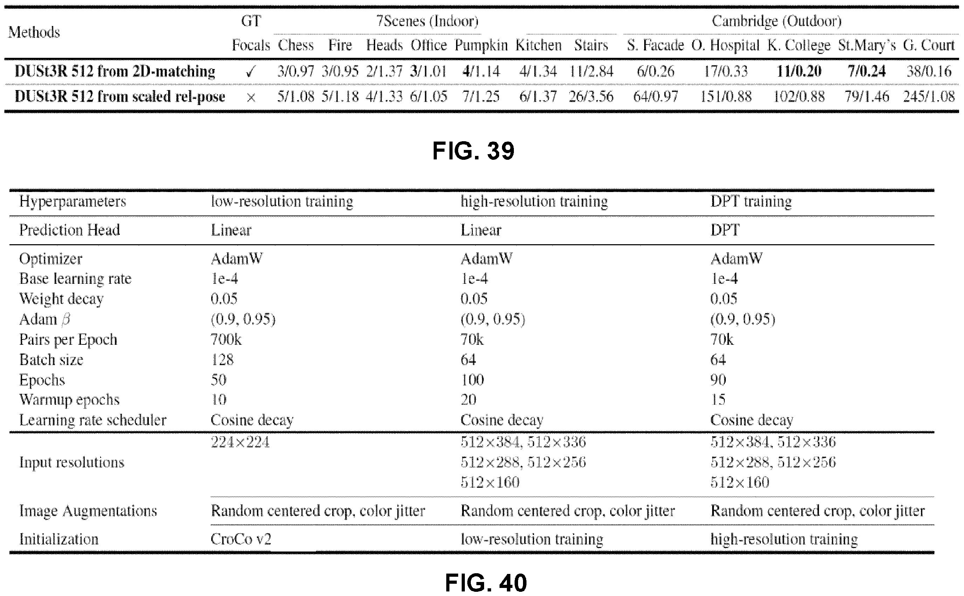

Additional results of visual localization on the 7-scenes and Cambridge-Landmarks datasets are included herein. Namely, experiments with a scenario where the focal parameter of the querying camera is unknown were performed. In this case, the query image and a database image are input into DUSt3R, and an un-scaled 3D reconstruction is output. The resulting pointmap is then scaled according to the ground-truth pointmap of the database image, and extract the pose as described in Section B.3.3. The table in Figure 39 shows that this method performs reasonably well on the 7-scenes dataset, where the median translation error is on the order of a few centimeters. On the Cambridge-Landmarks dataset, however, considerably larger errors are obtained. After inspection, it is found that the ground-truth database pointmaps are sparse, which prevents any reliable scaling of the disclosed reconstruction. On the contrary, 7-scenes provides dense ground-truth pointmaps. Further work believed to be necessary for "in-the-wild" visual-localization with unknown intrinsics.

**Section B.6.5 Training**

**Section B.6.5.1 Training data**

**Ground-truth pointmaps.** Ground-truth pointmaps $\overline{X}^{1,1}$ and $\overline{X}^{2,1}$ for images $I^1$ and $I^2$, respectively, from Equation B2 in Section B.3.2 are obtained from the ground-truth camera intrinsics $K_1, K_2 \in R^{3\times3}$, camera poses $P_1$, $P_2 \in R^{3\times4}$ and depthmaps $D_1, D_2 \in R^{W\times H}$. Specifically, both pointmaps are projected in the reference frame of P1:

$$\overline{X}^{1,1} = K_1^{-1}([U;V;\mathbf{1}] \cdot D_1) \tag{B7}$$

$$\overline{X}^{2,1} = P_1 P_2^{-1} h(\overline{X}^{2,2}) = P_1 P_2^{-1} h(K_2^{-1}([U;V;\mathbf{1}] \cdot D_2)) \tag{B8}$$

where X·Y denotes element-wise multiplication, U, V $\in R^{W\times H}$ are the x, y pixel coordinate grids and h is the mapping to homogeneous coordinates, see Equation B1 in Section B.3.

**Relation between depthmaps and pointmaps.** As a result, the depth value $D_{i,j}^1$ at pixel (i, j) in image $I^1$ can be recovered as

$$D_{i,j}^1 = \overline{X}_{i,j,2}^{1,1} . \tag{B9}$$

Therefore, all depthmaps set forth in Section B are extracted from DUSt3R's output as $X_{:,:,2}^{1,1}$ and $X_{:,:,2}^{2,2}$ for images $I^1$ and $I^2$, respectively.

**Dataset mixture.** DUSt3R is trained with a mixture of eight datasets: Habitat, ARKitScenes, MegaDepth, Static Scenes 3D, Blended MVS, ScanNet++, CO3Dv2 and Waymo. These datasets feature diverse scene types: indoor, outdoor, synthetic, real-world, object-centric, etc. Table B-1 shows the number of extracted pairs in each dataset (i.e., the dataset mixture and sample sizes for DUSt3R training), which amounts to 8.5M in total.

**Table B-1**

| Datasets | Type | N Pairs |
|---|---|---|
| Habitat | Indoor / Synthetic | 1000k |
| CO3Dv2 | Object-centric | 941k |
| ScanNet++ | Indoor / Real | 224k |
| ArkitScenes | Indoor / Real | 2040k |
| Static Thing 3D | Object / Synthetic | 337k |
| MegaDepth | Outdoor / Real | 1761k |
| BlendedMVS | Outdoor / Synthetic | 1062k |
| Waymo | Outdoor / Real | 1100k |

**Data augmentation.** Standard data augmentation techniques are used herein, namely random color jittering and random center crops, the latter being a form of focal augmentation. Indeed, some datasets are captured using a single or a small number of camera devices, hence many images have practically the same intrinsic parameters. Centered random cropping thus helps in generating more focal lengths. Crops are centered so that the principal point is always centered in the training pairs. At test time, little impact is observed on the results when the principal point is not exactly centered. During training, each training pair ($I^1$, $I^2$) as well as its inversion ($I^2$, $I^1$) are systematically fed to help generalization. Naturally, tokens from these two pairs do not interact.

**Section B.6.5.2 Training hyperparameters**

The detailed hyperparameter settings used for training DUSt3R is reported in the table in Figure 50.

**Section C. MASt3R: Matching And Stereo 3D Reconstruction**

Image matching is a core component of all best-performing algorithms and pipelines in 3D vision. Yet despite matching being fundamentally a 3D problem, intrinsically linked to camera pose and scene geometry, it is typically treated as a 2D problem. This makes sense as the goal of matching is to establish correspondences between 2D pixel fields, but also seems like a potentially hazardous choice. This disclosure takes a different stance and propose to cast matching as a 3D task. This Section discloses another embodiment of the DUSt3R architecture referred to as the MASt3R architecture. Based on pointmap regression, the DUSt3R architecture displays impressive robustness in matching views with extreme viewpoint changes, yet with limited accuracy. The MASt3R architecture aims to improve the matching capabilities of such an approach while preserving its robustness. More specifically, the MASt3R architecture augments the DUSt3R network with a new head that outputs dense local features (i.e., local descriptors), trained with an additional matching loss. Further, the MASt3R architecture address the issue of quadratic complexity of dense matching, which becomes prohibitively slow for downstream applications if not treated carefully. In addition, the MASt3R architecture uses a fast reciprocal matching scheme that not only accelerates matching by orders of magnitude, but also comes with theoretical guarantees and, lastly, yields improved results. Extensive experiments show that the MASt3R architecture outperforms the state of the art on multiple matching tasks. In particular, it outperforms known methods by 30% (absolute improvement) in Virtual Correspondence Reprojection Error (VCRE) area under the curve (AUC) on the extremely challenging Map-free localization dataset.

**Section C.1 Introduction**

Being able to establish correspondences between pixels across different images of the same scene, denoted as image matching, constitutes a core component of all 3D vision applications, spanning mapping, localization, navigation, photogrammetry and autonomous robotics in general. State-of-the-art methods for visual localization, for instance, overwhelmingly rely upon image matching during the offline mapping stage, e.g., using COLMAP, as well as during the online localization step, typically using PnP. This embodiment, as the others, focuses on this core task and aims at producing, given two images, a list of pairwise correspondences, denoted as matches. In particular, this embodiment seeks to output highly accurate and dense matches that are robust to viewpoint and illumination changes because these are, in the end, the limiting factor for real-world applications.

In the past, matching methods have traditionally been cast into a three-steps pipeline consisting of first extracting sparse and repeatable keypoints, then describing them with locally invariant features, and finally pairing the discrete set of keypoints by comparing their distance in the feature space. This pipeline has several merits: keypoint detectors are precise under low-to-moderate illumination and viewpoint changes, and the sparsity of keypoints makes the problem computationally tractable, enabling very precise matching in milliseconds whenever the images are viewed under similar conditions. This explains the success and persistence of SIFT (see David G. Lowe, "Distinctive image features from scale-invariant keypoints", in IJCV, 2004) in 3D reconstruction pipelines like COLMAP.

Unfortunately, keypoint-based methods, by reducing matching to a bag-of-keypoint problem, discard the global geometric context of the correspondence task. This makes them especially prone to errors in situation with repetitive patterns or low-texture areas, which are in fact ill-posed for local descriptors. One way to remedy this is to introduce a global optimization strategy during the pairing step, typically leveraging some learned priors about matching, which SuperGlue and similar methods successfully implemented. However, leveraging global context during matching might be too late, if keypoints and their descriptors do not already encode enough information. For this reason, another direction is to consider dense holistic matching, i.e., avoiding keypoints altogether, and matching the entire image at once. This recently became possible with the advent of mechanisms for global attention (see Vaswani et al.). Such approaches, like LoFTR (see Sun et al., "LoFTR: Detector-Free Local Feature Matching with Transformers." CVPR, 2021, which is hereinafter referred to as "LoFTR"), thus consider images as a whole and the resulting set of correspondences is dense and more robust to repetitive patterns and low-texture areas. This led to new state-of-the-art results on the most challenging benchmarks, such as the Map-free localization benchmark (see Arnold et al., "Map-Free Visual Relocalization: Metric Pose Relative to a Single Image", in ECCV, 2022).

Nevertheless, even a top-performing methods like LoFTR score a relatively disappointing VCRE precision of 34% on the Map-free localization benchmark. This may be because, so far, practically all matching approaches have been treating matching as a 2D problem in image space. In reality, the formulation of the matching task is intrinsically and fundamentally a 3D problem: pixels that correspond are pixels that observe the same 3D point. Indeed, 2D pixel correspondences and a relative camera pose in 3D space are two sides of the same coin, as they are directly related by the epipolar matrix. While DUSt3R was initially designed for 3D reconstruction rather than matching, and for which matches are only a by-product of the 3D reconstruction, and that correspondences obtained naively from this 3D output currently outperform other keypoint- and matching-based methods on the Map-free benchmark provides additional evidence this reasoning is correct.

While the DUSt3R architecture may be used for matching, it is relatively imprecise, despite being extremely robust to viewpoint changes. To remedy this limitation, the MASt3R architecture attaches a second head that regresses dense local feature maps, that is trained with an InfoNCE loss (see Oord et al., "Representation Learning with Contrastive Predictive Coding" arxiv.org/abs/1807.03748, 2018). As set forth below, the MASt3R architecture outperforms the DUSt3R architecture on multiple benchmarks. A coarse-to-fine matching scheme during which matching is performed at several scales is used to obtain pixel-accurate matches. Each matching step involves extracting reciprocal matches from dense feature maps which, perhaps counter-intuitively, is by far more time consuming than computing the dense feature maps themselves. The solution set forth in this Section is an algorithm for finding reciprocal matches that is almost two orders of magnitude faster while improving pose estimation quality.

To summarize, this Section C sets forth in detail the MASt3R architecture, a 3D-aware matching approach building on the DUSt3R architecture, that outputs local feature maps, which advantageously enable accurate and robust matching, and which advantageously outperforms the state-of-the-art on several absolute and relative pose localization benchmarks. In addition, this Section sets forth a coarse-to-fine matching scheme associated with a fast-matching algorithm that may be used with high-resolution images.

### Section C.2 Background

**Keypoint-based matching** has been a cornerstone of computer vision. Matching is carried out in three distinct stages: keypoint detection, locally invariant description and nearest-neighbor search in descriptor space. Departing from the former handcrafted methods like SIFT (see Lowe 2004), modern approaches have been shifting towards learning-based data-driven schemes for detecting keypoints and describing them or both at the same time. Overall, keypoint-based approaches are predominant in many benchmarks, underscoring their enduring value in tasks requiring high precision and speed. One notable issue, however, is they reduce matching to a local problem, i.e., discarding its holistic nature. SuperGlue and similar approaches thus propose to perform global reasoning in the last pairing step leveraging stronger priors to guide matching, yet leaving the detection and description local. While successful, it is still limited by the local nature of keypoints and their inability to remain invariant to strong viewpoint changes.

**Dense matching.** In contrast to keypoint-based approaches, semi-dense and dense approaches offer a different paradigm for establishing image correspondences, considering all possible pixel associations. Very reminiscent of optical flow approaches, they are usually employing coarse-to-fine schemes to decrease computational complexity. Overall, these methods aim to consider matching from a global perspective, at the cost of increased computational resources. Dense matching has proven effective in scenarios where detailed spatial relationships and textures are critical for understanding scene geometry, leading to top performance on many benchmarks that are especially challenging for keypoints due to extreme changes in viewpoint or illumination. These approaches still cast matching as a 2D problem, which limits their usage for visual localization.

**Camera Pose estimation** techniques vary widely, but the most successful strategies, for speed, accuracy and robustness trade-off, are fundamentally based on pixel matching. The constant improvement of matching methods has fostered the introduction of more challenging camera pose estimation benchmarks, such as Aachen Day-Night (see Zhang et al., "Reference Pose Generation for Long-Term Visual Localization via Learned Features and View Synthesis", in IJCV, 2021), InLoc (see Taira et al., "InLoc: Indoor Visual Localization with Dense Matching and View Synthesis", in PAMI, 2019), CO3D (an earlier version of CO3Dv2) or Map-free, all featuring strong viewpoint and/or illumination changes. The most challenging of them is undoubtedly Map-free (see Arnold et al.), a localization dataset for which a single reference image is provided but no map, with viewpoint changes up to 180°.

**Grounding matching in 3D** thus becomes a crucial necessity in these challenging conditions where classical 2D-based matching utterly falls short. Leveraging priors about the physical properties of the scene in order to improve accuracy or robustness has been widely explored in the past, but most previous works settle for leveraging epipolar constraints for semi-supervised learning of correspondences without any fundamental change. Toft et al. ("Single-Image Depth Prediction Makes Feature Matching Easier", in ECCV, 2020) proposes to improve keypoint descriptors by rectifying images with perspective transformations obtained from a known monocular depth predictor. Diffusion for pose or rays, although not matching approaches strictly speaking, show promising performance by incorporating 3D geometric constraints into their pose estimation formulation.

### Section C.3 The MASt3R Architecture

Given two images $I^1$ and $I^2$, respectively captured by two cameras $C^1$ and $C^2$ with unknown parameters, a set of pixel correspondences $\{(i,j)\}$ are recovered where $i, j$ are pixels $i = (u_i, v_i), j = (u_j, v_j) \in \{1, ..., W\} \times \{1, ..., H\}$, with $W, H$ being the respective width and height of the images. It is assumed for the purpose explanation that the images have the same resolution for the sake of simplicity, yet without loss of generality, namely that the MASt3R network may handle image pairs of variable aspect ratios.

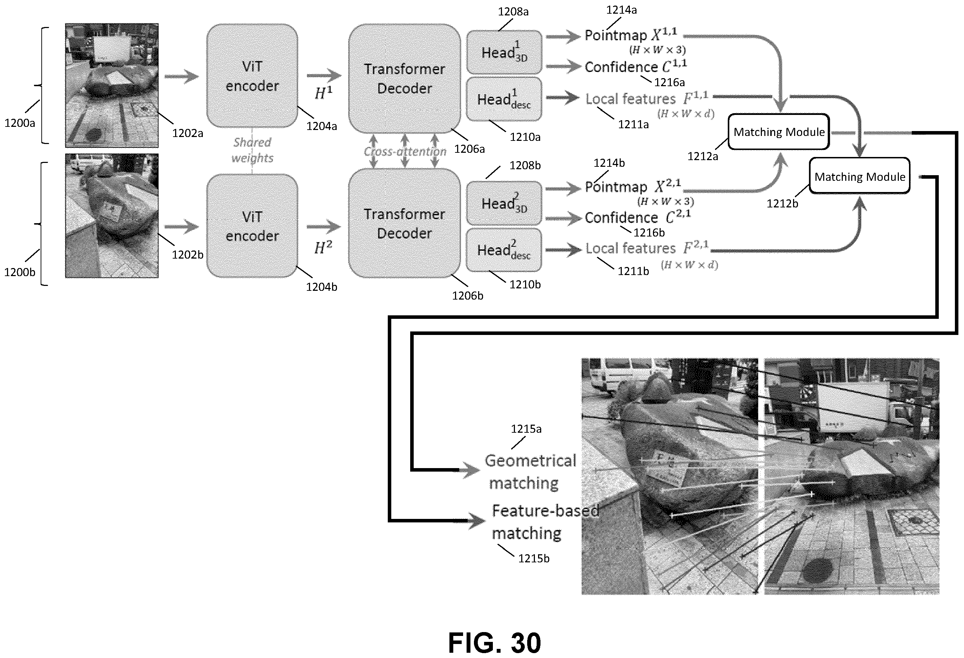

An example embodiment of the MASt3R architecture, illustrated in Figure 30, aims at jointly performing 3D scene reconstruction and matching given two input images. It is based on the DUSt3R architecture, which is discussed in detail Sections A.3 and B, is summarized in Section C.3.1 before presenting the matching head and its corresponding loss of the MASt3R architecture in Section C.3.2, as well as, an optimized matching scheme for dense feature maps, in Section C.3.3, that is used for coarse-to-fine matching in Section C.3.4.

### Section C.3.1 The DUSt3R framework

The DUSt3R architecture, which is discussed in detail Sections A.3 and B, jointly solves the calibration and 3D reconstruction problems from images alone. A transformer-based network predicts a *local* 3D reconstruction given two input images, in the form of two dense 3D point-clouds $X^{1,1}$ and $X^{2,1}$, denoted as *pointmaps,* where a pointmap $X^{a,b} \in \mathbb{R}^{H \times W \times 3}$ represents a dense 2D-to-3D mapping between each pixel $i = (u, v)$ of the image $I^a$ and its corresponding 3D point $X^{a,b}_{u,v} \in \mathbb{R}^3$ expressed in the coordinate system of camera $C^b$. By regressing two pointmaps $X^{1,1}, X^{2,1}$ expressed in the same coordinate system of camera $C^1$, the DUSt3R architecture effectively solves the joint calibration and 3D reconstruction problem. In the case where more than two images are provided, a second step of global alignment merges all pointmaps in the same coordinate system. Note that, in this Section, this step is not used given the example discussed herein is limited to the binocular case. Inference for the binocular case is now explained in greater detail with reference to Figure 30.

Both images 1202 are first encoded in a Siamese manner with a ViT encoder 1204 (see Dosovitskiy et al.), yielding two representations $H^1$ and $H^2$:

$$H^1 = \text{Encoder}(I^1). \qquad\qquad (C1)$$

$$H^2 = \text{Encoder}(I^2). \qquad\qquad (C2)$$

Then, two intertwined decoders 1206 process these representations jointly, exchanging information via cross-attention to 'understand' the spatial relationship between viewpoints and the global 3D geometry of the scene. The new representations augmented with this spatial information are denoted as $H'^1$ and $H'^2$:

$$H'^1, H'^2 = \text{Decoder}(H^1, H^2). \qquad\qquad (C3)$$

Finally, two prediction heads 1208 regress the final pointmaps $X$ and confidence maps C from the concatenated representations output by the encoder and decoder:

$$X^{1,1}, C^1 = \text{Head}^1_{3D}([H^1, H'^1]), \qquad\qquad (C4)$$

$$X^{2,1}, C^2 = \text{Head}^2_{3D}([H^2, H'^2]), \qquad\qquad (5)$$

**Regression loss.** The DUSt3R network is trained in a fully-supervised manner using a regression loss:

$$\ell_{\text{regr}}(v, i) = \left\| \frac{1}{z} X_i^{v,1} - \frac{1}{\hat{z}} \hat{X}_i^{v,1} \right\|, \qquad (C6)$$

where $v \in \{1,2\}$ is the view and $i$ is a pixel for which the ground-truth 3D point $\hat{X}^{v,1} \in \mathbb{R}^3$ is defined. In one formulation, normalizing factors $z, \hat{z}$ may be introduced to make the reconstruction invariant to scale. These are simply defined as the mean distance of all valid 3D points to the origin.

**Scale-dependent predictions.** Alternative to scale-invariant predictions, which may not necessarily be desirable, as some potential use-cases like map-free visual localization necessitates scale-dependent (e.g., metric-scale) predictions. In this alternate embodiment, the regression loss is modified to ignore normalization for the predicted pointmaps when the ground-truth pointmaps are known to be scale-dependent.

That is, in the case of scale dependence $z$ and $\hat{z}$ are set such that $z := \hat{z}$ whenever ground-truth is scale-dependent (e.g., metric-scale), so that:

$$\ell_{\text{regr}}(v, i) = \frac{\left\| X_i^{v,1} - \hat{X}_i^{v,1} \right\|}{\hat{z}}. \qquad (C7)$$

As in Section B.3.2 discussing the DUSt3R architecture, the final confidence-aware regression loss $\mathcal{L}_{\text{conf}}$ is defined as:

$$\mathcal{L}_{\text{conf}} = \sum_{v \in \{1,2\}} \sum_{i \in D^v} C_i^{v,1} \ell_{\text{regr}}(v, i) - \alpha \log C_i^{v,1}. \qquad (C8)$$

**Section C.3.2 Matching Prediction Head and Loss**

To obtain reliable pixel correspondences from pointmaps, a standard solution is to look for reciprocal matches in some invariant feature space (see Wu, Sankaranarayanan, and Chellappa, "In Situ Evaluation of Tracking Algorithms Using Time Reversed Chains", in CVPR 2007). While such a scheme works well with the DUSt3R architecture's regressed pointmaps (*i.e.*, in a 3-dimensional space) even in presence of extreme viewpoint changes, it has been observed that the resulting correspondences are imprecise, yielding suboptimal accuracy. This may be a natural result (i) as regression is inherently affected by noise, and (ii) because the DUSt3R architecture was never explicitly trained for matching.

**Matching head.** For these reasons, a second descriptor head 1210 is added that outputs two dense feature maps $D^1$ and $D^2 \in \mathbb{R}^{H \times W \times d}$ of dimensional d:

$$D^1 = \text{Head}_{\text{desc}}^1([H^1, H'^1]), \qquad (C9)$$

$$D^2 = \text{Head}_{\text{desc}}^2([H^2, H'^2]), \qquad (C10)$$

In one embodiment, the descriptor head 1210 is a 2-layer MLP interleaved with a non-linear Gaussian Error Linear Unit (GELU) activation function (see Hendrycks et al., "Bridging Nonlinearities and Stochastic Regularizers with Gaussian Error Linear Units", in arXiv, 1606.08415, 2016), and each local feature is normalized to unit norm.

**Matching objective.** The matching objective is to encourage each local descriptor from one image to match with at most a single descriptor from the other image that represents the same 3D point in the scene. To this aim, the InfoNCE loss (see Oord et al.) is leveraged over the set of ground-truth correspondences $\widehat{\mathcal{M}} = \{(i,j) | \hat{X}_i^{1,1} = \hat{X}_j^{2,1}\}$ to define the matching loss $\mathcal{L}_{\text{match}}$ as:

$$\mathcal{L}_{\text{match}} = - \sum_{(i,j) \in \widehat{\mathcal{M}}} \log \frac{s_\tau(i,j)}{\sum_{k \in \mathcal{P}^1} s_\tau(k,j)} + \log \frac{s_\tau(i,j)}{\sum_{k \in \mathcal{P}^2} s_\tau(i,k)}, \qquad (C11)$$

with

$$s_\tau(i,j) = \exp\left[-\tau D_i^{1\mathsf{T}} D_j^2\right]. \qquad (C12)$$

Here, $\mathcal{P}^1 = \{i|(i,j) \in \widehat{\mathcal{M}}\}$ and $\mathcal{P}^2 = \{j|(i,j) \in \widehat{\mathcal{M}}\}$ denote the subset of considered pixels in each image and $\tau$ is a temperature hyper-parameter. Note that this matching objective is essentially a cross-entropy *classification* loss: contrary to regression in Equation C6, the network is only rewarded if it gets the correct pixel right, not a nearby pixel. This strongly encourages the network to achieve high-precision matching. Finally, both regression loss $\mathcal{L}_{\text{conf}}$ and matching loss $\mathcal{L}_{\text{match}}$ are combined to get the final training objective:

$$\mathcal{L}_{\text{total}} = \mathcal{L}_{\text{conf}} + \beta \mathcal{L}_{\text{match}} \qquad (C13)$$

where $\beta$ is a hyperparameter to balance the two losses.

**Section C.3.3 Fast reciprocal matching**

Given two predicted feature maps $D^1, D^2 \in \mathbb{R}^{H \times W \times d}$, (or pointmaps or combinations thereof) a set of reliable pixel correspondences are extracted by matching modules 1212 to perform tasks 1215 such as geometrical matching 1215a and feature-based matching 1215b, *i.e.*, mutual nearest neighbors of each other's:

$$\mathcal{M} = \{(i,j) \mid j = \text{NN}_2(D_i^1) \text{ and } i = \text{NN}_1(D_j^2)\}, \qquad (C14)$$

with

$$\text{NN}_A(D_j^B) = \arg\min_i \|D_i^A - D_j^B\|. \qquad (C15)$$

Unfortunately, naive implementation of reciprocal matching has a high computational complexity of $O(W^2 H^2)$, since every pixel from an image must be compared to every pixel in the other image. While optimizing the nearest-neighbor (NN) search is possible (*e.g.*, using K-D Trees), this kind of optimization becomes typically very inefficient in high dimensional feature space and, in all cases, orders of magnitude slower than the inference time of the MASt3R architecture to output $D^1$ and $D^2$.

**Fast matching.** In one embodiment, a fast matching approach based on subsampling may be performed by matching modules 1212. This embodiment is based on an iterated process that starts from an initial sparse set of $k$ pixels $U^0 = \{U_n^0\}_{n=1}^k$, typically sampled regularly on a grid in the first image $I^1$. Each pixel is then mapped to its NN on the second $I^2$, yielding $V^1$, and the resulting pixels are mapped back again to the first $I^1$ in the same way:

$$U^t \mapsto [\text{NN}_2(D_u^1)]_{u \in U^t} \equiv V^t \mapsto [\text{NN}_1(D_v^2)]_{v \in V^t} \equiv U^{t+1} \qquad (C16)$$

The set of reciprocal matches (those which form a cycle, *i.e.,*

$$\mathcal{M}_k^t = \{(U_n^t, V_n^t) \mid U_n^t =$$

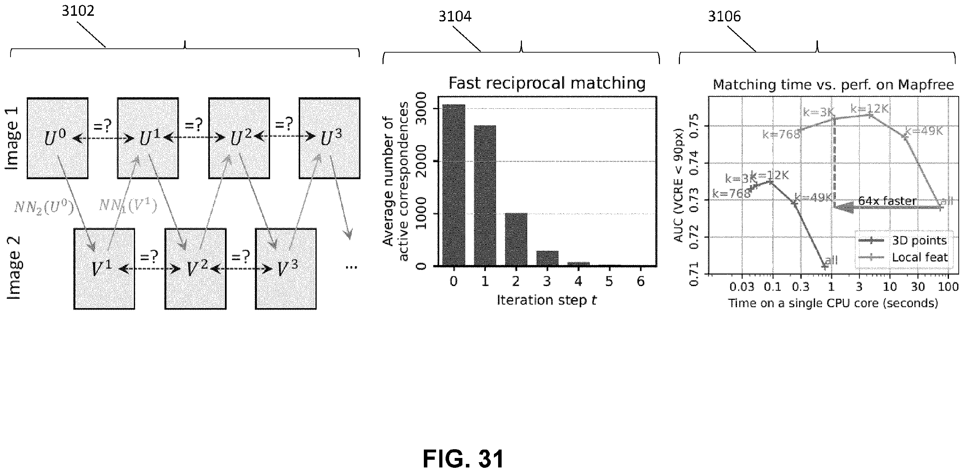

$U_n^{t+1}\}$) are then collected. For the next iteration, pixels that already converged are filtered out, *i.e.*, updating $U^{t+1} := U^{t+1} \setminus U^t$. Likewise, starting from $t = 1$, $V^{t+1}$ is verified and filtered, comparing it with $V^t$ in a similar fashion. Figure 31 shows graphs demonstrating fast reciprocal matching using the MASt3R network. The fast matching process is illustrated at 3102, starting from an initial subset of pixels $U^0$ and propagating it iteratively using nearest-neighbor (NN), where searching for cycles detect reciprocal correspondences and allows to accelerate the subsequent steps, by removing points that converged. This process is iterated a fixed number of times, until most correspondences converge to stable (reciprocal) pairs. Figure 31 at 3104 shows that the number of un-converged point $|U^t|$ rapidly decreases to zero after a few iterations, when the average number of remaining points in $U^t$ at iteration t = 1 ... 6, where after only 5 iterations, nearly all points have already converged to a reciprocal match. Finally at 3106 in Figure 31, the output set of correspondences consists of the concatenation of all reciprocal pairs $\mathcal{M}_k = \bigcup_t \mathcal{M}_k^t$ , which shows that the performance-versus time trade-off on the Map-free dataset, where performance actually improves, along with matching speed, when performing moderate levels of subsampling.

**Theoretical guarantees.** The overall complexity of the fast matching is $O(kWH)$, which is $WH/k$ » 1 times faster than the naive approach denoted *all,* as illustrated in Figure 31 (right). It is noted that the fast matching algorithm extracts a *subset* of the full set $\mathcal{M}$ , which is bounded in size by $|\mathcal{M}_k| \leq k$. This study of convergence guarantees of this algorithm and how it evinces outlier-filtering properties, explains why the end accuracy is actually *higher* than when using the full correspondence set $\mathcal{M}$ .

### Section C.3.4 Coarse-to-fine matching

Due to the quadratic complexity of attention w.r.t., the input image area ($W \times$ H), an embodiment of the MASt3R architecture handles images of 512 pixels in their largest dimension. Larger images would require more compute power to train, and ViTs do not generalize yet to larger test-time resolutions. As a result, high-resolution images (*e.g.*, 1 M pixel) needs to be downscaled to be matched, afterwards the resulting correspondences are upscaled back to the original image resolution. This can lead to some performance loss, sometimes sufficient to cause degradation in term of localization accuracy or reconstruction quality.

Coarse-to-fine matching is a standard technique to preserve the benefit of matching high-resolution images with a lower-resolution algorithm (see Teed and Deng 2020; Ranjan and Black 2017) explored for the for the MASt3R architecture. The procedure starts with performing matching on downscaled versions of the two images. The set of coarse correspondences obtained with subsampling k are denoted as $\mathcal{M}_k^0$ . Next, a grid of overlapping window crops $W^1$ and

$W^2 \in \mathbb{R}^{w \times 4}$ are generated on each full-resolution image independently. Each window crop measures 512 pixels in its largest dimension and contiguous windows overlap by 50%. Then enumerating the set of all window pairs $(w_1, w_2) \in W^1 \times$

$W^2$, a subset is selected that covers most of the coarse correspondences $\mathcal{M}_k^0$ . Specifically, window pairs are added one by one in a greedy fashion until 90% of correspondences are covered. Finally, matching for each window pair is performed independently:

$$D^{w_1}, D^{w_2} = \text{MASt3R}\left(I_{w_1}^1, I_{w_2}^2\right) \qquad\qquad (C17)$$

$$\mathcal{M}_k^{w_1, w_2} = \textit{fast\_reciprocal\_NN}(D^{w_1}, D^{w_2}) \qquad\qquad (C18)$$

Correspondences obtained from each window pair are finally mapped back to the original image coordinates and concatenated, thus providing dense full-resolution matches.

### Section C.4 Experimental results

This Section is organized as follows, initially the training procedure of MASt3R is detailed (Section C.4.1). Then, several tasks are evaluated, each time comparing with the state of the art, starting with visual camera pose estimation on the Map-Free Relocalization Benchmark (Section C.4.2), the CO3D and RealEstate datasets (Section C.4.3) and other standard Visual Localization benchmarks (Section C.4.4). Finally, MASt3R is leveraged for Dense Multi-View Stereo (MVS) reconstruction (Section C.4.5).

### Section C.4.1 Training Methods

**Training data.** The MASt3R network in one embodiment is trained with a mixture of 14 datasets: Habitat, ARKitScenes (see Dehghan et al.), Blended MVS, MegaDepth (Li and Snavely 2018), Static Scenes 3D, ScanNet++, CO3Dv2, Waymo (Sun et al. 2020), Map-free (see Arnold et al.), WildRgb (Xia et al., "RGBD Objects in the Wild: Scaling Real-World 3D Object Learning from RGB-D Videos", arxiv.org/abs/2401.12592, 2024), VirtualKitti (see Cabon et al., "Virtual KITTI 2." in arXiv 2001.10773, 2020), Unreal4K (Tosi et al., "SMD-Nets: Stereo Mixture Density Networks" in CVPR, 2021), TartanAir (see Wang et al., "TartanAir: A Dataset to Push the Limits of Visual Slam", in arXiv 2003.14338 2020) and an internal dataset. These datasets feature diverse scenes types: indoor, outdoor, synthetic, real-world, object-centric, etc. Among them, ten datasets have metric ground-truth. When image pairs are not directly provided with the dataset, they are extracted based on the method described in Weinzaepfel et al. 2023. Generally in one embodiment, known methods may be used in for retrieval and point matching to match and verify image pairs.

**Training.** As set forth above, the MASt3R model architecture is based on the DUSt3R model architecture, permitting the use of the same backbone (e.g., ViT-Large encoder and ViT-Base decoder). To benefit from the DUSt3R architecture's 3D matching abilities, the model weights are initialized to a DUSt3R checkpoint. During each epoch, 650k pairs equally distributed between all datasets are randomly sampled. The MASt3R network is trained for 35 epoch with a cosine schedule and initial learning rate set to 0.0001. Similar to the training for MASt3R, the image aspect ratio is randomized at training time, ensuring that the largest image dimension is 512 pixels. The local feature dimension is set to $d$ = 24 and the matching loss weight to $\beta$ = 1. It is important that the network sees different scales at training time, because coarse-to-fine matching starts from zoomed-out images to then zoom-in on details (see Section C.3.4). Consequently, aggressive data augmentation is performed during training in the form of random cropping. Image crops are transformed with a homography to preserve the central position of the principal point.

**Correspondence sampling.** To generate ground-truth correspondences necessary for the matching loss (Equation C11), the reciprocal correspondences between on the ground-truth 3D pointmaps $\hat{X}^{1,1} \leftrightarrow \hat{X}^{2,1}$ are found. Then 4096 correspondences per image pairs are randomly subsampled. If enough correspondences cannot be found, they are padded with random false correspondences so that the likelihood of finding a true match remains constant.

**Fast nearest neighbors.** For fast reciprocal matching disclosed in Section C.3.3, the nearest neighbor function NN($x$) from Equation C15 is implemented differently depending on the dimension of $x$. When matching 3D points $x \in \mathbb{R}^3$, NN(x) is implemented using K-d trees (see Maneewongvatana et al, "Analysis of Approximate Nearest Neighbor Searching with Clustered Point Sets", in DIMACS Series in Discrete Mathematics and Theoretical Computer Science, 1999). For matching local features with $d$ = 24, however, K-d trees become highly inefficient due to dimensionality. Therefore, the optimized FAISS library is relied on in such cases.

**Section C.4.2 Map-free localization**

**Dataset description.** Experiments begin with the Map-free relocalization benchmark (see Arnold et al.), an extremely challenging dataset aiming at localizing the camera in metric space given a single reference image without any map. It comprises a training, validation and test sets of 460, 65 and 130 scenes, respectively, each featuring two video sequences. Following the benchmark, evaluations are performed in term of Virtual Correspondence Reprojection Error (VCRE) and camera pose accuracy, see Arnold et al. for details.

**Impact of subsampling.** Coarse-to-fine matching is not performed for this dataset, as the image resolution is already close to MASt3R working resolution (720 × 540 vs. 512 × 384 resp.). As mentioned in Section C.3.3, computing dense reciprocal matching is prohibitively slow even with optimized code for searching nearest neighbors. Therefore the set of reciprocal correspondences are subsampled, keeping at most $k$ correspondences from the complete set $\mathcal{M}$ (Equation C14). Figure 31 (right) shows the impact of subsampling in term of AUC (VCRE) performance and timing. Surprisingly, the performance *improves* for intermediate values of subsampling. Using $k$ = 3000, matching can be accelerated by a factor of 64 while improving the performance. Unless stated otherwise, $k$ = 3000 is maintained for subsequent experiments set out in this Section.

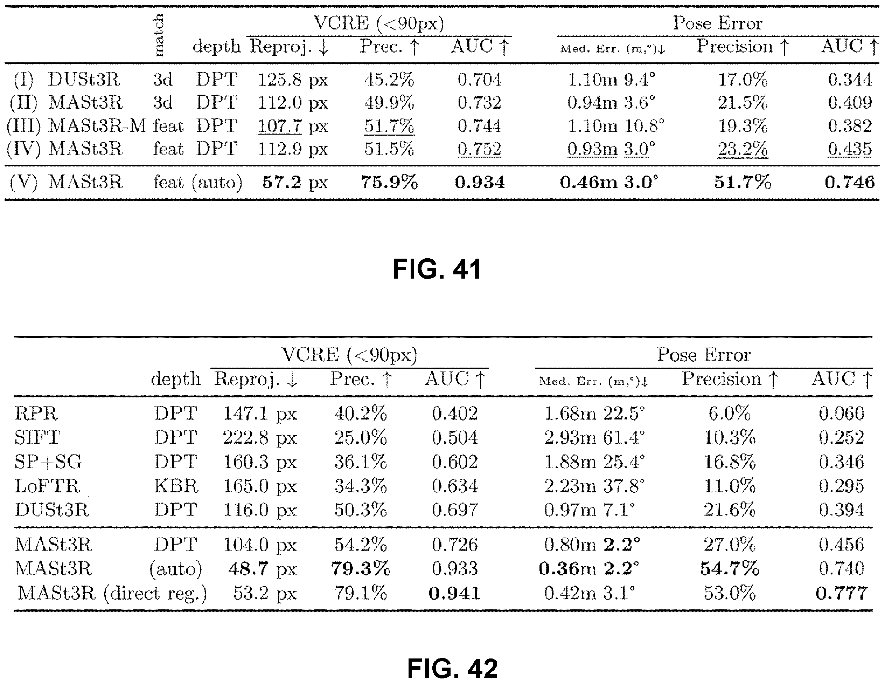

**Ablations on losses and matching modes.** Results are reported on the validation set in the table in Figure 41 for different variants of MASt3R: DUSt3R matching 3D points (I); MASt3R also matching 3D points (II) or local features (III, IV, V). For all methods, the relative pose from the essential matrix estimated with the set of predicted matches (PnP performs similarly) is computed. The metric scene scale is inferred from the depth extracted with a known DPT fine-tuned on KITTI (see DPT-KITTI) (I-IV) or from the depth directly output by MASt3R (V).

First, it is noted that all proposed MASt3R methods outperforms the DUSt3R baseline method, possibly because MASt3R is trained longer and with more data. All other things being equal, matching descriptors perform better than matching 3D points (II versus IV). This confirms initial analysis that regression is inherently unsuited to compute pixel correspondences, see Section C.3.2.

Also the impact of training only with a single matching objective ($\mathcal{L}_{match}$ from Equation C11, III) is studied. In this case, the performance overall degrades compared to training with both 3D and matching losses (IV), in particular in term of pose estimation accuracy (*e.g.*, median rotation of 10.8° for (III) compared to 3.0° for (IV)). It is noted that this is in spite of the decoder now having *more capacity to carry out a single task,* instead of two when performing 3D reconstruction simultaneously, indicating that grounding matching in 3D is indeed crucial to improve matching. Lastly, it is observe that, when using metric depth directly output by MASt3R, the performance largely improves. This suggests that, as for matching, the depth prediction task is largely correlated with 3D scene understanding, and that the two tasks strongly benefit from each other.

**Comparisons** on the test set is reported in the table in Figure 42. Overall, MASt3R outperforms all state-of-the-art approaches by a large margin, achieving more than 93% in VCRE AUC. This is a 30% absolute improvement compared to the second best published method, LoFTR+DPT-KITTI, that get 63.4% in AUC. Likewise, the median translation error is vastly reduced to 36cm, compared to approximately 2m for the state-of-the-art methods. A large part of the improvement may be due to MASt3R predicting metric depth, but note that a variant that leverages depth from DPT-KITTI (thus purely matching-based) outperforms all state-of-the-art approaches as well.

Also the results of direct regression with MASt3R, *i.e.*, without matching, simply using PnP on the pointmap $X^{2,1}$ of the second image is provided. These results are on par with the MASt3R matching-based variant, even though the ground-truth calibration of the reference camera is not used. As shown below, this does not hold true for other localization datasets, and computing the pose via matching (*e.g.*, with PnP or essential matrix) with known intrinsics seems safer in general.

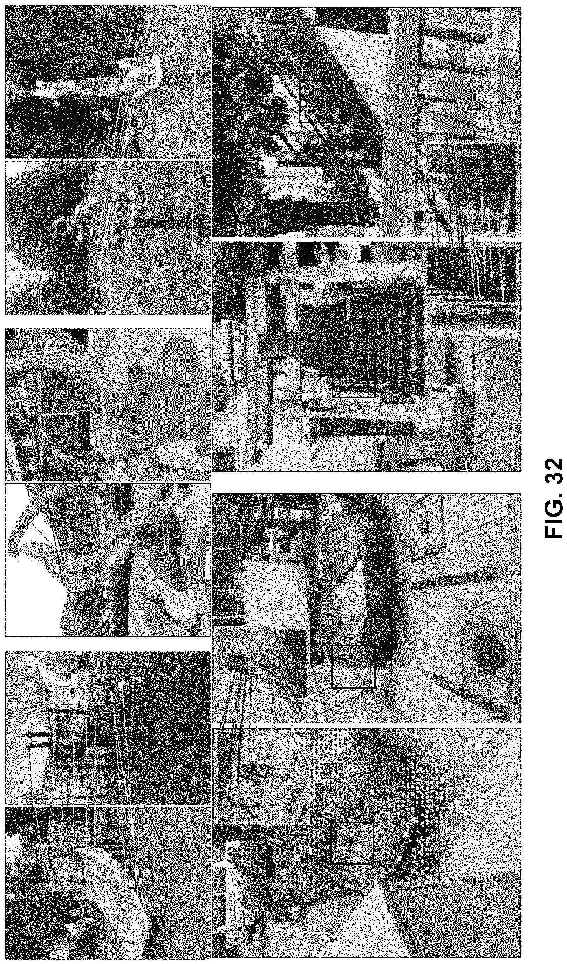

**Qualitative results.** Figure 32 shows some matching results for pairs with strong viewpoint change (up to 180°), where 3 pairs of images with strong viewpoint changes are showed in the top row (the third one is a failure case), and where 2 pairs of images with interesting spots in close-up, that could hardly be matched by local keypoints, are shown in the bottom row. It may be highlighted that with insets some specific regions that are correctly matched by MASt3R in spite of drastic appearance changes. It is believed that these correspondences to be nearly impossible to get with 2D-based matching methods. In contrast, grounding the matching in 3D allows this issue to be solved.

### Section C.4.3 Relative pose estimation

*Datasets and protocol.* Next, the task of relative pose estimation on the CO3Dv2 and RealEstate10k datasets is evaluated. CO3Dv2 contains 6 million frames extracted from approximately 37k videos, covering 51 MS-COCO categories. Ground-truth camera poses are obtained using COLMAP from 200 frames in each video. RealEstate10k is an indoor/outdoor dataset that features 80K video clips on YouTube totaling 10 million frames, camera poses being obtained via SLAM with bundle adjustment. Following PoseDiffusion, MASt3R is evaluated on 41 categories from CO3Dv2 and 1.8K video clips from the test set of RealEstate10k. Each sequence is 10 frames long, relative camera poses are evaluated between all possible 45 pairs, not using ground-truth focal lengths.

**Baselines and metrics.** As before, matches obtained with MASt3R are used to estimate Essential Matrices and relative pose. Note that predictions are always done pairwise, contrary to all other methods that leverage multiple views (with the exception of DUSt3R-PnP). Recent data-driven approaches like RelPose, RelPose++ (see Lin et al., "Relpose++: Recovering 6d poses from sparse-view observations", in arXiv:2305.04926, 2023), PoseReg and PoseDiff, the recent RayDiff (see Zhang et al., "Cameras as Rays: Pose Estimation via Ray Diffusion", in ICLR, 2024) and DUSt3R are compared. Also results are reported for more traditional SfM methods like PixSFM and COLMAP extended with Super-Point (see DeTone et al.) and SuperGlue (COLMAP+SPSG). Similar to PoseDiff, the Relative Rotation Accuracy (RRA) and Relative Translation Accuracy (RTA) are reported for each image pair to evaluate the relative pose error and select a threshold $\tau = 15$ to report RTA@15 and RRA@15. Additionally, the mean Average Accuracy (mAA30), defined as the area under the accuracy curve of the angular differences at $min$(RRA@30,RTA@30), is calculated.

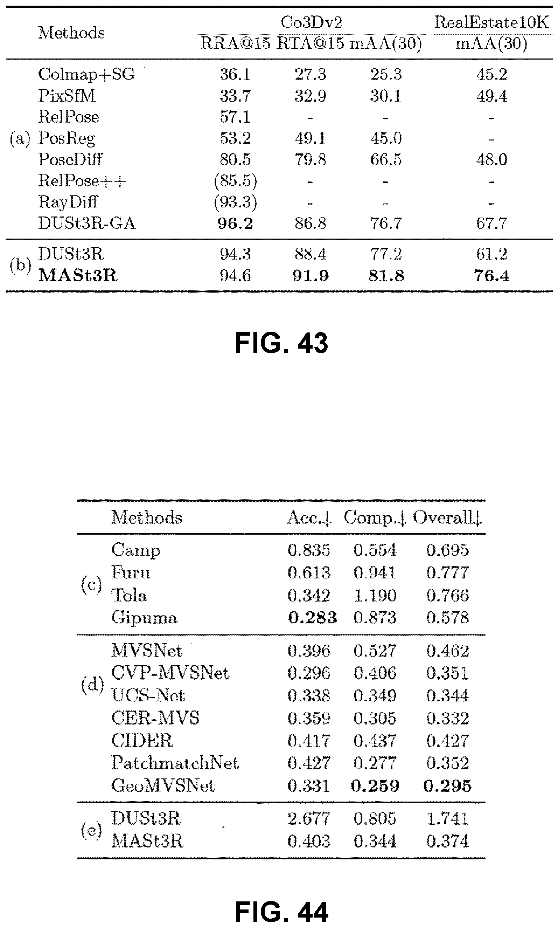

**Results.** As shown in the tables in Figures 43 and 44, SfM approaches tend to underperform on this task, mainly due to the poor visual support. This is because images usually observe a small object, combined with the fact that many pairs have a wide baseline, sometimes up to 180°. In contrast, 3D grounded approaches like RayDiffusion, DUSt3R and MASt3R are the two most competitive methods on this dataset, the latter leading in translation and mAA on both datasets. Notably, on RealEstate MASt3R's mAA score improves by at least 8.7 points over the best multi-view methods and 15.2 points over pairwise DUSt3R. This showcases the accuracy and robustness of this approach to few input view setups.

### Section C.4.4 Visual localization

**Datasets.** MASt3R is evaluated for the task of absolute pose estimation on the Aachen Day-Night and InLoc (see Taira et al.) datasets. Aachen comprises 4,328 reference images taken with hand-held cameras, as well as 824 daytime and 98 nighttime query images taken with mobile phones in the old inner city of Aachen, Germany. InLoc (see Taira et al.) is an indoor dataset with challenging appearance variation between the 9,972 RGB-D + 6DOF pose database images and the 329 query images taken from an iPhone 7.

**Metrics.** The percentage of successfully localized images within three thresholds are reported: (0.25m, 2°), (0.5m, 5°) and (5m, 10°) for Aachen and (0.25m, 10°), (0.5m, 10°), (1m, 10°) for InLoc.

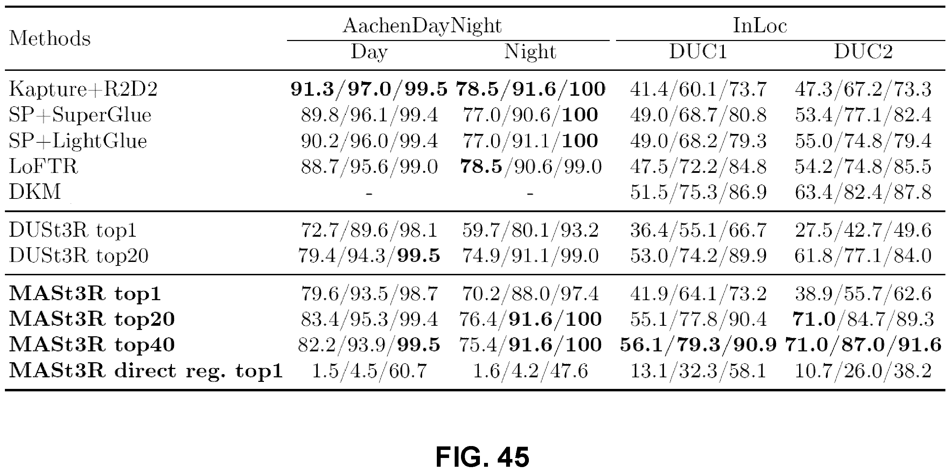

**Results** are reported in the table in Figure 45, where the performance of MASt3R is studied with variable number of retrieved images. As expected, a greater number of retrieved images (top40) yields better performance, achieving competitive performance on Aachen and significantly outperforming the state of the art on InLoc. Interestingly, MASt3R still performs well even with a single retrieved image (top1), showcasing the robustness of 3D grounded matching. Also included are direct regression results, which are poor, showing a striking impact of the dataset scale on the localization error, *i.e.*, small scenes are much less affected (see results on Map-free in Section C.4.2). This confirms the importance of feature matching to estimate reliable poses.

### Section C.4.5 Multiview 3D reconstruction

Multi-View Stereo (MVS) is performed by triangulating the obtained matches. Note that the matching is performed in full resolution without prior knowledge of cameras, and the latter are only used to triangulate matches to 3D in ground-truth reference frame. To remove spurious 3D points, geometric consistency post-processing (see F. Wang et al., "PatchmatchNet: Learned Multi-View Patchmatch Stereo", in CVPR, 2021) is applied.

**Datasets and metrics.** Predictions on the DTU dataset are evaluated. Contrary to all competing learning methods, the MASt3R network is applied in a zero-shot setting, *i.e.*, no training or finetuning is performed on the DTU training set and the MASt3R model is applied as is. In the tables in Figures 43 and 44 show the average accuracy, completeness and Chamfer distances error metrics are reported as provided by the authors of the benchmarks. The accuracy for a point of the reconstructed shape is defined as the smallest Euclidean distance to the ground-truth, and the completeness of a point of the ground-truth as the smallest Euclidean distance to the reconstructed shape. The overall Chamfer distance is the average of both previous metrics.

*Results.* Data-driven approaches trained on this domain significantly outperform handcrafted approaches, cutting the Chamfer error by half. It is belived that drawing such conclusion in a zero-shot setting is novel. MASt3R not only outperforms the DUSt3R baseline but also competes with the state of the art, all without leveraging camera calibration nor poses for matching, neither having seen the camera setup before.

### Section C.5 Conclusion

Grounding image matching in 3D with the MASt3R architecture raised the bar on camera pose and localization tasks on many public benchmarks, and improved the DUSt3R architecture with matching, advantageously achieving enhanced robustness, while attaining and even surpassing what could be done with pixel matching alone. In addition, a fast reciprocal matcher and a coarse to fine approach for efficient processing is disclosed, allowing users to balance between accuracy and speed. The MASt3R architecture is believed to greatly increase versatility of localization.

### Section C.6 Coarse Global Aligner for MASt3R

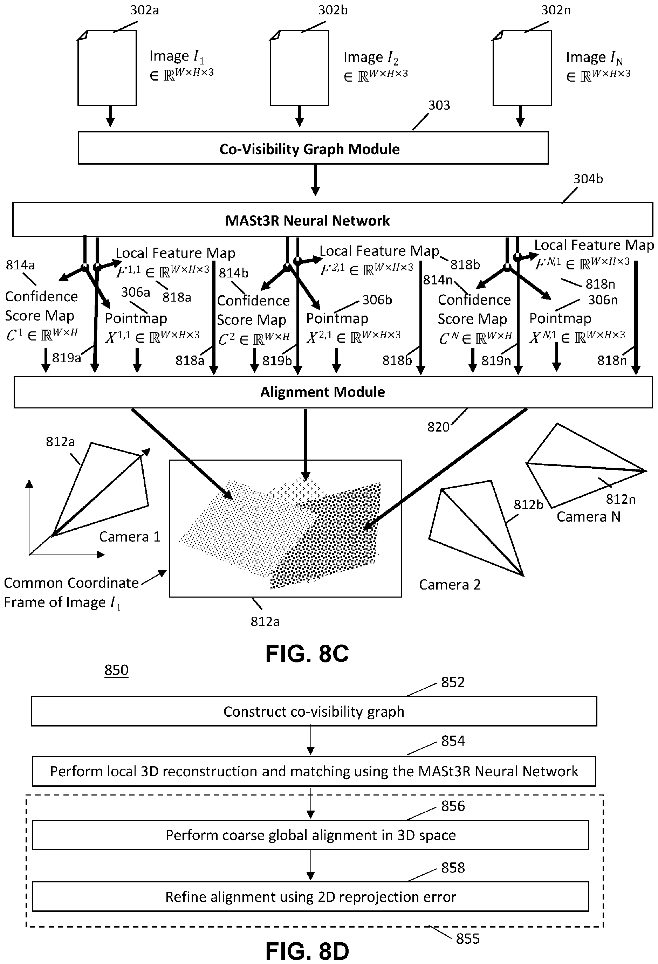

This Section discloses an alignment module 820 and procedure 855 therefor, with reference to Figure 8C and Figure 8D, respectively, for use with the MASt3R neural network 304b. The goal of this embodiment remains similar to other embodiments disclosed herein (i.e., given a collection of images 302 depicting the same scene under different viewpoints and illuminations, a 3D reconstruction 812 is performed of the scene along with the intrinsic and extrinsic parameters of cameras of the scene).

By way of overview, the method disclosed in this Section begins with a collection of $N$ images $\mathcal{V} = \{I^n\}_{1 \leq n \leq N}$ of views of a given 3D scene, with $N$ potentially large (e.g., on the order of thousands of images). Each image $I^n$ is acquired by a camera $\mathcal{K}_n = (K_n, P_n)$ where $K_n \in R^{3 \times 3}$ denotes the intrinsic parameters (i.e., the camera's calibration in terms of focal length and principal point) and $P_n \in R^{4 \times 4}$ the camera's pose (i.e., rotation and translation, from world coordinates to camera coordinates). Given the set of images $\{I^n\}$ as input, the method recovers all cameras parameters $\{\mathcal{K}_n\}$ as well as the underlying 3D scene geometry $\{X^n\}$, with $X^n \in \mathbb{R}^{W \times H \times 3}$ a pointmap relating each pixel $y = (i,j) \in \mathbb{N}^2$ to its corresponding 3D point $X_y^n$ in the scene in a common world coordinate frame. It is assumed for simplicity in this Section that all images have the same pixel resolution $W \times H$, which may differ in practice. The method 850 of recovering camera parameters and 3D reconstruction shown in Figure 8D is known as 'bundle adjustment', the steps of which are each described in detail below: (1) in Section C.6.1, constructing a co-visibility graph at 852 using co-visibility graph module 303; (2) in Section C.6.2, performing at 854 local 3D reconstruction and matching using the MASt3R neural network 304b; (3) in Section C.6.3, performing global alignment at 856; and (4) in Section C.6.4, refining alignment using 2D reprojection error at 858.

**Section C.6.1 Co-visibility graph**

At 852 (in Figure 8D), the set of image views V observing a scene to reconstruct may be expressed by co-visibility graph module 303 (in Figure 8C) as a scene graph $\mathcal{G} = (\mathcal{V}, \varepsilon)$, where each vertex of the graph $I \in \mathcal{V}$ is an image, and each edge $e = (n, m) \in \varepsilon$ is a (directed) pairwise connection between likely-related images $I^n$ and $I^m$. In this embodiment, the edges of the scene graph are directed because the pairwise relationship (i.e., the inference pass of MASt3R - see Section C.6.2 and Equation C19 below) is asymmetric. The task performed at 852 may be reformulated as: estimating the vertices properties (i.e., the camera parameters and view-dependent pointmaps) from the pairwise properties of the edges.

Without prior information about the image views $\mathcal{V}$, each image 302 could be related to any other image (i.e., the approach might consider a graph where all possible edges are present). However, doing so would make the rest of the approach not scalable for large image collections as the overall complexity of the next step at 854 is in $O(|\varepsilon|) = O(N^2)$.
At 852, a scalable pairwise image matcher, $h(I^n, I^m) \to s$, is used that is able to provide an approximate co-visibility score $s \in \mathbb{R}$ between two images $I^n$ and $I^m$. In embodiments, known image retrieval methods, known efficient matching methods or averaged MASt3R's confidence predictions may be used to compute the score. By evaluating all possible pairs and thresholding the score with $\tau_s$, irrelevant edges may be pruned from the scene graph $\mathcal{G}$ to retain only those where $h(I^n, I^m) > \tau_s$ is sufficiently high, always ensuring the scene graph $\mathcal{G}$ remains connected (i.e., there exists a path between any pair of vertices).
More generally, the co-visibility graph module 303 may be used to preprocess images 302 to generate a scene graph $\mathcal{G}$ for input to the DUSt3R network 304a (shown in Figure 8A), the MASt3R network 304b (shown in Figure 8B) and the C-GAR network 304c (shown in Figure 10).

**Section C.6.2 Local 3D reconstruction and matching**

At 854 (in Figure 8D), local 3D reconstruction and dense matching is performed on small clusters of $k$ related images using the MASt3R neural network 304b. For the purpose of explanation, the simplest case of $k = 2$ is assumed (i.e., pairs of images), and all scene graph edges $e = (n, m) \in \varepsilon$ are processed using MASt3R neural network 304b such that:

$$\text{MASt3R}(I^n, I^m) \to (X^{n,n}, X^{m,n}, C^{n,n}, C^{m,n}, F^{n,n}, F^{m,n}, Q^{n,n}, Q^{m,n}) \qquad \text{C19}$$

where:

$X^{m,n} \in \mathbb{R}^{W \times H \times 3}$ denotes the pointmap 306 of image $I^m$ in image $I^n$'s coordinate frame;

$C^{m,n} \in \mathbb{R}^{W \times H}$ denotes the corresponding pointmap confidence score map 814 of image $I^m$ w.r.t. image $I^n$;

$F^{m,n} \in \mathbb{R}^{W \times H \times d}$ denotes the *d-dimensional* feature map 818 of image $I^m$ w.r.t image $I^n$; and

$Q^{m,n} \in \mathbb{R}^{W \times H}$ denotes the corresponding feature confidence map 819 of image $I^m$ w.r.t. image $I^n$.

This *k*-cluster formulation is maintained because it is possible to train an N-view network. For instance the C-GAR approach disclosed in Section D below considers up to four views, although a higher number of views with a ViT encoder-decoder architecture is not recommended for computational reasons.
**Sparse correspondences.** For each image pair, sparse correspondences (or *matches*) are recovered by application of MASt3R's fast reciprocal matching disclosed in Section C.3.3. More specifically, here a fast neural network (FastNN) searches for a subset of reciprocal correspondences from two feature maps $F^{n,n}$ and $F^{m,n}$ by initializing seeds on a regular pixel grid at intervals $s \in \mathbb{N}$ and iteratively converging to mutual correspondences $\mathcal{M}^{n,m}$, as defined by:

$$\text{FastNN}_s(F^{n,n}, F^{m,n}) \to \mathcal{M}^{n,m},$$

where

$$\mathcal{M}^{n,m} = \{y_c^n \leftrightarrow y_c^m\}_{c=1..|\mathcal{C}^{n,m}|}$$

is a set of pixel correspondences between $I^n$ and $I^m$. Grid density parameter $s$ sets a trade-off between coverage density and computation cost. In one embodiment, $s = 8$ pixels is used as a compromise between these two aspects. Since both MASt3R and FastNN are order-dependent functions in terms of their parameters, typically they are computed in both directions and all unique correspondences are gathered:

$$\mathcal{M}^{n,m} = \text{FastNN}_s(F^{n,n}, F^{m,n}) \cup \overline{\text{FastNN}_s(F^{m,n}, F^{n,n})} \cup \overline{\text{FastNN}_s(F^{m,m}, F^{n,m})} \cup \text{FastNN}_s(F^{n,m}, F^{m,m}), \qquad (C20)$$

where the upper line of a set

$$\overline{\mathcal{M}} = \{y_c^m \leftrightarrow y_c^n\}$$

denotes the $n \leftrightarrow m$ swap of the original set

$$\mathcal{M} = \{y_c^n \leftrightarrow y_c^m\}.$$

### Section C.6.3 Coarse global alignment in 3D space

At 856, coarse global alignment is performed in 3D space. Sections A.6 and B.3.4, with reference to global aligner 407, above discloses an alternate embodiment of global alignment procedure that aims to express all pairwise pointmaps in a common world coordinate frame using regression based alignment. At 856, an alternate embodiment of global alignment is performed that takes advantage of explicit pixel correspondences. This alternate embodiment of global alignment that also aims to express all pairwise pointmaps in a common world coordinate frame advantageously reduces the overall number of parameters.

**Averaging per-image pointmaps.** At 856, a first step is performed to obtain a canonical pointmap for each image, expressed in its own camera coordinate system. For example, consider an image $I^n$ and $\varepsilon^n = \{e|e_0 = n\}$ is the set of all edges $e = (e_0, e_1)$ starting from image $I^n$. For each such edge $e = (n, m) \in \varepsilon^n$, there is a different estimate of $X^{n,n}$ and $C^{n,n}$, which is denoted herein as $X^{n,e}$ and $C^{n,e}$ with the convention that $e \equiv (n,m)$. One simple strategy to arrive at the canonical pointmap is to compute a per-pixel weighted average of all estimates using:

$$\tilde{X}_{i,j}^n = \frac{\sum_{e \in \varepsilon^n} C_{i,j}^{n,e} X_{i,j}^{n,e}}{\sum_{e \in \varepsilon^n} C_{i,j}^{n,e}},$$

Because the inital estimates are not necessarily well aligned in terms of scale and depth offset, an alternate strategy may be to compute a scale-aligned version of the canonical pointmap by minimizing the following robust energy function:

$$\tilde{X}^n = \arg\min_{a,b,\tilde{X}^n} \sum_{e \in \varepsilon^n} \sum_{i,j} C_{i,j}^{n,e} \left\| \tilde{X}_{i,j}^n - a_e^n X_{i,j}^{n,e} - [0,0,b_e^n]^\top \right\|,$$

where $a^n \in \mathbb{R}^{E_n} (a_e^n > 0), b^n \in \mathbb{R}^{E_n}$ denotes the scales and z-offsets to align all $E_n = |\varepsilon^n|$ estimates with the canonical pointmap. Note that it is guaranteed that $|\varepsilon^n| \geq 1$ since each image is at least connected to an edge, and each edge is processed in the two possible directions (i.e., inference and backpropagation) with the MASt3R neural network 304b.

**Global alignment.** The goal of the coarse global alignment is to find the scaled rigid transformation of all

canonical pointmaps $\{\tilde{X}^n\}$ such that any two matching 3D points are as close as possible in the world coordinate frame:

$$P^*, \sigma^* = \arg\min_{P,\sigma'} \sum_{(n,m)\in\mathcal{E}} \sum_{c\in\mathcal{M}^{n,m}} q_c \left\| \sigma_n P_n \tilde{X}_c^n - \sigma_m P_m \tilde{X}_c^m \right\|, \qquad (C21)$$

where the rigid transformation for each image $I^n$ is expressed as a 6D pose $P_n \in \mathbb{R}^{4\times4}$, with a scaling factor $\sigma_n > 0$. To avoid degenerate solutions, $\frac{1}{N}\sum\sigma_n = 1$ is imposed, which may be achieved by setting $\sigma = \text{softmax}(\sigma')$, $\sigma' \in \mathbb{R}^N$. In contrast to global alignment performed by global aligner 407 (shown in Figure 4 and discussed in Sections A.6 and B.3.4), the loss only applies to known pixel correspondences $\mathcal{C}_e = \{y_c^n \leftrightarrow y_c^m\}$ (see Equation C20) and are weighted by the geometric average of their respective confidence $q_c = \sqrt{Q_c^{n,e} Q_c^{m,e}}$ (here any matching pixels $y_c^n \leftrightarrow y_c^m$ are denoted as $c$ with a slight abuse of notation for the sake of clarity). This objective is minimized using standard gradient descent for simplicity, but other strategies such as second-order optimization (e.g., with a Linear Optimization (LM) solver) could be faster.

### Section C.6.4 Final refinement in terms of 2D reprojection error

Coarse alignment is fast and simple with good convergence in practice, but unfortunately, it cannot fix inaccuracies in the predictions of the canonical pointmaps. Yet, these are bound to happen as these pointmaps originate from an approximate regression process that (i) is subject to depth ambiguities (e.g., in regions seen by only one of the two cameras) and (ii) was never meant to be extremely accurate to begin with. To further refine the camera parameters using 2D reprojection error at 858 in Figure 8D, canonical pointmaps (scene geometry) and camera parameters are jointly optimized using pixel correspondences. The 2D reprojection of 3D points are minimized in all cameras where their position is known, a process which is often denoted as bundle adjustment:

$$z, K, P, \sigma = \arg\min_{z,K,P,\sigma} \sum_{(n,m)\in\mathcal{E}} \sum_{c\in\mathcal{M}^{n,m}} q_c \left[ \rho(y_c^n - \pi_n(\chi_c^m)) + \rho(y_c^m - \pi_m(\chi_c^n)) \right], \quad (C22)$$

where $\pi_n(\chi_{i,j}^m)$ denotes the 2D reprojection of a 3D point $\chi_{i,j}^m$ from image $I^m$'s optimizable pointmap $\chi^m \in \mathbb{R}^{W\times H\times 3}$ onto the camera screen of $I^n$, and $\rho\colon \mathbb{R}^2 \to \mathbb{R}^+$ is a robust error function to deal with the potential outliers among all extracted correspondences. It is typically of the form $\rho(x) = \|x\|^\gamma$ with $0 < \gamma \le 1$ (e.g., $\gamma = 0.5$), but other choices are possible. For a standard pinhole camera model with intrinsics and extrinsics parameter matrices $K_n$ and $P_n$, the reprojection function $\pi$ is given as:

$$\pi_n(\chi_{i,j}^m) = K_n P_n \chi_{i,j}^m.$$

To ensure geometry-compliant reconstructions, pointmaps $\{\chi^n\}$ are themselves obtained using the inverse reprojection function $\pi^{-1}$. For a given 3D point at pixel coordinate $(i,j) \in \mathbb{N}^2$ and depth $z_{i,j}^n > 0$, then:

$$\begin{aligned} \chi_{i,j}^n &= \pi_n^{-1}(i,j,z_{i,j}^n) \\ &= K_n^{-1}P_n^{-1}z_{i,j}^n[i,j,1]^\top. \end{aligned}$$

Since this method is only interested in a few pixel locations of $\chi^n$ (those with pixel correspondences $c \in \mathcal{M}^{n,m}$), it is not necessary to store all depth values explicitly during optimization thereby reducing memory and computations and making the optimization fast and scalable. Note that this approach is compatible with different camera models (e.g., fisheye, omnidirectional, etc) as long as the corresponding definition of the camera reprojection function $\pi$ is accordingly set and the pairwise inference network has been trained accordingly. Again, this objective is minimized using standard gradient descent for simplicity, but other strategies such as second-order optimization (e.g., with an LM solver) could potentially be faster.

**Anchor points.** Contrary to the 3D matching loss from (see Equation C21) where 3D points are rigidly bundled together (embedded within canonical pointmaps), optimizing the individual position of 3D points $\chi_{i,j}^n$ without constraints can lead to inconsistent 3D reconstructions. To remedy this, the traditional solution is to create point tracks (i.e., to assign the same 3D point to a connected chain of several correspondences that spans several images). While this is relatively straightforward with keypoint-based methods, these correspondences do not necessarily overlap with each other. One solution is to glue 3D points together via *anchor points* that provide a regularization on the type of deformations that can be applied to the pointmaps.

For each image $I^n$, a regular 2D grid of anchor points $\{\dot{y}_{u,v}^n\}$ is created, spaced by the same sampling parameter $s \in \mathbb{N}^+$ as used for FastNN matching:

$$\dot{y}_{u,v}^n = \left(us + \frac{s}{2}, vs + \frac{s}{2}\right).$$

Then each correspondence $y_c^n = (i, j)$ in $I^n$ is tied with its closest anchor $\dot{y}_{u,v}^n$ at $(u, v)$ = ( $\left\lfloor \frac{i}{s} \right\rfloor, \left\lfloor \frac{j}{s} \right\rfloor$ ). The corresponding 3D point is then fully characterized by the depth of its anchor point $\dot{z}_{u,v}^n$ as:

$$\chi_{i,j}^n = \pi_n^{-1}(i, j, \sigma_n \dot{z}_{\lfloor \frac{i}{s} \rfloor, \lfloor \frac{j}{s} \rfloor}^n o_{i,j}^n),$$

where $\sigma_n$ is a global scale factor for image $I^n$ and the relative offset $o_{i,j}^n = \dot{z}_{u,v}^n / \tilde{z}_{i,j}^n$ is a constant obtained once for all from the canonical depthmap $\tilde{z}_{i,j}^n = \tilde{X}_{i,j,2}^n$ and its subsampled version $\dot{z}_{u,v}^n = \tilde{z}_{us+\frac{s}{2}, vs+\frac{s}{2}}^n$. In other words, it is assumed that the canonical pointmaps are locally accurate in terms of relative depth values. On the whole, optimizing a pointmap $\chi^n \in \mathbb{R}^{W \times H \times 3}$ only comes down to optimizing a small set of anchor depth values $\dot{z}^n \in \mathbb{R}^{W/s \times H/s}$, a global scale factor $\sigma_n > 0$ and camera parameters $K_n$ and $P_n$.

**Initialization.** Since the energy function in Equation C21 is known to be highly non-convex and subject to falling into sub-optimal local minima, the coarse global alignment is leveraged as a good initialization, while setting $P_{init} = P^*$, $\sigma_{init} = \sigma^*$ and approximating $\chi_{init} \simeq \tilde{X}$. Note that the canonical pointmap $\tilde{X}^n$ is typically not fully consistent with a camera model, so the optimal focal length $f_n^*$ is extracted from pointmap $\tilde{X}^n$ as described in Section B.3.3 to get intrinsic camera parameters $K_{init}$ (with centered principal point), and anchor depth values are initialized as $\dot{z}_{u,v}^n = \tilde{X}_{us+\frac{s}{2}, vs+\frac{s}{2}, 2}^n$.

**Low-rank representation of the pointmaps.** The anchor-based 3D scene representation disclosed in this Section lowers the effective dimensionality of pointmaps from $3WH$ to $WH/s^2$. Yet, in the case where some regions of an image are completely unmatched by any other images, these regions will not receive any updates during the optimization (by definition of Equation C21). As a result, the pointmap for this image will gradually distort awkwardly, resulting in unsatisfying reconstructions. Intuitively, it seems more satisfying to have a *quasi-rigid* way of deforming pointmaps during optimization, akin to the coarse global alignment but with more leeway. One way of achieving this is to represent $\dot{z}^n$ with a low-rank approximation:

$$\dot{z}^n \simeq U^n \ddot{z}^n$$

where for simplicity the dimensions of $\dot{z}^n \in \mathbb{R}^D$ are flattened. Here, $U^n \in \mathbb{R}^{D \times D'}$ is a constant orthogonal low-rank

basis and $\ddot{z}^n \in \mathbb{R}^{D\prime}$ is a small set of coefficients encoding $\dot{z}^n$, with $D = \frac{WH}{s^2}$ and $D' << D$. A solution is to compute a content-adaptive frequency decomposition of the original depthmap $\dot{z}^n$ using spectral analysis. More specifically, first a graph is built where all anchor depth values $\dot{z}_{u,v}^n \in \dot{z}^n$ $\dot{z}^n$ constitutes nodes, and edge similarities are computed using a gaussian kernel on depth-invariant 3D distances as:

$$\alpha_{u,v,u\prime,v\prime} = \exp\left[-\lambda \frac{\left\|\dot{X}_{u,v}^n - \dot{X}_{u\prime,v\prime}^n\right\|^2}{\left(\dot{z}_{u,v}^n + \dot{z}_{u\prime,v\prime}^n\right)^2}\right],$$

where $\dot{X}_{u,v}^n$ is defined w.r.t $\tilde{X}_{u,v}^n$ similarly to $\dot{z}_{u,v}^n$. Then the normalized $D \times D$ Laplacian matrix $L = I - \Lambda^{-1/2}A\Lambda^{-1/2}$ is computed where $I$ is the identity matrix, $A$ is the reshaped graph adjacency matrix with $A_{(u,v),(u',v')} = \alpha_{u,v,u',v'}$, and $\Lambda$ is the diagonal degree matrix with $\Lambda_{(u,v)(u,v)} = \Sigma_{u',v'} A_{(u,v),(u',u')}$. Computing the eigenvectors associated with the lowest $D'$ eigenvalues yields a good low-frequency and boundary-aware orthogonal basis $U^n$. In one embodiment, only $D' = 64$ basis vectors (*i.e.*, coefficients) are retained to represent an anchored depthmap.

In another embodiment, an approximation is obtained by computing $U^n$ using a 2D Fourier transform on the $\mathbb{R}^{W/s \times H/s}$ domain, and only keeping (flattened) low-frequency basis vectors. While this has the advantage of being fast to compute and independent of the anchor depthmap content, the latter point also can become a drawback. Indeed the basis vector is not particularly fit to the depthmap at hand (i.e., it is generic (same for any image) and not tailored to the image-at-hand (not taking into account the depth boundaries for this particular image)), especially around depth boundaries where the reconstruction error is expected to be high since they can only be well represented with high frequencies.

**Section C.6.5 Advantages of Coarse Global Aligner**

Compared with global alignment performed by global aligner 407 (shown in Figure 4 and discussed in Sections A.6 and B.3.4), the alignment module 820 (shown in Figure 8C) uses the MASt3R neural network 304b for computing pixel correspondence using fast sparse matching as set forth in this Section C.6 to perform pixel correspondence based alignment. The Section C.6 embodiment advantageously decreases the number of optimized parameters by leveraging both parameter sparsity and low-rank approximation. In addition, the Section C.6 embodiment introduces a final refinement step that leverages pixel correspondences in the form of a 2D reprojection error for the final refinement, producing improved pixel-accurate camera poses and 3D scenes. Further, the Section C.6 embodiment enables a scalable and faster global alignment, that advantageously may be refined for improved accuracy compared to regression based global alignment performed using the global aligner 407.

**Section D. Camera-Geometry Agnostic 3D Reconstruction (C-GAR)**

**Section D.1 Introduction**

This Section presents a novel approach for Multiple View Stereopsis (MVS) from un-calibrated and un-posed cameras. A disclosed network is trained that can predict a dense and accurate scene representation from a collection of image(s), without prior information regarding the scene nor the camera(s), not even the intrinsic parameters. This is in contrast to the classical formulation of MVS where, given estimates of the camera intrinsic and extrinsic parameters, one needs to triangulate matching 2D points to recover the 3D information. And this step is of the utmost importance since "An MVS algorithm is only as good as the quality of the input images and camera parameters" (see Furukawa et al.).

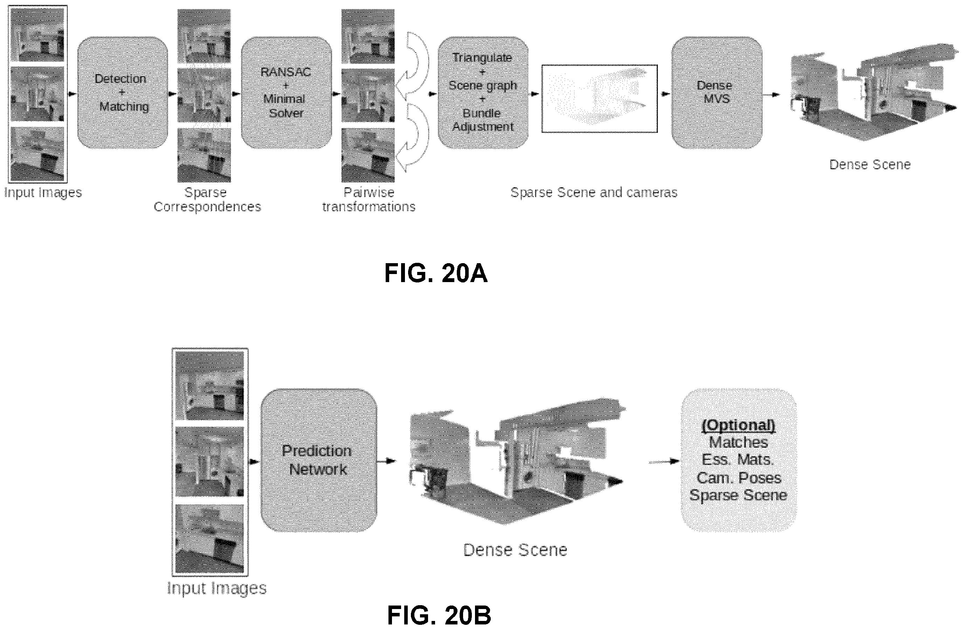

In real life, recovering accurate un-calibrated camera parameters from RGB images is still an open problem and is known to be extremely challenging, depending on the visual content and the acquisition scenario. Historically, tackling the problem as a whole has always been considered too hard of a task, and it is still common practice to split it into a hierarchy of simpler sub-problems, a.k.a., *minimal problems,* sequentially aggregated together, as shown in Figure 20A, where each noisy estimation is aggregated to the next bigger sub-problem in a hierarchical manner in order to recover camera poses, that are finally used as input for the dense reconstruction. From a simplistic view, the traditional pipeline for full MVS (e.g., recovering a dense scene representation from unknown cameras) amounts to: (i) detecting and matching keypoints; (ii) finding good pairwise essential matrix candidates (minimal-solver with RANSAC); (iii) performing bundle adjustment (build scene graph, triangulate points in 3D and optimize jointly for a sparse scene representation and the camera parameters); and (iv) building a dense scene representation. It is of course a viable solution for some settings, considering recent advances, yet it is found unsatisfactory: each sub-problem is not solved perfectly and adds noise to the next step, increasing the complexity and the engineering effort required for the pipeline to work as a whole. To name a few examples, missing detections and outliers in matching required the use of RANSAC with the minimal solvers. Again, camera parameters are noisy estimates and need refining along with the scene optimization. Lastly, there is rarely any communication between each sub-problem. It would be reasonable to assume that they should help each other (i.e., dense reconstruction should naturally benefit from the sparse scene that was built to recover camera poses, and vice-versa).

Proposed in this Section D is a shift in paradigm shown in Figure 20B, which illustrates an approach that directly builds 3D representations from RGB observations without explicitly solving any sub-problem; using this approach it is possible to recover solutions of all sub-problems as a by-product of the prediction. A holistic approach is disclosed that tackles the *maximal problem:* considered are all possible matches between all images to directly build a 3D representation from the un-calibrated and un-posed images. Interestingly, it is possible to later extract from result the camera poses and other sub-problem solutions, as a by-product. Note that no reliance is made on hard camera models, RANSAC schemes, minimal solvers nor outliers filtering.

To this aim, a multi-modal and multi-view Vision Transformer (ViT) network (see Dosovitskiy et al.) is leveraged, that takes both the RGB images and a scene representations as input, similar to that of SACReg (see Revaud et al., "SACReg: Scene-agnostic coordinate regression for visual localization" in arXiv 2307.11702, 2023, which is hereinafter referred to as "SACReg"). In contrast however, it is embedded in a diffusion framework: starting from a random scene initialization, the disclosed network predicts scene updates, and iteratively converge towards a satisfactory reconstruction. As scene representation, view-wise pointmaps are leverage, e.g., each pixel of each image stores the first 3D point that it observes. In terms of architecture, each image and pointmap are processed through a siamese ViT encoder and are then mixed together in a single representation. A decoder module performs cross attention between views to allow for global scene reasoning. The outputs are the pointmap updates for all views of the scene. The disclosed model is trained in a fully-supervised manner, where the ground-truth annotations are synthetically generated, or ideally, captured using other modalities such as Time of Flight sensors, scanners. Experiments show that this approach is viable, the reconstructions are accurate and consistent between views in real-life scenarios with various unknown sensors. This disclosure demonstrates that the same architecture can handle *real-life* monocular 2102 and multi-view 2104 reconstruction scenarios seamlessly, even when the camera is not moving between frames, as seen in Figure 21 which shows real data captured 2106 and reconstructed 2108 with a smartphone. To combat the computational complexity of higher number of images, a known Image Retrieval (IR) tool may be used to sparsify the scene graph, e.g., views can only attend to the top-K most relevant views and not the whole database. This can also be used to perform MVS with more views than that seen during training, by leveraging an appropriate block-wise masking strategy.

Contributions are threefold: First, presented herein is a holistic end-to-end 3D reconstruction pipeline from uncalibrated and unposed images, that unifies monocular and multiview reconstruction. Second, introduced herein is the Pointmap representation for MVS applications, that enables the network to predict the 3D shape in a canonical frame, while preserving the implicit relationship between pixels and the scene. This effectively drop many constraints of the usual perspective camera formulation. Third, leveraged herein is the iterative nature of diffusion processes for MVS: Gaussian noise is gradually turned into a global and coherent scene representation. This is believed to be a milestone with a broader impact than simply performing 3D reconstructions, as elaborated in Section D.5 (below).

**Section D.2 State of the Art**

Summarized in this Section are the main directions of classical MVS over the years, under the scope of geometric camera models.

**Classical MVS.** In the classical formulation, camera parameters are considered to be explicit inputs to the reconstruction methods. MVS thus amounts to finding the surface along the defined rays, using the other views via triangulation. Be it the fully handcrafted, the more recent scene optimization based or learning based approaches, they all rely on perfect cameras obtained via complex calibration procedures, either during the data acquisition or using Structure-from-Motion approaches for in-the-wild reconstructions. Yet, in real-life scenarios, the inaccuracy of pre-estimated cameras can be detrimental for these algorithms to work properly. Several previous works thus proposed to refine camera poses along with the dense reconstruction.

**Refining the Cameras.** Due to the differentiable nature of perspective geometry, many works have pursued the idea of jointly optimizing for the scene and the cameras. The camera model used is usually a pinhole with known intrinsics, and the scene can be point clouds or implicit shape representations. These approaches however are still limited and do not work well without either (i) strong assumptions about the camera motion and/or (ii) good initial camera intrinsics and poses. In fact, applying iterative optimization methods to camera parameters estimation is know to be prone to falling into sub-optimal local minima, and is only effective when the current state is close to a good minimum. This is the same reason why the traditional SfM pipeline resorts to a hierarchy of sub-problems with RANSAC schemes in order to find valid solutions in the enormous search space, and only then try to optimize the scene and cameras jointly. Interestingly, some works completely dropped explicit camera model formulations, and also tried to work with more relaxed approaches, purely driven by the data distribution, as explained in the following.

**Implicit Camera Models.** The main idea of these known methods is to express shapes in a canonical space (e.g., not related to the input view points). Shapes can be stored as occupancy in regular grids, octree structures, collections of parametric surface elements, point clouds encoders, free-form deformation of template meshes or view-wise depthmaps. While they arguably perform classification and not actual 3D reconstruction, all-in-all, these approaches, only work in very constrained setups, and have trouble generalizing to natural scenes with non object-centric views. The question of how to express a complex scene with several object instances in a single canonical frame had yet to be answered: in this Section D, the reconstruction is expressed in a canonical reference frame, but due to the disclosed scene representation (Pointmaps), a relationship between image pixels and the 3D space is preserved, and are able to reconstruct all the scene consistently.

**Pointmaps.** Using a collection of pointmaps as shape representation is quite counter-intuitive for MVS, but its usage is widespread for Visual Localization tasks, either in scene-dependent optimization approaches or scene-agnostic inference methods. Similarly, view-wise modeling is a common theme in monocular 3D reconstruction works The idea being to store the canonical 3D shape in multiple canonical views to work in image space. These approaches usually leverage explicit perspective camera geometry, via rendering of the canonical representation.

In this Section, a proposal is made to leverage pointmaps as a relaxation of the hard projective constraints of the usual camera models to directly predict 3D scenes from un-calibrated and un-posed cameras without ever enforcing projective rules. Predictions made herein are purely data-driven yet the outputs still respect the underlying camera geometry, even though no camera center nor ray behavior is explicitly specified.

**Section D.3 Method**

**Section D.3.1 Scene Representation**

One component that makes the disclosed approach feasible is the scene representation $S$. A *Pointmap* representation is used herein, e.g., each pixel of each image stores the coordinates of the 3D point it observes. It is a one-to-one mapping between pixel coordinates and 3D points, assuming that occupancy is a binary information in 3D space, e.g., no transparency, nor double/triple points.

Figure 22 illustrates how a pointmap can be seen simultaneously as a 3-channel image and a point cloud. More specifically, Figure 22 depicts a scene representation 2202 where each image is associated with a pointmap 2204, that is a 2D grid containing 3D values, which may be visualized as RGB values, where each pixel is mapped to a 3D point, and where this 2D-3D mapping may also be visualized as a colored 3D point-cloud 2206. Hard camera model constraints are not enforced during prediction, but it is possible to verify that the reconstruction respects perspective rules using Perspective-N-Points (PnP) algorithms, given that each 2D pixel is associated to a 3D point. Finally, the full scene $S$ is composed of $N \geq 1$ views, each storing images and pointmaps $S = \{S^i\}$, $i \in N$ that are all expressed in a common reference frame. Paradoxically, this representation allows for physically infeasible camera models with very few constraints regarding known camera geometry. In fact, this does not even assume that light rays travel in straight line as there is no notion of principal point. The philosophy behind is to allow the network to learn all relevant priors present in the train set, via a relaxed image formation model. All computations happen in image space, thus the architecture consists of ViT modules, and no other complex architecture.

**Leveraging priors.** The disclosed approach considers both the pointmaps and the images, thus it is able to leverage 2D structure priors relevant to the scene, like the relationship between image RGB gradients and 3D shape properties. This gives to the network the ability to learn shape priors commonly leveraged in alternative approaches for MVS, like shape from texture, from defocus, from shading, or from contours. Importantly, it can also compare 3D values between views, that live in a common reference frame, which is of great importance to leverage 3D priors of the scenes.

**Fundamental Motivation** Finally, the disclosed approach never relies on triangulation operations, which is in contrast to most MVS algorithms. Triangulation is know to be extremely noisy and inaccurate when rays are close to being colinear, i.e., when there is a very small camera translation between views. Even worse, it collapses and is undefined when only a single view observes a region, or when rays are colinear (still camera, or pure rotation). Because triangulation needs parallax, classical approaches are not usable when there is none or not enough. In contrast, the disclosed model can tackle pure rotations, still cameras and even the monocular case, in a common framework (see Figure 21). Again, no camera model is ever enforced rather they are purely data-driven in a soft manner: the output distribution will reflect the geometric constraints of the data, including hard projective geometry, complex distortion phenomena, rolling shutter effects, and can even handle scene motion, as long as the annotated *ground-truth* does.

**Section D.3.2 Reconstruction via Diffusion**

In the majority of SfM based methods, the camera pose estimation, and thus the reconstruction, is performed in a 3D/4D world of arbitrary reference frame and scale. This means that infinitely many reconstructions are valid explanations of the observed RGB data and one has to choose one at inference. In other words, a-priori the mapping between pixels and scene coordinates is not known. To tackle this problem, diffusion processes are leveraged: an initial reference coordinate system is defined by sampling random pointmaps, in a normalized cube. At first all views will be inconsistent, but all coordinates live in the same 3D reference frame. The 3D diffusion process can then be seen as an update estimator, that iteratively optimizes the scene representation towards a valid solution. Note that contrary to the general use case of diffusion processes (image generation), image diversity is not sought but rather a method that is able to converge towards a sample in the infinite space of valid solutions. More formally, the disclosed diffusion model learn a series of state transitions, e.g., corrections, to map pure Gaussian noise $S_T$ to $S_0$ that belongs to the target data distribution. A neural network is trained to reverse a Gaussian noising process that transforms $S_0$ to $S_t$ s.t.:

$$S_t = \sqrt{\lambda(t)}S_0 + \sqrt{1 - \lambda(t)}\epsilon \qquad (D1)$$

with $\varepsilon \sim N(0,I)$, and $t \sim U(0, T)$ a continuous variable. $\lambda(t)$ is a function that monotonously decreases from 1 to 0, effectively blending the target $S_0$ with noise.

**Training.** Diffusion processes come in many flavors, that consist in predicting either the target $S_0$, the noise $\varepsilon$ or the update $\tilde{S}_0$ to apply at each step in *v prediction* convention (see Salimans et al, "Progressive distillation for fast sampling of diffusion models", in ICLR, 2022). With no loss of generality, a choice was made to train a neural network $f$ to predict $S_0$ from $S_t$, conditioned by the RGB observations $c$. This is possible as the update $S_{t-\Delta}$ may be derived from $S_t$ and the predicted $\tilde{S}_0$. The objective $L_{s0}$ minimized during training is a simple $l_2$ regression loss, in a fully supervised manner:

$$L_{x_o} = E_{t \sim U(0,T),\epsilon \sim N(0,1)}\|f(S_t, c) - S_0\|^2 \qquad (D2)$$

In short, the network always tries to predict the target reconstruction.

**Sampling.** In order to generate samples from a learned model, a random sample $S_T$ is drawn and a series of (reverse) state transitions $S_{t-\Delta}$ is iterated by applying the denoising function $f(S_t, t, c)$ on each intermediate state $S_t$. Again, with no loss of generality, the updates can be performed using the transition rules described e.g., in DDPM (see Ho et al., "Denoising diffusion probabilistic models", in NeurIPS, 2020), or DDIM (see Song et al., "Denoising diffusion implicit models", in ICLR, 2021) for faster inference.

**Section D.3.3 Architecture**

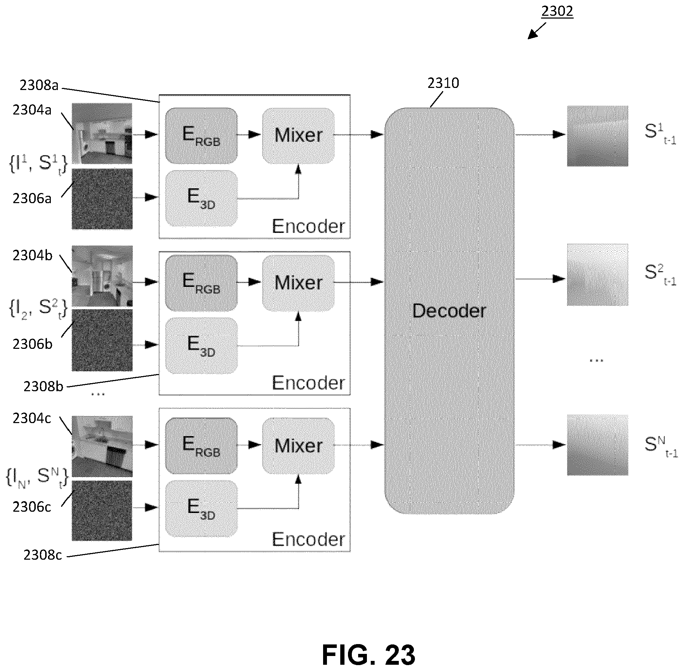

The disclosed architecture is inspired by SACReg. As depicted in Figure 23, the disclosed network 2302 takes as input a collection of RGB images $I_i$ 2304 and pointmaps $S^i$ 2306, where at each step t of the diffusion process, the network 2302 looks at the current scene estimate $\{I_i, S_t^i\}$, $i \in N$ (RGB + point maps); after the encoders 2308 jointly encodes the appearance and the geometry of the scene in a siamese manner, the decoder 2310 performs self-attention on each view and cross attention between each image and all the others to allow for local and global scene reasoning respectively; the output is an update of the current scene representation $S_{t-1}^i$; the decoder 2310 and $E_{RGB}$ blocks of the encoders 2308 correspond to the architecture of CroCo while the Mixer and $E_{3D}$ blocks of the encoders 2308 correspond to the SACReg mixer approach.

More specifically, the multiple view ViT architecture of CroCo is leveraged with a mixer block of the encoder 2308 to merge the different input modalities. Each image 2304 and each pointmap 2306 is encoded using a ViT encoder denoted $E_{RGB}$ and $E_{3D}$ respectively in the encoder 2308. For each view, both representations are mixed together using a *Mixer* module in the encoder 2308. This *Mixer* module is also a ViT encoder equipped with cross attention: it updates the 3D representation of each view by cross-attending the RGB representation. All views are processed in a siamese manner, meaning the weights of the encoders are shared for all views. From this encoder, $N$ mixed representations are obtained. The network then reasons over all of them jointly in the decoder. Similar to CroCo, it is also a ViT, equipped with cross attention. It takes the representation of each view and sequentially performs self-attention (each token of a view attends to tokens of the same view) and cross-attention (each token of a view attends to all other tokens of other views). It was initially designed for pairwise tasks, but it can also cross-attend to more views by concatenating the tokens from other views. In a simplistic view, due to the global cross-attention, the network is able to reason over all possible matches between all views jointly, contrary to the classical approach that computes pairwise matches between sparse keypoints.

**Positional Embedding.** Similar to other known methods, Rotary Positional Embeddings (RoPE) (see Lu et al., "RoFormer: Enhanced transformer with rotary position embedding" arXiv pr2104.09864, 2021) is leveraged. It is worth noting that each token could be associated to any other token in other view, meaning the relative displacement between views should not matter. In experiments herein, it can be seen that cross-attention does not benefit nor suffer from RoPE, and is optional for this layer.

**Prediction Head.** As usual in all dense downstream tasks, a dense prediction head is added on top of the decoder. The simplest form of head is a linear projection head, i.e., a single layer after the decoder to transform the embeddings to 3D coordinates. It is possible to leverage DPT or other convolutional heads to this purpose, with no loss of generality.

## Section D.3.4 Training

The disclosed network is trained in a diffusion framework, in a fully supervised manner: the ground truth pointmaps associated to the RGB views is known. While it would be theoretically feasible to have a varying number of views for each batch during training, for simplicity, training is performed on N-tuples, where $N$ is usually between 1 and 4. Training for much more views is not recommended as the training complexity quickly becomes intractable. A more elegant solution for inference with more views is preferred as detailed in Section D.3.5. In case real data is used, it is not always possible to have dense annotations. To overcome this, the missing annotations are set to a constant, and a mask on the input RGB values is added (either a predefined RGB value or a binary mask as a 4th channel in the pointmap). The loss is masked on undefined 3D coordinates. The disclosed experiments show that, using this strategy, the network can handle undefined coordinates flawlessly. The weights of the encoders and decoders are initialized with CroCo pretrained weights. Training for 560K steps with 4 views takes roughly 4 days on a single A100 GPU.

**Data Augmentation.** As usual, adding data augmentation is a good option to artificially increase the variability of the training data. The most crucial data augmentation applicable here consists in applying a random 3D rotation to the pointmaps, in order to ensure a full coverage of the output distribution and achieve rotation equivariance. Additionally, one can apply the usual RGB augmentations such as color jitter, solarization, and style-transfer; simple geometric transformations that preserve chirality are also allowed, like scaling, cropping, rotations or perspective augmentations, as long as they are performed similarly onto the images and the pointmaps.

**Win-Win.** In the case of high resolution applications, it would not be computationally tractable to train on N-tuples directly. However, it is possible to train the disclosed network for high resolution predictions using the Win-Win strategy (see Leroy et al., "Win-Win: Training high-resolution vision transformers from two windows", ICLR 2023): at training time, each view only sees three square windows in a high resolution image, effectively decreasing the number of tokens for a more tractable training. The window selection has to ensure that a significant portion of the pixels observe similar 3D points, e.g., between 15 and 50%. At test time, temperatures of the softmax are quickly tuned for the expected output resolution.

## Section D.3.5 Inference

Now that the diffusion model has been trained, samples need to be drawn conditioned by the observations at test time. For simplicity, the resolution is kept fixed (224x224 in the disclosed examples), but again, it is possible to leverage the windowed masking strategy of Win-Win strategy for inference in higher resolution with reduced training costs.

**Simplest Inference.** The simplest case is the training scenario: N-tuples are seen at test time. DDPM is leveraged for faster inference: a random initialization was drawn and 250 diffusion steps were performed (whereas 1000 steps were performed during training). In the case where less views are available at test time, the views to match the N-tuple size of training were duplicated. For example, training may be performed with four views as seen in Figure 21 at 2104. When a single image is available, it is input four times, resulting in four consistent predictions, as seen in Figure 21 at 2102.

**More Views.** When more views are available at test time, all of them are input in the disclosed network and a block masking is applied in the cross attention, such that each view only attends the same number of views than seen during training. In practice, when trained with 4 views, the top-4 most similar views are computed using an Image Retrieval algorithm, and sparsify the complete attention matrix via block masking, such that the number of compared tokens in the cross attention remains the same as that of training.

**Incremental Reconstruction.** It is also possible to perform incremental reconstruction: a scene has already been reconstructed from $N$ views, and a new view comes in. In this case, it is not desirable to update the existing reconstruction, and only add the novel view. At inference, thus the cross attention is modified such that only the new view queries the whole scene. This is in contrast to the default scenario where the whole scene is cross-attending the whole scene. Still, starting occurs from a random scene initialization. At each time step, the new view with the network's prediction is updated, and all the other views are obtained via the exact Equation D1 of the diffusion process. This way, the prediction of the novel view is anchored on the existing scene model. When the existing model is a metric scene, it is first normalized in

[$\alpha$,1 - $\alpha$] and the scaling factors are kept for un-normalization after prediction, $\alpha$ is a pre-determined constant that leaves "room" for the new view, in the case where it would increase the size of the bounding box of the scene.

**MVS refinement.** Note that scene refinement is also possible in a similar spirit. From a noisy or low resolution 3D scene, convert it to a pointmap representation and blend it with noise using the noising process (C1), taking $t < T$. It is now possible to refine it with a few diffusion iterations "resuming" the diffusion process from t and not from pure Gaussian noise. This will effectively anchor the reconstruction using the rough estimate.

**Camera Localization.** From any reconstruction, it is possible to recover the camera poses via PnP using a provided focal length *f*, as expected in a Visual Localization framework. This is possible since the pointmap representation associates pixel coordinates with 3D points. Also matches may be recovered between views by comparing the 3D coordinates of each pixels. Thus it is possible to extract Essential of Fundamental Matrices, and even a sparse scene by only keeping 3D points that are geometrically consistent. All sub-problems of the SfM pipeline from the disclosed direct prediction may thus be effectively solved.

## Section D.4 Experiments

For these experiments, training and testing occurred on a hard, synthetically generated, dataset. *N* multi-view images of thousands of scenes are rendered using the Habitat Simulator. For each N-tuple, the camera relative positions and focal lengths are randomized during the data generation process. In more details, the Field Of View (FOV) varies between 18 and 100 degrees. The camera locations are adapted such that N-tuples reasonably overlap between each other, meaning that when focal lengths are drastically different, the relative displacement can be rather extreme compared to the usual MVS scenario (which most of time consists in small displacements with the same, or similar, sensors). It is worth noting that even though the dataset is purely synthetic, it is extremely challenging, due to the focal length variation, with very ambiguous matching, lack of salient features, many planar and low-contrast regions. Training was performed on 1M N-tuples, and test on 1K samples, of scenes unseen during training. The encoders, mixer and decoder are all ViT-Base, and a linear prediction head was used for its simplicity.

It is worth noting that a convolutional head would greatly improve the results, but this is not the purpose of this disclosure.

## Section D.4.1 Quantitative Results

Because the reconstruction happens in a rotation- and scale-equivariant space, the prediction must be re-aligned with the ground truth point cloud. Note that the latter is also expressed in the form of a pointmap, thus giving direct pixel-to-pixel correspondences. It is thus straightforward to perform a Procrustes alignment with scale, before measuring the reconstruction quality. Because it is a global alignment, any metric measured after alignment is a lower bound of the "true" metric over the whole reconstruction. Still, after visual inspection, the alignment is quite satisfactory so the metrics are still relevant for evaluation. The prediction in normalized space is aligned to the ground-truth in metric space, and in Table D-1 measures the average Euclidean distance over the whole reconstruction, as well as the average view-wise median, both after Procrustes Alignment (PA), where reconstruction error is in *mm,* under different scenarios: the monocular, binocular and multi-view setups.

**Table D-1**

| Setup | PA-L2 Mean | PA-L2 Median |
|---|---|---|
| 1-view | 35.2 | Not measured |
| 2-views | 25.6 | 21.2 |
| 4-views | 27.8 | 21.2 |

Note that these values are not directly comparable since they are not evaluated on the same number of views. These results might not appear ground breaking in terms of reconstruction accuracy, yet they prove that the approach is viable and that it is possible to directly reconstruct a scene from a collection of un-posed and un-calibrated cameras in a very challenging scenario. If compared to standard MVS baselines it is possible that they will perform poorly with so little views and so much ambiguity in the visual content.

## Section D.4.2 Qualitative Results

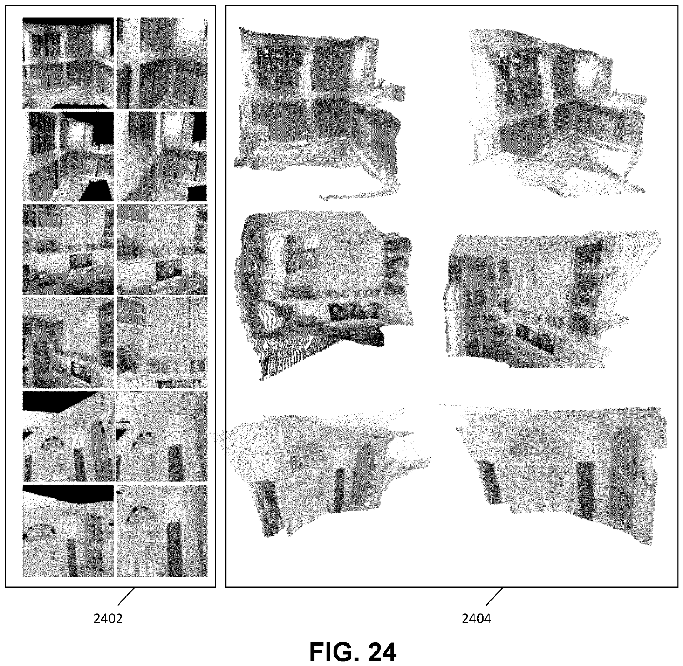

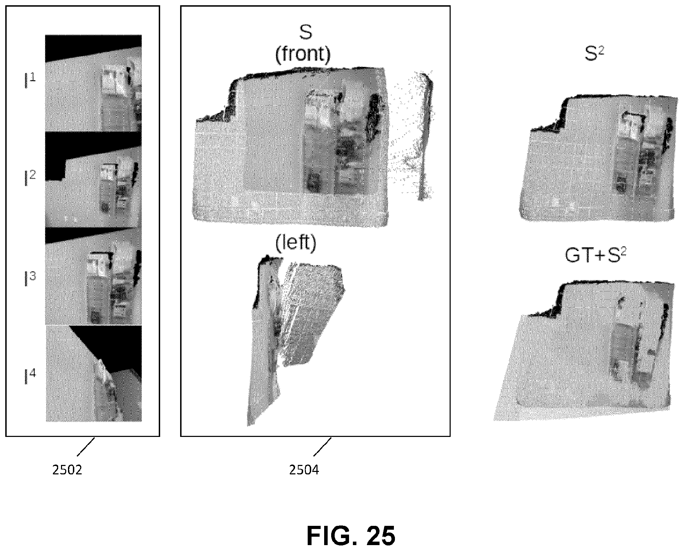

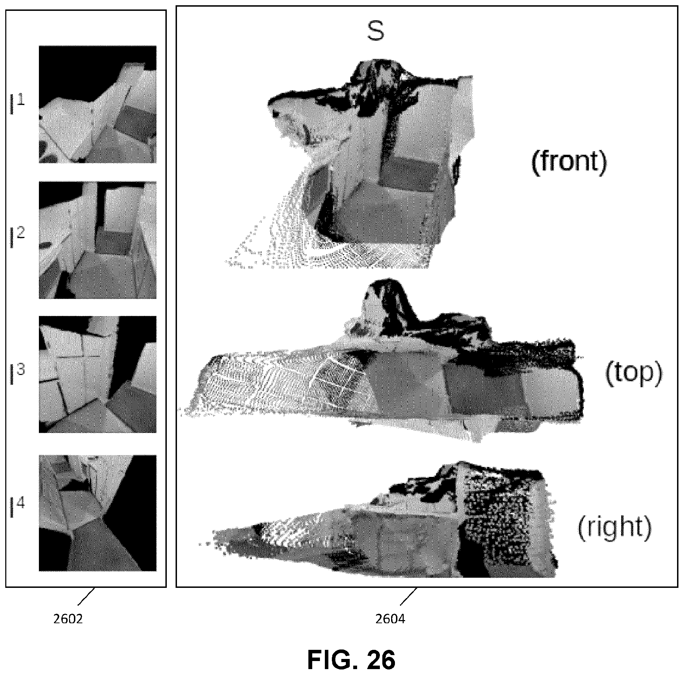

Qualitative results of the C-GAR network are shown in Figures 24, 25 and 26. Figure 24 shows three sets of four input views 2402 reconstructed in a single consistent point cloud, viewed from two different angles 2404; the C-GAR approach is able to smoothly manage extreme view angle changes and displacements, with scarcely observed areas (e.g., the ceiling and the left wall of the 2nd row is only observed by a single camera). Figure 25 shows four input views 2502 reconstructed in a single consistent point cloud 2504; the left and right walls are only observed by one view, yet they are very consistent: the left wall only seen by $S^2$ is extrapolated, and the plane overlays almost perfectly with the ground-truth; since there is very little content to guess the focal length properly, the perspective distortion is not perfectly recovered, yet the wall remains planar and consistent with the rest of the scene. Figure 26 shows four input views 2602 reconstructed in a single consistent point cloud S 2604; black RGB values (masked in the training loss) are not perturbing the convergence, and the scene is faithfully reconstructed even from very few sparse views with large baselines, extreme orientation changes and varying focal lengths.

**Section D.4.3 Synthetic Data**

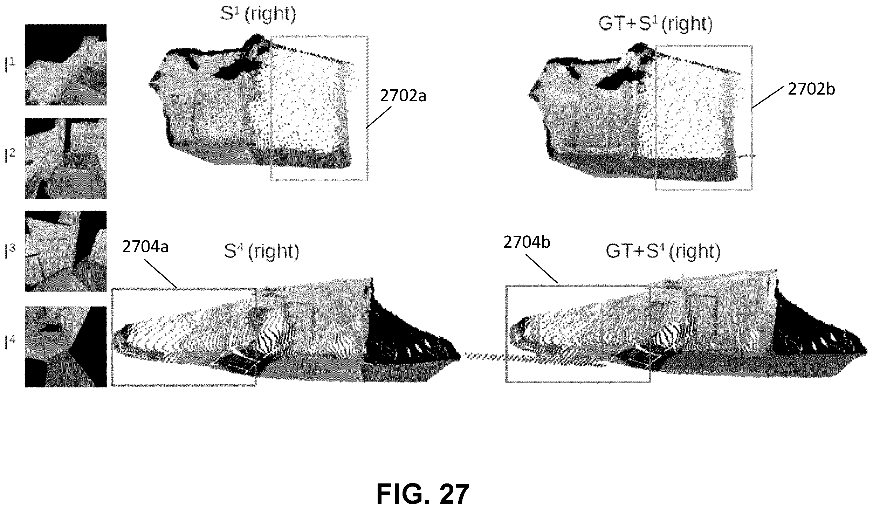

The predicted reconstructions obtained from the 4-view network on the test set, containing scenes and camera setups that were never observed during training, are reviewed. As depicted in Figure 25, the reconstruction is consistent and faithful. Interestingly, the output point clouds roughly respect the camera geometry and the proportions of the objects in the scene. Angles between walls and floors is consistent with the ground-truth, as seen in Figure 26. Importantly, the reconstruction aligns correctly between views, e.g., the planes of the walls and floors predicted by one view are consistently overlapping with the predictions from other views. The images contain many masked (undefined) pixels, visualized in black. They do not interfere with the prediction as seen in Figure 26, meaning that it is possible to train such method with sparse or incomplete annotations. Please note that the reconstruction is again particularly challenging, with very few images, large baselines, extreme viewpoint changes and varying focal lengths. For the latter, its impact is seen in Figure 25 on the predicted pointmap for view 2, where the predicted perspective distortion does not exactly match that of the ground-truth: both bottom left corners do not end up exactly in the same 3D location. Yet, the predicted surface of the wall is consistent with other views and aligns almost perfectly with the ground truth. The C-GAR method seems to be especially robust to low-contrast regions and usually infers smooth planar regions when little image gradients are present, as depicted at 2702 in Figure 27, where the pointmap reconstructed from one view $I^1$ correctly recovers the blank wall and the low-texture regions 2702, and in the case where only a single view observes an area 2704, it can still be reconstructed in a monocular fashion, relying only on shape and depth priors, but due to the ill-posedness of the task, the reconstruction suffers from depth ambiguity when there are few perspective cues or no "familiar" objects. This seems to be a reasonable behavior, that produces floors and walls at the correct depth and relative angles. Of course, when a single image observes a part of a scene and the scale and depth cannot be guessed from the data, the reconstruction is smooth but diverges from the expected output as shown at 2704 in Figure 27.

**Section D.4.4 Real Data**

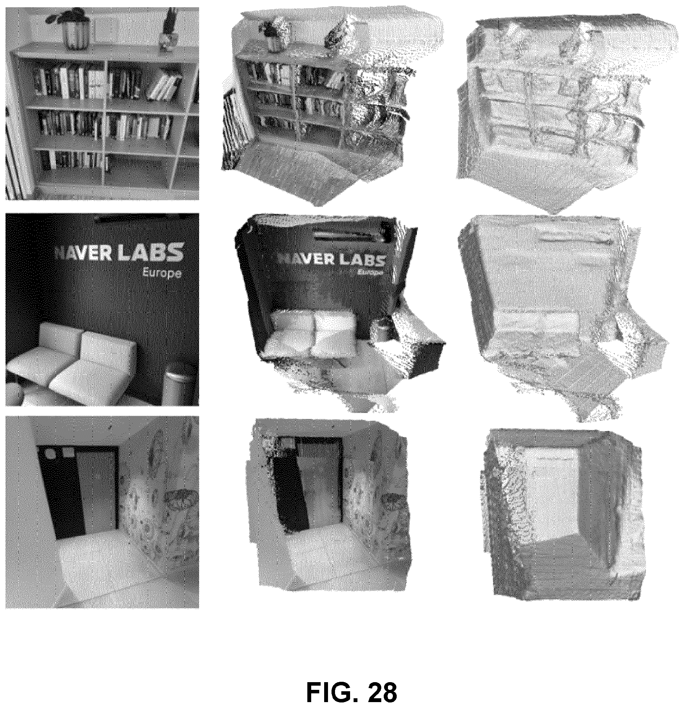

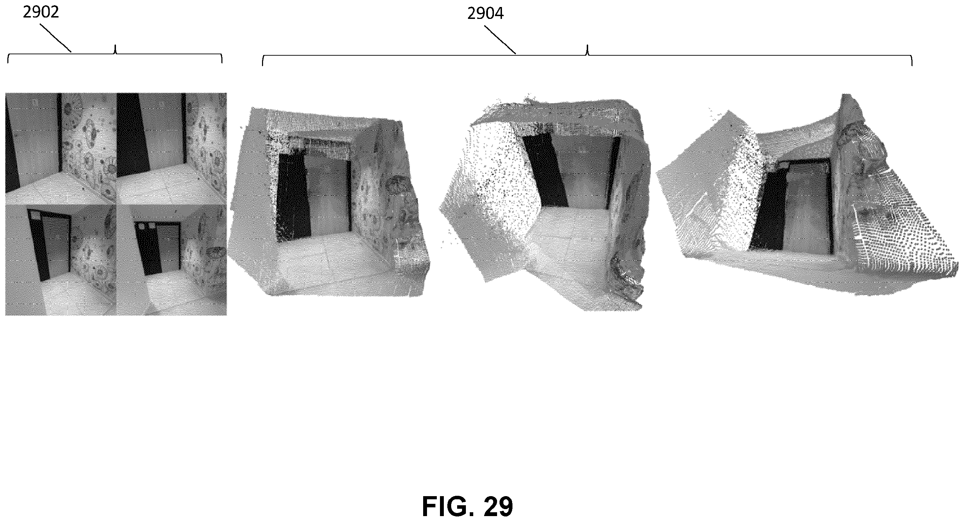

To further demonstrate the feasibility and effectiveness of the approach, the disclosed network (trained on synthetic 4-view data) is tested on real data. Several scenes of a room are reconstructed that were acquired in a matter of seconds with a handheld smartphone, downscaled and center-cropped at the network input resolution ($224 \times 224$). The reconstruction takes roughly 10 seconds and 10 GB peak memory on an A100 machine. This data is tested two scenarios: the monocular and multi-view setup. In the monocular case, instead of having a single image as input, the static camera case is simulated by replicating the image four times as input. The output is thus four pointmaps observed by the same camera. Interestingly, they are all very consistent and almost perfectly overlapping, as shown at 2108 in Figure 21. The 4-view case 2104 is also quite convincing, the cafeteria sofas and the shelf are consistent with reality, with square angles and reasonable depths. As in previous observations, on the shelf scene, the left barrier, the floor and the slanted ceiling are barely observed, yet they are recovered nicely. Normals are visualized for clearer understanding of the geometry in Figure 28. Specifically, in Figure 28 images of real data are shown in the left column, approximate normals from the point cloud are shown in the right column are computed for clearer visualizations of the geometry of reconstructed scenes are shown in the middle. Finally, testing occurs with multiple unknown focal lengths in Figure 29 using the C-GAR network: four input view points 2902 are taken from two viewpoints (columns) with both narrow and wide angle lenses (rows). Even with a model trained on 1M synthetic scenes, the reconstruction 2904 is consistent and the C-GAR network successfully manages to align the views regardless of the un-calibrated acquisition devices. The reconstructed scene 2904 respects the real world geometry even with drastic focal changes.

While not all the inference modes explained in the previous Section may have been implemented, they are expected to work. A very similar formulation is to be explored with direct inference, where evaluations in real-life scenarios will be conducted.

**Section D.5 Discussion**

**Stepping back.** A scene representation is usually expressed in a 3-dimensional (static scenes) or 4-dimensional (dynamic scenes) world. The former being a special case of the latter where the scene is constant through time. These can be point clouds, surface meshes, implicit forms, etc., but in all cases, a mapping between the 2D pixels and the 3D world has to be found in order to build these representation.

Coarsely put, geometric vision tasks all consist in studying the mapping between 2D pixels and the world representation. For instance, static 3D reconstruction with depth maps aims at finding a one-to-one mapping between pixels and the observed surface points. In this case the *surface* is the interface of a binary indicator in 3D space whether matter is transparent (empty space) and opaque (matter to be found). This mapping idea extends to novel-view synthesis with the dominant NeRF like methods, where the mapping is now a one-to-many: each pixel is associated with a ray in 3D space, and it's appearance is the integration of scene colors weighted by the transparency, e.g., the relaxed equivalent of binary *occupancy*. Visual Localization, that consists in recovering camera poses in a mapped environment, can also be expressed in the form of a one-to-many mapping to be found. While it is always cast as methods to recover relative poses (rotation and translation) with a known camera model (usually pinhole), it is possible to reformulate it as the task of finding, for the 2D pixels in the image, the set of 3D points seen by this pixel. Because light travels in straight lines at human scale, it amounts to finding the parameters of the rays that traverse the scene representation. Note that this is only valid for static scenes however.

**The disclosed philosophy.** All proper MVS methods prior to this Section require estimates of the camera parameters. Curiously, recovering approximate camera parameters in the classical pipeline requires solving the reconstruction problem (SfM) to obtain the cameras, that are then used to solve the reconstruction problem. This seems paradoxical and inappropriate. Also, because these camera models are theoretical formulations, they are never perfectly accurate, even when including more elaborate distortion parameters. This means 3D reconstruction is a highly non- convex optimization problem solved using inexact camera model constraints. In this Section, it is shown that such constraints can be relaxed and that the *maximal problem* can be tackled as a whole. By never enforcing any camera model, the network learns robust priors about the image formation process (including complex distortions) while being able to leverage 2D priors due to the convolutional nature of the architecture, and 3D priors due to the global attention mechanisms. Again, the disclosed approach is robust to pure camera rotation and still/monocular scenes cameras, meaning that this Section effectively bridges monocular and multi-view reconstruction in a common framework.

**Broader Impact.** It is understood that this disclosure is a significant step towards a foundation model for geometric tasks: an input collection of images is used to build an explicit world representation. The fact that the output point clouds roughly respect the laws of projective geometry means that the network discovered a set of soft *rules* about the world, purely from the properties of the training data. Importantly for a foundation model, it is possible to extract from this output representation all the usual geometric measurements (i.e., downstream tasks). For instance, camera pose, depth, normals, 3D shape, and edges may be recovered. Adding RGB color to the pointmaps could even allow for novel view rendering via Gaussian Splatting approaches, if ever needed. In the context of autonomous navigation though, the explicit nature of this model is questionable: a well behaved robot is expected to navigate properly in a complex environment, and the user might not care about the quality of it's pixel matching algorithm, or the geometric accuracy of its internal representation. It is interesting to see that the *maximal problem* for MVS was solved, thus skipping all intermediate steps of the traditional process. It is to be expected that for a capable agent, an explicit 3D model might not be the end result, but rather yet another intermediate step towards autonomous navigation. As for this Section, the intermediate representation might not need be explicit, and could instead be implicitly encoded in the network's representation. Yet, being able to output an explicit world model from the pretrained CroCo implicit representation is a clear indicator that the learned representation and matching mechanisms are relevant for geometric tasks. If another proof of CroCo's performance, the same approach with a random initialization struggles to converge and performs significantly worse.

**Limitations.** Predictions made herein live in a normalized 3D world, so there is no notion of scale. No experiment were performed with un-normalized diffusion, or absolute scale prediction, which could be relevant in specific scenarios. Finally, the disclosed approach has a quadratic dependency with respect to the number of views. This may become a problem for real-world navigation, e.g., in SLAM scenarios. Of course, Image Retrieval (IR) and/or keyframes can be relied on to sparsify the dense attention graph. Yet, a proper foundation model would be expected to have built-in operations to do it. A possible direction to overcome this problem would be to work with transformer networks that could access and update a fixed-size memory. With each incoming observation, the network would build or update an implicit world model, with fixed computational and memory complexity. The scene reconstruction would then be extracted from this representation, if ever needed. This approach would only have a linear complexity with respect to the number of frames, where the disclosed approach without retrieval has a quadratic dependency on the number of views.

**Section E. General**

The foregoing description is merely illustrative in nature and is in no way intended to limit the disclosure, its application, or uses. The broad teachings of the disclosure may be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure may be implemented in and/or combined with features of any of the other embodiments, even if that combination is not explicitly described. In other words, the described embodiments are not mutually exclusive, and permutations of one or more embodiments with one another remain within the scope of this disclosure.

All publications, patents, and patent applications expressly cited herein are hereby incorporated by reference in their entirety, without an admission that any of such publications, patents, or patent applications necessarily constitute prior art. It will be appreciated that various of the above-disclosed and other features and functions, or alternatives thereof, may be desirably combined into many other different systems or applications. Also, various presently unforeseen or unanticipated alternatives, modifications, variations or improvements therein may be subsequently made by those skilled in the art and are also intended to be encompassed by the following claims.

**Claims**

1. A computer-implemented method for reconstructing a scene (301) in three dimensions from a plurality of images (302a, 302b, ... 302n) of one or more viewpoints of the scene acquired using an imaging device, comprising:

   receiving (502) the plurality of images without receiving extrinsic or intrinsic properties of the imaging device; and processing (504) the plurality of images using a neural network (304) to produce a plurality of pointmaps (306) of the scene that correspond to the plurality of images and that are aligned in a common coordinate frame (308); wherein each pointmap is a one-to-one mapping between pixels of one of the plurality of images and three-dimensional points of the scene.

2. A computer-implemented method according to claim 1, wherein said processing the plurality of images (302a, 302b, ... 302n) using the neural network (304) further comprises: processing the plurality of images using the neural network to produce a plurality of local feature maps (818) that correspond to each of the plurality of images.

3. A computer-implemented method according to claim 2, further comprising performing one of the following applications using the plurality of pointmaps of the scene: (i) rendering a pointcloud of the scene for a given camera pose; (ii) recovering camera parameters of the scene; (iii) recovering depth maps of the scene for a given camera pose; and (iv) recovering three dimensional meshes of the scene.

4. A computer-implemented method according to claim 3, further comprising performing visual localization in the scene using the recovered camera parameters.

5. A computer-implemented method according to one of claims 1 to 4, wherein said processing the plurality of images using the neural network further comprises:

   processing a plurality of image subsets of the plurality of images using the neural network, wherein each image subset of the plurality of image subsets includes different ones of the plurality of images; and aligning (510) pointmaps (306a, 306b, ... 306n) from the plurality of image subsets into the plurality of pointmaps that are aligned in the common coordinate frame (308) using a global aligner (407) that performs regression based alignment.

6. A computer-implemented method according to one of claims 2 to 4, wherein said processing the plurality of images using the neural network further comprises:

   processing a plurality of image subsets of the plurality of images using the neural network, wherein each image subset of the plurality of image subsets includes different ones of the plurality of images; and aligning pointmaps (306a, 306b, ... 306n) from the plurality of image subsets into the plurality of pointmaps that are aligned in the common coordinate frame using an alignment module (820) that performs pixel correspondence based alignment using the plurality of local feature maps (818).

7. A computer-implemented method according to one of claims 1 to 5, wherein said processing the plurality of images (302a, 302b, ... 302n) using the neural network (304) further comprises:

(a) for each of the plurality of images: (i) generating patches (805a, 805b, ... 805n) with a pre-encoder; (ii) encoding the generated patches with a transformer encoder (806) to define token encodings (807a, 807b, ... 807n) that represent the generated patches; and (iii) decoding the token encodings with a transformer decoder to generate token decodings (809a, 809b, ... 809n);
(b1) for one of the token decodings (809a), generating a pointmap (306a) corresponding to one of the plurality of images with a first regression head (811a) that produces pointmaps in a coordinate frame of the one of the plurality of images; and
(c1) for each of other of the token decodings (809b, ... 809n), generating a pointmap (306b, ... 306n) corresponding to each of the other of the plurality of images with a second regression head (811b) that produces pointmaps in the coordinate frame of the one of the plurality of images.

8. A computer-implemented method according to claim 7, wherein said processing the plurality of images (302a, 302b, ... 302n) using the neural network (304) further comprises:

(b2) for the one of the token decodings (809a), generating with a first descriptor head (817a) a local feature map (818a) of the one of the plurality of images (302a); and
(c2) for each of the other of the token decodings (809b ... 809n), generating with a second descriptor head (817b) local feature maps (818b ... 818n) of the other of the plurality of images (302b ... 302n), respectively;
wherein the first and second descriptor heads (817a, 817b) match features between image pixels of the plurality of images.

9. A computer-implemented method according to one of claims 1 to 5, wherein said processing the plurality of images using the neural network further comprises:

(a) initializing the plurality of pointmaps;
(b) for each of the plurality of images: (i) generating image patches with a pre-encoder; and (ii) encoding the generated image patches with a transformer encoder to define image token encodings that represent the generated image patches;
(c) for each of the plurality of pointmaps: (i) generating pointmap patches with a pre-encoder; and (ii) encoding the generated pointmap patches with a transformer encoder to define pointmap token encodings that represent the pointmap generated patches;
(d) for each of the plurality of image token encodings and corresponding of the plurality of pointmap token encodings, aggregating each pair with a mixer to generate mixed token encodings;
(e) for each of the generated mixed token encodings, decoding the mixed token encodings with a transformer decoder to generate mixed token decodings;
(f) for each of the mixed token decodings, replacing the plurality of pointmaps corresponding to the plurality of images with pointmaps generated by a regression head that produces pointmaps in a coordinate frame that is common to the plurality of images; and
(g) repeating (c) - (f) for a predetermined number of iterations.

10. A computer-implemented method according to one of claims 1 to 9, wherein each pointmap represents a two-dimensional field of three-dimensional points of the scene, and optionally wherein said processing the plurality of images using the neural network further comprises generating a confidence score map for each pointmap.

11. A computer-implemented method according to one of claims 1 to 10, wherein processing (504) the plurality of images further comprises expressing the plurality of images using a co-visibility graph and processing the co-visibility graph using the neural network (304) to produce the plurality of pointmaps (306) of the scene that correspond to the plurality of images and that are aligned in the common coordinate frame.

12. A computer-implemented method according to one of claims 1 to 11, further comprising using the plurality of pointmaps of the scene to recover extrinsic or intrinsic parameters of the imaging device.

13. A computer-implemented method according to claim 12, wherein the extrinsic properties of the imaging device include rotation and translation of the imaging device or wherein the intrinsic properties of the imaging device include skew and focal length.

14. A computer-implemented method according to one of claims 1 to 13, wherein the neural network performs cross attention between views of the scene.

15. A computer program product comprising code instructions which, when the program is executed by a computer, cause the computer to carry the method according to one of claims 1 to 14.

**FIG. 1**

202

**204**

**Input Devices**

206
GPS/WIFI

208
Lidar

210
Camera

212
Sensors

**214**

**Control Elements**

203
Dataset

205
Training Module

207
Inference Module

209
Control Module

FOV

**216**

**Output Devices**

218
Display

220
Speaker

222
Haptic Actuator

224
Lights

**226**

**Propulsion Devices**

228
Legs

230
Arms

232
Grippers

234
Joints

## FIG. 2

300

301
Scene

302a
Image$_1$

302b
Image$_2$
...

302n
Image$_N$

304
Neural Network

306a
Pointmap$_1$

306b
Pointmap$_2$
...

306n
Pointmap$_N$

308

310
3D Reconstruction Application

aligned in a common coordinate frame

## FIG. 3

400

FIG. 4

502

Receiving a plurality of images, without receiving extrinsic or intrinsic properties of an imaging device that captured the plurality of images of a scene

504

Processing the plurality of images using a neural network to produce a plurality of pointmaps of the scene that correspond to the plurality images and that are aligned in a common coordinate frame

506

Yes

Additional image subsets of the scene to process?

No

508

A plurality of image subsets of the scene processed by neural network?

No

Yes

510

Align pointmaps from the plurality of image subsets into the plurality of pointmaps that are expressed in a common coordinate frame

512

Use aligned pointmaps to perform 3D reconstruction application

FIG. 5

302a

Image $I_1$

306a

Pointmap $X^{1,1}$

603

**2D image pixels:**

(1,1),

(1,2),

...

(5,5)

602

605

**mapping:**

$X$ is one-to-one mapping between
2D image pixels and 3D scene points

604

**3D scene points:**

(0,3,1),

(5,2,4),

...

(2,5,3)

607

Image $I_1$

$\in \mathbb{R}^{W \times H \times 3}$

606

609

**mapping:**

$I_{i,j} \leftrightarrow X_{i,j}$

for all pixel coordinates i,j $\in \mathbb{N}^{W \times H}$

2D field of
3D scene points

608

(3,4,1)

Pointmap $X^{1,1}$

$\in \mathbb{R}^{W \times H \times 3}$

**FIG. 6**

702

For each of the plurality of images: (i) generate patches with a pre-encoder; (ii) encode the generated patches with a transformer encoder to define token encodings that represent the generated patches; and (iii) decode the token encodings with a transformer decoder to generate token decodings

704

For one of the token decodings, generate a pointmap corresponding to one of the plurality of images with a first regression head that produces pointmaps in a coordinate frame of the one of the plurality of images

706

For each of other of the token decodings, generate a pointmap corresponding to each of the other of the plurality of images with a second regression head that produces pointmaps in the coordinate frame of the one of the plurality of images

708

Output pointmaps corresponding to the plurality of images aligned in the coordinate frame of the one of the plurality of images

## FIG. 7A

702

For each of the plurality of images: (i) generate patches with a pre-encoder; (ii) encode the generated patches with a transformer encoder to define token encodings that represent the generated patches; and (iii) decode the token encodings with a transformer decoder to generate token decodings

705

For one of the token decodings, generate (i) a pointmap corresponding to one of the plurality of images with a first 3D regression head that produces pointmaps in a coordinate frame of the one of the plurality of images and (ii) a local feature map corresponding to one of the plurality of images with a first descriptor head that produces feature maps in a coordinate frame of the one of the plurality of images

707

For each of other of the token decodings, generate (i) a pointmap corresponding to each of the other of the plurality of images with a second 3D regression head that produces pointmaps in the coordinate frame of the one of the plurality of images and (ii) a local feature map corresponding to one of the plurality of images with a second descriptor head that produces feature maps in a coordinate frame of the one of the plurality of images

709

Output (i) pointmaps corresponding to the plurality of images aligned in the coordinate frame of the one of the plurality of images and (ii) corresponding local feature maps

## FIG. 7B

FIG. 8A

**FIG. 8B**

**FIG. 8C**

**FIG. 8D**

902

Initialize a plurality of pointmaps with random input

904

For each of the plurality of images: (i) generating image patches with a pre-encoder; and (ii) encoding the generated image patches with a transformer encoder to define image token encodings that represent the generated image patches

906

For each of the plurality of pointmaps: (i) generating pointmap patches with a pre-encoder; and (ii) encoding the generated pointmap patches with a transformer encoder to define pointmap token encodings that represent the pointmap generated patches

908

For each of the plurality of image token encodings and corresponding of the plurality of pointmap token encodings, aggregating each pair with a mixer to generate mixed token encodings

910

For each of the generated mixed token encodings, decoding the mixed token encodings with a transformer decoder to generate mixed token decodings

912

For each of the mixed token decodings, replacing the plurality of pointmaps corresponding to the plurality of images with pointmaps generated by a regression head that produces pointmaps in a coordinate frame that is common to the plurality of images

914

No

Predetermined number of iterations completed?

Yes

916

Output pointmaps corresponding to the plurality of images aligned in the common coordinate frame

## FIG. 9

**FIG. 10**

FIG. 11

FIG. 12A

FIG. 12B

FIG. 13A

FIG. 13B

1402a 1404a 1406a

1408a

1410a

**FIG. 14**

1402b        1404b        1406b

1408b

1410b

**FIG. 15**

FIG. 16

FIG. 17

**FIG. 18A**

**FIG. 18B**

**FIG. 18C**

**FIG. 18D**

FIG. 19

EP 4 576 016 A1

**FIG. 20A**

**FIG. 20B**

**FIG. 21**

**FIG. 22**

FIG. 23

2402

2404

FIG. 24

**FIG. 25**

2602

2604

**FIG. 26**

FIG. 27

# FIG. 28

2902

2904

**FIG. 29**

EP 4 576 016 A1

**FIG. 30**

FIG. 31

FIG. 32

| Methods | 7Scenes (Indoor) | | | | | | | Cambridge (Outdoor) | | | | |
|---|---|---|---|---|---|---|---|---|---|---|---|---|
| | Chess | Fire | Heads | Office | Pumpkin | Kitchen | Stairs | S. Facade | O. Hospital | K. College | St.Mary's | G. Court |
| **FM** AS | | 4/1.96 | 3/1.53 | 2/1.45 | 9/3.61 | 8/3.10 | 7/3.37 | 3/2.22 | **4/0.21** | 20/0.36 | 13/0.22 | 8/0.25 | 24/**0.13** |
| HLoc | **2/0.79** | **2/0.87** | **2/0.92** | **3/0.91** | **5/1.12** | **4/1.25** | 6/**1.62** | **4/0.2** | **15/0.3** | **12/0.20** | **7/0.21** | 11/0.16 |
| **E2E** DSAC* | 2/1.10 | 2/1.24 | 1/1.82 | 3/1.15 | 4/1.34 | 4/1.68 | 3/1.16 | 5/0.3 | **15/0.3** | 15/0.3 | 13/0.4 | 49/0.3 |
| HSCNet | **2/0.7** | 2/0.9 | 1/0.9 | **3/0.8** | **4/1.0** | 4/1.2 | **3/0.8** | 6/0.3 | 19/**0.3** | 18/0.3 | 9/0.3 | 28/0.2 |
| PixLoc | 2/0/80 | **2/0.73** | **1/0.82** | 3/0.82 | 4/1.21 | **3/1.20** | 5/1.30 | **5/0.23** | 16/0.32 | 14/0.24 | 10/0.34 | 30/0.14 |
| SC-wLS | 3/0.76 | 5/1.09 | 3/1.92 | 6/0.86 | 8/1.27 | 9/1.43 | 12/2.80 | 11/0.7 | 42/1.7 | 14/0.6 | 39/1.3 | 164/0.9 |
| NeuMaps | 2/0.81 | 3/1.11 | 2/1.17 | 3/0.98 | **4/1.11** | 4/1.33 | 4/1.12 | 6/0.25 | 19/0.36 | 14/0.19 | 17/0.53 | **6/ 0.10** |
| **DUSt3R 224-NoCroCo** | 5/1.76 | 6/2.02 | 3/1.75 | 5/1.54 | 9/2.35 | 6/1.82 | 34/7.81 | 24/1.33 | 79/1.17 | 69/1.15 | 46/1.51 | 143/1.32 |
| **DUSt3R 224** | 3/0.96 | 3/1.02 | 1/1.00 | 4/1.04 | 5/1.26 | 4/1.36 | 21/4.08 | 9/0.38 | 26/0.46 | 20/0.32 | 11/0.38 | 36/0.24 |
| **DUSt3R 512** | 3/0.97 | 3/0.95 | 2/1.37 | **3/1.01** | 4/1.14 | 4/1.34 | 11/2.84 | 6/0.26 | 17/0.33 | **11/0.20** | **7/0.24** | 38/0.16 |

## FIG. 33

| Methods | Train | Outdoor | | | | | | Indoor | | | |
|---|---|---|---|---|---|---|---|---|---|---|---|
| | | DDAD | | KITTI | | BONN | | NYUD-v2 | | TUM | |
| | | Rel↓ | $\delta_{1.25}$ ↑ | Rel↓ | $\delta_{1.25}$ ↑ | Rel↓ | $\delta_{1.25}$ ↑ | Rel↓ | $\delta_{1.25}$ ↑ | Rel↓ | $\delta_{1.25}$ ↑ |
| DPT-BEiT | D | 10.70 | **84.63** | 9.45 | 89.27 | - | - | **5.40** | **96.54** | **10.45** | **89.68** |
| NeWCRFs | D | **9.59** | 82.92 | **5.43** | **91.54** | - | - | 6.22 | 95.58 | 14.63 | 82.95 |
| Monodepth2 | SS | 23.91 | 75.22 | 11.42 | 86.90 | 56.49 | 35.18 | 16.19 | 74.50 | 31.20 | 47.42 |
| SC-SfM-Learners | SS | 16.92 | 77.28 | 11.83 | 86.61 | 21.11 | 71.40 | 13.79 | 79.57 | 22.29 | 64.30 |
| SC-DepthV3 | SS | **14.20** | **81.27** | 11.79 | 86.39 | **12.58** | **88.92** | 12.34 | **84.80** | 16.28 | **79.67** |
| MonoViT | SS | - | - | **09.92** | **90.01** | - | - | - | - | - | |
| RobustMIX | T | - | - | 18.25 | 76.95 | - | - | 11.77 | 90.45 | 15.65 | **86.59** |
| SlowTv | T | **12.63** | 79.34 | (6.84) | (56.17) | - | - | 11.59 | 87.23 | 15.02 | 80.86 |
| **DUSt3R 224-NoCroCo** | T | 19.63 | 70.03 | 20.10 | 71.21 | 14.44 | 86.00 | 14.51 | 81.06 | 22.14 | 66.26 |
| **DUSt3R 224** | T | 16.32 | 77.58 | 16.97 | 77.89 | 11.05 | 89.95 | 10.28 | 88.92 | 17.61 | 75.44 |
| **DUSt3R 512** | T | 13.88 | 81.17 | **10.74** | **86.60** | **8.08** | **93.56** | **6.50** | 94.09 | **14.17** | 79.89 |

## FIG. 34

| Methods | Co3Dv2 | | | RealEstate10K |
|---|---|---|---|---|
| | RRA@15 | RTA@15 | mAA(30) | mAA(30) |
| RelPose | 57.1 | - | - | - |
| Colmap+SPSG | 36.1 | 27.3 | 25.3 | 45.2 |
| PixSfM | 33.7 | 32.9 | 30.1 | 49.4 |
| PosReg | 53.2 | 49.1 | 45.0 | - |
| PoseDiffusion | 80.5 | 79.8 | 66.5 | 48.0 |
| **DUSt3R 512 (w/ PnP)** | 94.3 | **88.4** | **77.2** | 61.2 |
| **DUSt3R 512 (w/ GA)** | **96.2** | 86.8 | 76.7 | **67.7** |

## FIG. 35

| | Methods | GT cams | Acc.↓ | Comp.↓ | Overall↓ |
|---|---|---|---|---|---|
| (a) | Camp | ✓ | 0.835 | 0.554 | 0.695 |
| | Furu | ✓ | 0.613 | 0.941 | 0.777 |
| | Tola | ✓ | 0.342 | 1.190 | 0.766 |
| | Gipuma | ✓ | **0.283** | 0.873 | 0.578 |
| (b) | MVSNet | ✓ | 0.396 | 0.527 | 0.462 |
| | CVP-MVSNet | ✓ | 0.296 | 0.406 | 0.351 |
| | UCS-Net | ✓ | 0.338 | 0.349 | 0.344 |
| | CER-MVS | ✓ | 0.359 | 0.305 | 0.332 |
| | CIDER | ✓ | 0.417 | 0.437 | 0.427 |
| | PatchmatchNet | ✓ | 0.427 | 0.277 | 0.352 |
| | GeoMVSNet | ✓ | 0.331 | **0.259** | **0.295** |
| | **DUSt3R 512** | × | 2.677 | 0.805 | 1.741 |

## FIG. 36

| Methods | N Frames | Co3Dv2 | | | RealEstate10K |
|---|---|---|---|---|---|
| | | RRA@15 | RTA@15 | mAA(30) | mAA(30) |
| COLMAP+SPSG | 3 | ~22 | ~14 | ~15 | ~23 |
| PixSfM | 3 | ~18 | ~8 | ~10 | ~17 |
| Relpose | 3 | ~56 | - | - | - |
| PoseDiffusion | 3 | ~75 | ~75 | ~61 | - (~77) |
| **DUSt3R 512** | 3 | 95.3 | **88.3** | **77.5** | **69.5** |
| COLMAP+SPSG | 5 | ~21 | ~17 | ~17 | ~34 |
| PixSfM | 5 | ~21 | ~16 | ~15 | ~30 |
| Relpose | 5 | ~56 | - | - | - |
| PoseDiffusion | 5 | ~77 | ~76 | ~63 | - (~78) |
| **DUSt3R 512** | 5 | 95.5 | 86.7 | 76.5 | 67.4 |
| COLMAP+SPSG | 10 | 31.6 | 27.3 | 25.3 | 45.2 |
| PixSfM | 10 | 33.7 | 32.9 | 30.1 | 49.4 |
| Relpose | 10 | 57.1 | - | - | - |
| PoseDiffusion | 10 | 80.5 | 79.8 | 66.5 | 48.0 (~80) |
| **DUSt3R 512** | 10 | **96.2** | 86.8 | 76.7 | 67.7 |

## FIG. 37

| Methods | GT Pose | GT Range | GT Intrinsics | Align | KITTI rel ↓ | τ ↑ | ScanNet rel ↓ | τ ↑ | ETH3D rel ↓ | τ ↑ | DTU rel ↓ | τ ↑ | T&T rel ↓ | τ ↑ | Average rel ↓ | τ ↑ | time (s) ↓ |
|---|---|---|---|---|---|---|---|---|---|---|---|---|---|---|---|---|---|
| (a) COLM. | ✓ | ✗ | ✓ | ✗ | **12.0** | **58.2** | **14.6** | **34.2** | **16.4** | **55.1** | 0.7 | 96.5 | 2.7 | 95.0 | 9.3 | **67.8** | ≈ 3 min |
| COLMAP Dense | ✓ | ✗ | ✓ | ✗ | 26.9 | 52.7 | 38.0 | 22.5 | 89.8 | 23.2 | 20.8 | 69.3 | 25.7 | 76.4 | 40.2 | 48.8 | ≈ 3 min |
| (b) MVSNet | ✓ | ✓ | ✓ | ✗ | 22.7 | 36.1 | 24.6 | 20.4 | 35.4 | 31.4 | (1.8) | (86.0) | 8.3 | 73.0 | 18.6 | 49.4 | 0.07 |
| MVSNet Inv. Depth | ✓ | ✓ | ✓ | ✗ | 18.6 | 30.7 | 22.7 | 20.9 | 21.6 | 35.6 | (1.8) | (86.7) | 6.5 | 74.6 | 14.2 | 49.7 | 0.32 |
| Vis-MVSSNet | ✓ | ✓ | ✓ | ✗ | **9.5** | **55.4** | 8.9 | 33.5 | **10.8** | **43.3** | (1.8) | (**87.4**) | **4.1** | 87.2 | **7.0** | **61.4** | 0.70 |
| MVS2D ScanNet | ✓ | ✓ | ✓ | ✗ | 21.2 | 8.7 | (27.2) | (5.3) | 27.4 | 4.8 | 17.2 | 9.8 | 29.2 | 4.4 | 24.4 | 6.6 | **0.04** |
| MVS2D DTU | ✓ | ✓ | ✓ | ✗ | 226.6 | 0.7 | 32.3 | 11.1 | 99.0 | 11.6 | (3.6) | (64.2) | 25.8 | 28.0 | 77.5 | 23.1 | 0.05 |
| (c) DeMon | ✓ | ✗ | ✓ | ✗ | 16.7 | 13.4 | 75.0 | 0.0 | 19.0 | 16.2 | 23.7 | 11.5 | 17.6 | 18.3 | 30.4 | 11.9 | 0.08 |
| DeepV2D KITTI | ✓ | ✗ | ✓ | ✗ | (20.4) | (16.3) | 25.8 | 8.1 | 30.1 | 9.4 | 24.6 | 8.2 | 38.5 | 9.6 | 27.9 | 10.3 | 1.43 |
| DeepV2D ScanNet | ✓ | ✗ | ✓ | ✗ | 61.9 | 5.2 | (3.8) | (60.2) | 18.7 | 28.7 | 9.2 | 27.4 | 33.5 | 38.0 | 25.4 | 31.9 | 2.15 |
| MVSNet | ✓ | ✗ | ✓ | ✗ | 14.0 | 35.8 | 1568.0 | 5.7 | 507.7 | 8.3 | (4429.1) | (0.1) | 118.2 | 50.7 | 1327.4 | 20.1 | 0.15 |
| MVSNet Inv. Depth | ✓ | ✗ | ✓ | ✗ | 29.6 | 8.1 | 65.2 | 28.5 | 60.3 | 5.8 | (28.7) | (48.9) | 51.4 | 14.6 | 47.0 | 21.2 | 0.28 |
| Vis-MVSNet | ✓ | ✗ | ✓ | ✗ | 10.3 | **54.4** | 84.9 | 15.6 | 51.5 | 17.4 | (374.2) | (1.7) | 21.1 | 65.6 | 108.4 | 31.0 | 0.82 |
| MVS2D ScanNet | ✓ | ✗ | ✓ | ✗ | 73.4 | 0.0 | (4.5) | (54.1) | 30.7 | 14.4 | 5.0 | 57.9 | 56.4 | 11.1 | 34.0 | 27.5 | **0.05** |
| MVS2D DTU | ✓ | ✗ | ✓ | ✗ | 93.3 | 0.0 | 51.5 | 1.6 | 78.0 | 0.0 | (1.6) | (92.3) | 87.5 | 0.0 | 62.4 | 18.8 | 0.06 |
| Robust MVD Baseline | ✓ | ✗ | ✓ | ✗ | **7.1** | 41.9 | **7.4** | **38.4** | **9.0** | **42.6** | 2.7 | 82.0 | **5.0** | **75.1** | **6.3** | **56.0** | 0.06 |
| (d) DeMoN | ✗ | ✗ | ✓ | ‖t‖ | 15.5 | 15.2 | 12.0 | 21.0 | 17.4 | 15.4 | 21.8 | 16.6 | 13.0 | 23.2 | 16.0 | 18.3 | 0.08 |
| DeepV2D KITTI | ✗ | ✗ | ✓ | med | (3.1) | (74.9) | 23.7 | 11.1 | 27.1 | 10.1 | 24.8 | 8.1 | 34.1 | 9.1 | 22.6 | 22.7 | 2.07 |
| DeepV2D ScanNet | ✗ | ✗ | ✓ | med | 10.0 | 36.2 | (**4.4**) | (54.8) | 11.8 | 29.3 | 7.7 | 33.0 | 8.9 | 46.4 | 8.6 | 39.9 | 3.57 |
| **DUSt3R 224-NoCroCo** | ✗ | ✗ | ✗ | med | 15.14 | 21.16 | 7.54 | 40.00 | 9.51 | 40.07 | 3.56 | 62.83 | 11.12 | 37.90 | 9.37 | 40.39 | **0.05** |
| **DUSt3R 224** | ✗ | ✗ | ✗ | med | 15.39 | 26.69 | (5.86) | (50.84) | 4.71 | 61.74 | **2.76** | **77.32** | 5.54 | 56.38 | 6.85 | 54.59 | **0.05** |
| **DUSt3R 512** | ✗ | ✗ | ✗ | med | **9.11** | **39.49** | (4.93) | (**60.20**) | **2.91** | **76.91** | 3.52 | 69.33 | **3.17** | **76.68** | **4.73** | **64.52** | 0.13 |

**FIG. 38**

| Methods | GT Focals | 7Scenes (Indoor) | | | | | | | Cambridge (Outdoor) | | | | |
|---|---|---|---|---|---|---|---|---|---|---|---|---|---|
| | | Chess | Fire | Heads | Office | Pumpkin | Kitchen | Stairs | S. Facade | O. Hospital | K. College | St.Mary's | G. Court |
| **DUSt3R 512 from 2D-matching** | ✓ | 3/0.97 | 3/0.95 | 2/1.37 | **3/1.01** | **4/1.14** | 4/1.34 | 11/2.84 | 6/0.26 | 17/0.33 | **11/0.20** | **7/0.24** | 38/0.16 |
| **DUSt3R 512 from scaled rel-pose** | ✕ | 5/1.08 | 5/1.18 | 4/1.33 | 6/1.05 | 7/1.25 | 6/1.37 | 26/3.56 | 64/0.97 | 151/0.88 | 102/0.88 | 79/1.46 | 245/1.08 |

## FIG. 39

| Hyperparameters | low-resolution training | high-resolution training | DPT training |
|---|---|---|---|
| Prediction Head | Linear | Linear | DPT |
| Optimizer | AdamW | AdamW | AdamW |
| Base learning rate | 1e-4 | 1e-4 | 1e-4 |
| Weight decay | 0.05 | 0.05 | 0.05 |
| Adam $\beta$ | (0.9, 0.95) | (0.9, 0.95) | (0.9, 0.95) |
| Pairs per Epoch | 700k | 70k | 70k |
| Batch size | 128 | 64 | 64 |
| Epochs | 50 | 100 | 90 |
| Warmup epochs | 10 | 20 | 15 |
| Learning rate scheduler | Cosine decay | Cosine decay | Cosine decay |
| Input resolutions | 224×224 | 512×384, 512×336 512×288, 512×256 512×160 | 512×384, 512×336 512×288, 512×256 512×160 |
| Image Augmentations | Random centered crop, color jitter | Random centered crop, color jitter | Random centered crop, color jitter |
| Initialization | CroCo v2 | low-resolution training | high-resolution training |

## FIG. 40

| | match | depth | VCRE (<90px) | | | Pose Error | | |
|---|---|---|---|---|---|---|---|---|
| | | | Reproj. ↓ | Prec. ↑ | AUC ↑ | Med. Err. (m,°)↓ | Precision ↑ | AUC ↑ |
| (I) DUSt3R | 3d | DPT | 125.8 px | 45.2% | 0.704 | 1.10m 9.4° | 17.0% | 0.344 |
| (II) MASt3R | 3d | DPT | 112.0 px | 49.9% | 0.732 | 0.94m 3.6° | 21.5% | 0.409 |
| (III) MASt3R-M | feat | DPT | <u>107.7</u> px | <u>51.7%</u> | 0.744 | 1.10m 10.8° | 19.3% | 0.382 |
| (IV) MASt3R | feat | DPT | 112.9 px | 51.5% | <u>0.752</u> | <u>0.93m 3.0°</u> | <u>23.2%</u> | <u>0.435</u> |
| (V) MASt3R | feat | (auto) | **57.2** px | **75.9%** | **0.934** | **0.46m 3.0°** | **51.7%** | **0.746** |

**FIG. 41**

| | depth | VCRE (<90px) | | | Pose Error | | |
|---|---|---|---|---|---|---|---|
| | | Reproj. ↓ | Prec. ↑ | AUC ↑ | Med. Err. (m,°)↓ | Precision ↑ | AUC ↑ |
| RPR | DPT | 147.1 px | 40.2% | 0.402 | 1.68m 22.5° | 6.0% | 0.060 |
| SIFT | DPT | 222.8 px | 25.0% | 0.504 | 2.93m 61.4° | 10.3% | 0.252 |
| SP+SG | DPT | 160.3 px | 36.1% | 0.602 | 1.88m 25.4° | 16.8% | 0.346 |
| LoFTR | KBR | 165.0 px | 34.3% | 0.634 | 2.23m 37.8° | 11.0% | 0.295 |
| DUSt3R | DPT | 116.0 px | 50.3% | 0.697 | 0.97m 7.1° | 21.6% | 0.394 |
| MASt3R | DPT | 104.0 px | 54.2% | 0.726 | 0.80m **2.2°** | 27.0% | 0.456 |
| MASt3R | (auto) | **48.7** px | **79.3%** | 0.933 | **0.36m 2.2°** | **54.7%** | 0.740 |
| MASt3R (direct reg.) | | 53.2 px | 79.1% | **0.941** | 0.42m 3.1° | 53.0% | **0.777** |

**FIG. 42**

| | Methods | Co3Dv2 | | | RealEstate10K |
|---|---|---|---|---|---|
| | | RRA@15 | RTA@15 | mAA(30) | mAA(30) |
| (a) | Colmap+SG | 36.1 | 27.3 | 25.3 | 45.2 |
| | PixSfM | 33.7 | 32.9 | 30.1 | 49.4 |
| | RelPose | 57.1 | - | - | - |
| | PosReg | 53.2 | 49.1 | 45.0 | - |
| | PoseDiff | 80.5 | 79.8 | 66.5 | 48.0 |
| | RelPose++ | (85.5) | - | - | - |
| | RayDiff | (93.3) | - | - | - |
| | DUSt3R-GA | **96.2** | 86.8 | 76.7 | 67.7 |
| (b) | DUSt3R | 94.3 | 88.4 | 77.2 | 61.2 |
| | **MASt3R** | 94.6 | **91.9** | **81.8** | **76.4** |

## FIG. 43

| | Methods | Acc.↓ | Comp.↓ | Overall↓ |
|---|---|---|---|---|
| (c) | Camp | 0.835 | 0.554 | 0.695 |
| | Furu | 0.613 | 0.941 | 0.777 |
| | Tola | 0.342 | 1.190 | 0.766 |
| | Gipuma | **0.283** | 0.873 | 0.578 |
| (d) | MVSNet | 0.396 | 0.527 | 0.462 |
| | CVP-MVSNet | 0.296 | 0.406 | 0.351 |
| | UCS-Net | 0.338 | 0.349 | 0.344 |
| | CER-MVS | 0.359 | 0.305 | 0.332 |
| | CIDER | 0.417 | 0.437 | 0.427 |
| | PatchmatchNet | 0.427 | 0.277 | 0.352 |
| | GeoMVSNet | 0.331 | **0.259** | **0.295** |
| (e) | DUSt3R | 2.677 | 0.805 | 1.741 |
| | MASt3R | 0.403 | 0.344 | 0.374 |

## FIG. 44

| Methods | AachenDayNight | | InLoc | |
|---|---|---|---|---|
| | Day | Night | DUC1 | DUC2 |
| Kapture+R2D2 | **91.3/97.0/99.5** | **78.5/91.6/100** | 41.4/60.1/73.7 | 47.3/67.2/73.3 |
| SP+SuperGlue | 89.8/96.1/99.4 | 77.0/90.6/**100** | 49.0/68.7/80.8 | 53.4/77.1/82.4 |
| SP+LightGlue | 90.2/96.0/99.4 | 77.0/91.1/**100** | 49.0/68.2/79.3 | 55.0/74.8/79.4 |
| LoFTR | 88.7/95.6/99.0 | **78.5**/90.6/99.0 | 47.5/72.2/84.8 | 54.2/74.8/85.5 |
| DKM | - | - | 51.5/75.3/86.9 | 63.4/82.4/87.8 |
| DUSt3R top1 | 72.7/89.6/98.1 | 59.7/80.1/93.2 | 36.4/55.1/66.7 | 27.5/42.7/49.6 |
| DUSt3R top20 | 79.4/94.3/**99.5** | 74.9/91.1/99.0 | 53.0/74.2/89.9 | 61.8/77.1/84.0 |
| **MASt3R top1** | 79.6/93.5/98.7 | 70.2/88.0/97.4 | 41.9/64.1/73.2 | 38.9/55.7/62.6 |
| **MASt3R top20** | 83.4/95.3/99.4 | 76.4/**91.6/100** | 55.1/77.8/90.4 | **71.0**/84.7/89.3 |
| **MASt3R top40** | 82.2/93.9/**99.5** | 75.4/**91.6/100** | **56.1/79.3/90.9** | **71.0/87.0/91.6** |
| **MASt3R direct reg. top1** | 1.5/4.5/60.7 | 1.6/4.2/47.6 | 13.1/32.3/58.1 | 10.7/26.0/38.2 |

## FIG. 45

EP 4 576 016 A1

Europäisches
Patentamt

European
Patent Office

Office européen
des brevets

# EUROPEAN SEARCH REPORT

**Application Number**

EP 24 30 5954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JEROME REVAUD ET AL: "SACReg: Scene-Agnostic Coordinate Regression for Visual Localization", ARXIV.ORG, CORNELL UNIVERSITY LIBRARY, 201 OLIN LIBRARY CORNELL UNIVERSITY ITHACA, NY 14853, 21 July 2023 (2023-07-21), XP091569961, * page 1, column 1, line 23 - column 2, line 11 * * page 1, column 2, line 13 - line 17 * * page 2, column 1, line 22 - line 40 * * page 3, column 1, line 17 - line 21 * * page 3, column 2, line 10 - line 19 * * page 3, column 2, line 22 - page 4, column 1, line 10 * * page 4, column 1, line 21 - line 30 * * page 5, column 1, line 6 - line 10 * * page 5, column 1, line 29 - line 31 * * page 6, column 1, line 20 - line 23 * * page 6, column 2, line 5 - line 18 * * page 12, column 1, line 25 - line 37 * * figures 1-3, 8 * * caption of figure 5 * ----- | 1-15 | INV. G06V10/82 G06T7/579 G06V20/64 |
| A | Anonymous: "Camera resectioning", Wikipedia, 10 November 2023 (2023-11-10), pages 1-3, XP093228926, Retrieved from the Internet: URL:https://en.wikipedia.org/w/index.php?title=Camera_resectioning&oldid=1184411805 [retrieved on 2024-11-28] * page 1, line 7 * * page 1, line 15 - line 16 * ----- | 1-15 | TECHNICAL FIELDS SEARCHED (IPC) G06V G06T |

-/--

The present search report has been drawn up for all claims

| Place of search | Date of completion of the search | Examiner |
|---|---|---|
| The Hague | 4 December 2024 | De Coi, Juri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| Europäisches Patentamt European Patent Office Office européen des brevets | **EUROPEAN SEARCH REPORT** | **Application Number** EP 24 30 5954 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TSINTOTAS KONSTANTINOS A ET AL: "The Revisiting Problem in Simultaneous Localization and Mapping: A Survey on Visual Loop Closure Detection", IEEE TRANSACTIONS ON INTELLIGENT TRANSPORTATION SYSTEMS, IEEE, PISCATAWAY, NJ, USA, vol. 23, no. 11, 23 May 2022 (2022-05-23), pages 19929-19953, XP011926405, ISSN: 1524-9050, DOI: 10.1109/TITS.2022.3175656 [retrieved on 2022-05-23] * page 19943, column 1, line 15 - line 17 * | 11 | |
| A,P | WANG SHUZHE ET AL: "DUSt3R: Geometric 3D Vision Made Easy", 2024 IEEE/CVF CONFERENCE ON COMPUTER VISION AND PATTERN RECOGNITION (CVPR), IEEE, 16 June 2024 (2024-06-16), pages 20697-20709, XP034696845, DOI: 10.1109/CVPR52733.2024.01956 [retrieved on 2024-09-16] * the whole document * | 1-15 | **TECHNICAL FIELDS SEARCHED (IPC)** |

The present search report has been drawn up for all claims

| Place of search | Date of completion of the search | Examiner |
|---|---|---|
| The Hague | 4 December 2024 | De Coi, Juri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ...........................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10452978 B
- US 18230414 A
- US 18239739 B

### Non-patent literature cited in the description

- Attention is all you need. **ASHISH VASWANI et al.** Advances in Neural Information Processing Systems. Curran Associates, Inc., 2017, vol. 30, 5998-6008
- **ALEXEY DOSOVITSKIY et al.** An image is worth 16x16 words: Transformers for image recognition at scale. *ICLR*, 2021
- **FURUKAWA et al.** Multi-View Stereo: A Tutorial. *Foundations and Trends in Computer Graphics and Vision*, 2015, vol. 9 (1-2), 1-148
- **AANAES et al.** Large-Scale Data for Multiple-View Stereopsis. *IJCV*, 2016
- **KNAPITSCH et al.** Tanks and temples: Benchmarking large-scale scene reconstruction. *ACM Transactions on Graphics*, 2017, vol. 36 (4)
- **SCHOPS et al.** A Multi-View Stereo Benchmark with High-Resolution Images and Multi-Camera Videos. *CVPR*, 2017
- **WILES et al.** SynSin: End-to-end view synthesis from a single image. *CVPR*, 2020, 7465-7475
- **WEINZAEPFEL et al.** CroCo: Self-Supervised Pre-Training for 3D Vision Tasks by Cross-View Completion. *NeurIPS*, 2022
- CroCo v2: Improved Cross-view Completion Pre-training for Stereo Matching and Optical Flow. *ICCV*, 2023
- **WAN et al.** Confnet: Predict with confidence. *ICASSP*, 2018, 2921-2925
- The Weiszfeld Algorithm: Proof, Amendments, and Extensions. **FRANK PLASTRIA**. Foundations of Location Analysis. Springer, 2011, 357-389
- Procrustes alignment with the EM algorithm. **LUO et al.** Lecture Notes in Computer Science. Springer, 1999, vol. 1689, 623-631
- **FISCHLER et al.** Random Sample Consensus: A Paradigm for Model Fitting with Applications to Image Analysis and Automated Cartography. *Commun. ACM*, 1981, vol. 24 (6), 381-95
- **LEPETIT et al.** EPnP: An accurate O(n) solution to the PnP problem. *IJCV*, 2009
- **SAVVA et al.** Habitat: A Platform for Embodied AI Research. *ICCV*, 2019
- **LI et al.** Megadepth: Learning single-view depth prediction from internet photos. *CVPR*, 2018, 2041-2050
- **DEHGHAN et al.** ARKitScenes: A diverse real-world dataset for 3d indoor scene understanding using mobile RGB-D data. *NeurIPS Datasets and Benchmarks*, 2021
- **MAYER et al.** A Large Dataset to Train Convolutional Networks for Disparity, Optical Flow, and Scene Flow Estimation. *CVPR*, 2016
- **YAO et al.** BlendedMVS: A Large-Scale Dataset for Generalized Multi-View Stereo Networks. *CVPR*, 2020
- **YESHWANTH et al.** ScanNet++: A high-fidelity dataset of 3d in-door scenes. *ICCV*, 2023
- **REIZENSTEIN et al.** Common Objects in 3D: Large-Scale Learning and Evaluation of Real-Life 3D Category Reconstruction. *ICCV*, 2021
- **SUN et al.** Scalability in Perception for Autonomous Driving: Waymo Open Dataset. *CVPR*, 2020
- **RANFTL et al.** Vision transformers for dense prediction. *ICCV*, 2021
- **HE et al.** Masked autoencoders are scalable vision learners. *CVPR*, 2022
- **SHOTTON et al.** Scene coordinate regression forests for camera relocalization in RGB-D images. *CVPR*, 2013, 2930-2937
- **KENDALL et al.** PoseNet: a Convolutional Network for Real-Time 6-DOF Camera Relocalization. *ICCV*, 2015
- **REVAUD et al.** Learning with average precision: Training image retrieval with a listwise loss. *ICCV*, 2019
- **ZHOU et al.** Stereo Magnification: Learning View Synthesis Using Multiplane Images. *SIGGRAPH*, 2018
- **SCHONBERGER et al.** Structure-from-motion revisited. *CVPR*, 2016
- **SCHONBERGER et al.** Pixelwise view selection for unstructured multi-view stereo. *ECCV*, 2016
- **WANG et al.** PoseDiffusion: Solving Pose Estimation via Diffusion-Aided Bundle Adjustment. *ICCV*, 2023

- **ZHANG et al.** RelPose: Predicting Probabilistic Relative Rotation for Single Objects in the Wild. *ECCV*, 2022
- **LINDENBERGER et al.** Pixel-Perfect Structure-from-Motion with Featuremetric Refinement. *ICCV*, 2021, 5967-5977
- **DETONE et al.** Superpoint: Self-supervised Interest Point Detection and Description. *CVPR Workshops*, 2018, 224-236
- **SARLIN et al.** SuperGlue: Learning Feature Matching with Graph Neural Networks. *CVPR*, 2020, 4937-4946
- **GUIZILINI et al.** 3D packing for self-supervised monocular depth estimation. *CVPR*, 2020, 2482-2491
- **GEIGER et al.** Vision meets robotics: The KITTI dataset. *Int. J. Robotics Res.*, 2013, vol. 32 (11), 1231-1237
- **SILBERMAN et al.** Indoor segmentation and support inference from RGBD images. *ECCV*, 2012, 746-760
- **PALAZZOLO et al.** Refusion: 3d reconstruction in dynamic environments for RGB-D cameras exploiting residuals. *IROS*, 2019
- **STURM et al.** A benchmark for the evaluation of RGB-D SLAM systems. *IEEE IROS*, 2012, 573-580
- **SPENCER et al.** Kick back & relax: Learning to reconstruct the world by watching slowtv. *ICCV*, 2023
- **SCHROPPEL et al.** A benchmark and a baseline for robust multi-view depth estimation. *3DV*, 2022, 637-645
- **DAI et al.** ScanNet: Richly-annotated 3d reconstructions of indoor scenes. *CVPR*, 2017
- **CHANG et al.** ShapeNet: An Information-Rich 3D Model Repository. *arXiv:1512.03012*, 2015
- **SCHMIED et al.** R3D3: Dense 3D Reconstruction of Dynamic Scenes from Multiple Cameras. *arXiv:2308.14713*, 2023
- **ZHANG et al.** GO-SLAM: Global optimization for consistent 3d instant reconstruction. *ICCV*, October 2023, 3727-3737
- **MILDENHALL et al.** NeRF: Representing Scenes as Neural Radiance Fields for View Synthesis. *ECCV*, 2020
- **DAVID G. LOWE.** Distinctive image features from scale-invariant keypoints. *IJCV*, 2004
- **SUN et al.** LoFTR: Detector-Free Local Feature Matching with Transformers.. *CVPR*, 2021
- **ARNOLD et al.** Map-Free Visual Relocalization: Metric Pose Relative to a Single Image. *ECCV*, 2022
- **OORD et al.** Representation Learning with Contrastive Predictive Coding. *arxiv.org/abs/1807.03748*, 2018
- **ZHANG et al.** Reference Pose Generation for Long-Term Visual Localization via Learned Features and View Synthesis. *IJCV*, 2021
- **TAIRA et al.** InLoc: Indoor Visual Localization with Dense Matching and View Synthesis. *PAMI*, 2019
- **TOFT et al.** Single-Image Depth Prediction Makes Feature Matching Easier. *ECCV*, 2020
- **WU ; SANKARANARAYANAN ; CHELLAPPA**. In Situ Evaluation of Tracking Algorithms Using Time Reversed Chains. *CVPR*, 2007
- **HENDRYCKS et al.** Bridging Nonlinearities and Stochastic Regularizers with Gaussian Error Linear Units. *arXiv, 1606.08415*, 2016
- **XIA et al.** RGBD Objects in the Wild: Scaling Real-World 3D Object Learning from RGB-D Videos. *arxiv.org/abs/2401.12592*, 2024
- **CABON et al.** Virtual KITTI 2.. *arXiv 2001.10773*, 2020
- **TOSI et al.** SMD-Nets: Stereo Mixture Density Networks. *CVPR*, 2021
- **WANG et al.** TartanAir: A Dataset to Push the Limits of Visual Slam. *arXiv 2003.14338*, 2020
- **MANEEWONGVATANA et al.** Analysis of Approximate Nearest Neighbor Searching with Clustered Point Sets. *DIMACS Series in Discrete Mathematics and Theoretical Computer Science*, 1999
- **LIN et al.** Relpose++: Recovering 6d poses from sparse-view observations. *arXiv:2305.04926*, 2023
- **ZHANG et al.** Cameras as Rays: Pose Estimation via Ray Diffusion. *ICLR*, 2024
- **F. WANG et al.** PatchmatchNet: Learned Multi-View Patchmatch Stereo. *CVPR*, 2021
- **REVAUD et al.** SACReg: Scene-agnostic coordinate regression for visual localization. *arXiv 2307.11702*, 2023
- **SALIMANS et al.** Progressive distillation for fast sampling of diffusion models. *ICLR*, 2022
- **HO et al.** Denoising diffusion probabilistic models. *NeurIPS*, 2020
- **SONG et al.** Denoising diffusion implicit models. *ICLR*, 2021
- **LU et al.** RoFormer: Enhanced transformer with rotary position embedding. *arXiv pr2104.09864*, 2021
- **LEROY et al.** Win-Win: Training high-resolution vision transformers from two windows. *ICLR*, 2023